(19) Europäisches Patentamt
European Patent Office
Office européen des brevets

(11) **EP 4 634 118 B1**

(12) **EUROPEAN PATENT SPECIFICATION**

(45) Date of publication and mention
of the grant of the patent:
**22.04.2026  Bulletin 2026/17**

(21) Application number: **23833411.4**

(22) Date of filing: **15.12.2023**

(51) International Patent Classification (IPC):
*C01G 41/00* (2006.01)     *H01M 4/485* (2010.01)

(52) Cooperative Patent Classification (CPC):
**C01G 41/00; H01M 4/485; H01M 10/0525;**
C01P 2002/72; C01P 2002/76; C01P 2002/77;
C01P 2002/78; C01P 2004/03; C01P 2004/04;
C01P 2004/32; C01P 2004/61; C01P 2006/40;
Y02E 60/10

(86) International application number:
**PCT/EP2023/086184**

(87) International publication number:
**WO 2024/126839 (20.06.2024 Gazette 2024/25)**

(54) **NIOBIUM METAL OXIDE**

NIOB-METALLOXID

OXYDE METALLIQUE DE NIOBIUM

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.12.2022  GB 202218984**

(43) Date of publication of application:
**22.10.2025  Bulletin 2025/43**

(73) Proprietor: **Nyobolt Limited
Cambridge, Cambs CB24 9NG (GB)**

(72) Inventors:
• **NAGENDRAN, Supreeth**
  **Cambridge Cambridgeshire CB24 9NG (GB)**
• **GREY, Clare Philomena**
  **Cambridge Cambridgeshire CB24 9NG (GB)**
• **SHIVAREDDY, Sai**
  **Cambridge Cambridgeshire CB24 9NG (GB)**

(74) Representative: **Mewburn Ellis LLP
Aurora Building
Counterslip
Bristol BS1 6BX (GB)**

(56) References cited:
• **KENT J. GRIFFITH ET AL: "Niobium tungsten
oxides for high-rate lithium-ion energy storage",
NATURE, vol. 559, no. 7715, 1 July 2018
(2018-07-01), pages 556 - 563, XP055761574, DOI:
10.1038/s41586-018-0347-0**
• **XIA RUI ET AL: "Enhanced lithiation dynamics in
nanostructured Nb18W16O93 anodes",
JOURNAL OF POWER SOURCES, ELSEVIER,
AMSTERDAM, NL, vol. 482, 20 September 2020
(2020-09-20), XP086380954, ISSN: 0378-7753,
[retrieved on 20200920], DOI: 10.1016/
J.JPOWSOUR.2020.228898**

EP 4 634 118 B1

**Description**

*Related Application*

The present case claims priority to, and benefit of, GB 2218984.9 filed on 15 December 2022 (15.12.2022).

*Field of the Invention*

The present invention relates to niobium metal oxides, niobium metal oxide secondary particles and a process for preparing the same, as well as working electrodes and electrochemical cells comprising the niobium metal oxide secondary particles.

*Background*

Fast charging lithium-ion batteries are important for energy storage in various technical areas, from electric vehicles and grid storage cells to hand-held devices and back-up systems. Various known niobium metal oxides (NMOs) are used as fast charging working electrode materials, such as niobium tungsten oxide (NWO, Griffith *et al.*). These materials have good high-rate performance and capacity retention even at high charge rates.

Most known NMOs have structures can be derived from simple $ReO_3$ type structures, such as block structures or tetragonal tungsten bronzes (TTB).

These NMO phases are normally synthesized by solid state methods, where the solid precursor metal oxides are milled and/or mixed to form a fine powder. Such methods are known for niobium tungsten oxide (Roth *et al.* 1965); niobium molybdenum oxide (Ekstrom *et al.* 1971) niobium titanium oxide (Wadsley *et al.* 1961), and niobium chromium oxide (Yang *et al.* 2017) among others. The fine powders are then calcined at high temperature to form the NMO. High temperatures, typically above 1,200 °C are required for the calcination step, because the powder has a low homogeneity and so metal ion diffusion needs to take place across multiple crystallites in one particle (intra-particle cation diffusion) and across particles (inter-particle cation diffusion). The higher energetic barrier to intra- and inter- particle ion diffusion requires higher temperatures for synthesis. By using lower temperatures, a part of the precursor remains unreacted. An early attempt by Fiegel *et al.* to synthesize different NWO phases below 900 °C observed the coexistence of different phases, which did not reach equilibrium even after 30 days.

NMOs have also been synthesised using solution-based mixing methods (e.g., Kudo *et al.* 1988). Here, solutions of metal oxide precursors are mixed before a precipitating reagent is added to initiate precipitation of the dissolved precursors. For example, precipitation from salt precursors through hydrolysis is known, but the hydrolysis rate for Nb is notably faster than that of W, resulting in the hydrolysis of Nb-ions first, forming $Nb_2O_5$ islands, followed by the precipitation of $WO_3$. These methods are known to result in non-concurrent precipitation, meaning the precipitate mixture also has poor homogeneity, impeding the uniform distribution of cations in the final product. For the same reason given above, high temperatures (e.g., above 1,200 °C) are then required for the calcination to provide the desired block NMO phases.

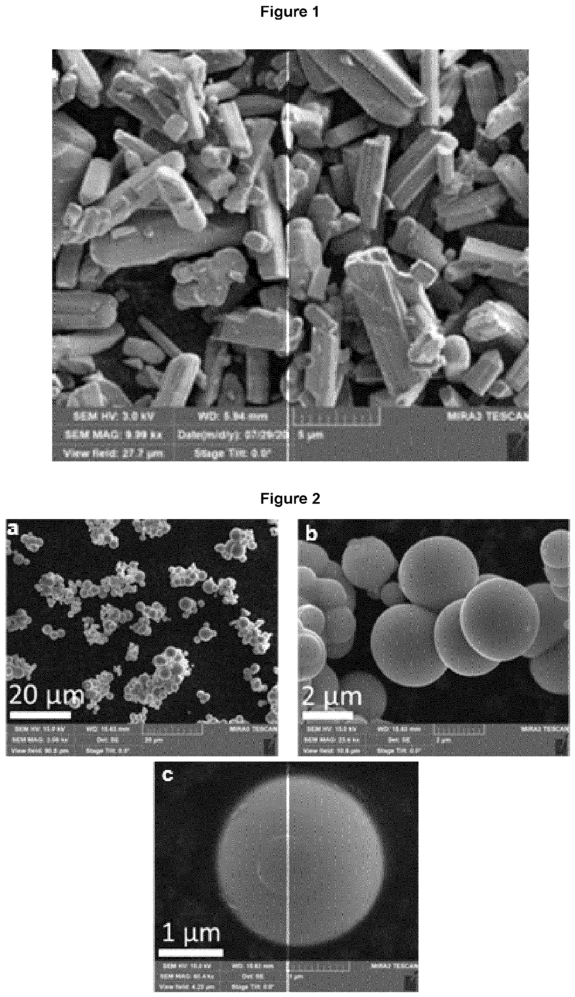

The poor homogeneity and high temperature synthesis results in a complex of structural variants with varied composition within each crystallite. This is thought to be due to the temperature gradient and irregular distribution of Nb and metal ions within the lattice (Krumeich 2022). As a result, these materials generally crystallize in the form of rods, often with a broad size distribution, variable aspect ratio, and irregular morphology. For example, WO 2019/234248 describes the synthesis of a $Nb_{16}W_5O_{55}$ product by solid state synthesis. The product is prepared by grinding together dry powders of $Nb_2O_5$ and $WO_2$ followed by calcination of the mixture at 1200 °C. An SEM image of the resulting $Nb_{16}W_5O_{55}$ shows an irregular rod like morphology of the particles (see Figure 1).

Thus, the real-world volumetric capacity and energy density of these NMO materials is limited. Poor packing density of the NMO crystallite resulting from the irregular particle morphology leads to voids between particles. These can also contribute to poor lithium-ion conductivity and electrode kinetics. The poor contact between adjacent particles mean that some particles will more or less readily intercalate lithium, so the material is unstable at fast charging/discharging rates, leading to poor capacity retention at high rates and over a large number of cycles.

The crystal structure of the NMO synthesised by these known methods is also disordered. Cation occupancy between the Nb and M component is disordered within the crystal structure. This disorder leads to anisotropic lithium (de) intercalation during charging or discharging. The cation disorder also means that the crystal structure expands and contracts irregularly during (de)intercalation, so the material is more prone to cracking. The cracking is particularly pronounced during fast charging/discharging when the expansion and contraction is at its fastest. Overall, this results in poor electrochemical properties such as capacity retention, especially at high charge/discharge rates.

Accordingly, there is a need for improved NMO materials and associated preparation methods which provide particles having improved electrochemical performance and volumetric energy density.

## Summary of the Invention

At its most general, the present invention provides a niobium metal oxide having a crystal structure comprising a tetragonal tungsten bronze having pentagonal channels (PCs), wherein the PCs are partially filled with -Nb-O-Nb-O- strings. The -Nb-O-Nb-O- strings in the PCs provide cation ordering within the structure. A portion of the PCs are filled with Nb-O-Nb-O- strings and the remaining portion are optionally intercalated with lithium.

The niobium metal oxide may be of formula (I)

$$Nb_xM_yO_z \qquad (I)$$

wherein M is a metal, x is from 2 to 18, z is 2.5x+3y, and x/y is from 1 to 3, and the crystal structure of the niobium metal oxide is or comprises a tetragonal tungsten bronze having pentagonal channels, wherein a portion of the pentagonal channels are filled with -Nb-O-Nb-O- strings. Where a pentagonal channel does not contain a string, it is optionally intercalated with lithium.

The NMO phases reported here act as high-rate anode materials, showing excellent electrode kinetics, rate performance and capacity retention, especially at high rates. These specific crystalline phases demonstrate a highly symmetrical and regular morphology. Moreover, the cation ordering provided by the -Nb-O-Nb-O- strings promotes uniform lithium intercalation, which leads to uniform expansion and contraction of the crystal structure during cell cycling. This new NMO phases also forms spherical secondary particles, opposed to the irregular rod-like particles formed by known NMO phases.

In a **first aspect** of the invention, there is provided a niobium metal oxide of formula (I)

$$Nb_xM_yO_z \qquad (I)$$

wherein the niobium metal oxide is optionally intercalated with lithium,
wherein M is a metal selected from Ti, Zr, V, Cr, W and Mo, x is from 2 to 18, z is 2.5x+3y and x/y is from 1 to 3, and the crystal structure of the niobium metal oxide is a tetragonal tungsten bronze structure having four or eight pentagonal channels per unit cell, and
a portion of the pentagonal channels are filled with -Nb-O-Nb-O- strings, and the remaining portion of the pentagonal channels are optionally intercalated with lithium.

The cation ordering provided by the pentagonal channels filled with -Nb-O-Nb-O- strings results in improved lithium intercalation of the niobium metal oxide of the present invention. During lithium intercalation and deintercalation the niobium/metal cations in the niobium metal oxide are reduced and oxidised respectively. Depending on the structure and metal component of the niobium metal oxide, there is preferential redox of either the niobium or metal (e.g., tungsten) cation during intercalation.

As the structure provided is more ordered (e.g., due to the pentagonal channels filled with - Nb-O-Nb-O- strings) the preferential redox occurs for a cation in the same lattice environment throughout the structure, meaning the lattice expands and contracts uniformly during intercalation. This contrasts to known structures which do not have such cation ordering, where the cations undergoing the redox may be in different lattice environments, leading to less uniform expansion and compression. The uniform expansion reduces cracking and structural defects during cell cycling, improving cell performance especially at high rates.

Generally, the invention also provides a spherical niobium metal oxide secondary particle comprising an agglomeration of primary particles.

In a **second aspect** of the invention there is provided a niobium metal oxide secondary particle comprising an agglomeration of primary particles of niobium metal oxide, such as particles of the niobium metal oxide of the first aspect, wherein the secondary particle has a length, such as a mean average length, of from 1 to 5 μm and an aspect ratio of from 1 to 1.5.

The highly regular particle shape of the particles (such as a length of from 1 to 5 μm and an aspect ratio of from 1 to 1.5) leads to uniform packing of the particles. Preferably the particles are highly symmetrical. Preferably the particles are spherical.

The secondary particles may be formed from multiple primary particles of the niobium metal oxide of the first aspect. The secondary particles may be known as secondary agglomerates of primary particles. It is thought that the primary particles are tightly held together by NMO amorphous bridges between the primary particles. As a result, the inter-particle distance of the primary particles is very low, allowing for facile ion diffusion. The strong amorphous NMO bridges are also thought to help retain the morphology of the secondary particles at extreme fast charging/discharging rates, and over a high number of cycles.

The highly regular particle shape and packing also allows for isotropic lithium (de)intercalation during charging and discharging. The uniform particle shape leads to consistent coordination between adjacent particles (e.g., closed packed spheres have a coordination number of 12 with adjacent particles) means that lithium intercalation is consistent throughout the bulk material. This results in excellent high rate performance.

The secondary particles have very high packing efficiency, due to their regular particle size, narrow particle size distribution and preferred spherical shape.

The higher packing efficiency results in a greater density of the bulk material. The packing efficiency of the spheres may be as high as an ideal close packed structure for spherical particles, which has a packing efficiency of about 74%. The bulk material displays particularly high density and good packing efficiency when it is calendered for use as an electrode for an electrochemical cell.

The higher density (e.g., high calender density) provides a greater number of lithium intercalation sites per unit volume of the electrode. As such, the volumetric energy density of an electrode is increased as there are more lithium intercalation sites per unit volume.

The cation ordered NMO crystal structure and the secondary particles are typically not accessible via high temperature calcination. Instead, it has been found that a low temperature calcination method is needed.

Generally, the invention provides a process for preparing a niobium metal oxide secondary particle, the process comprising:

provided a precursor mixture of a Nb source and a M source, and
calcining the precursor mixture at a temperature of from 550 to 1,100 °C,

wherein M is a metal other than Nb.

In a **third** aspect of the invention there is provided a process for preparing the niobium metal oxide secondary particle, such as the secondary particle of the second aspect, the process comprising:

co-precipitating Nb oxide and M oxide from a solution of $NbX_a$ and $MY_b$, and
calcining the precipitate at a temperature of from 550 to 1100 °C,
wherein M is selected from Ti, Zr, V, Cr, W and Mo, X and Y are independently one or more counterions, and a and b are independently from 2 to 6.

The process allows for the preparation of the NMO phase of the first aspect. The relatively low temperature calcination allows for the PCs to be partially filled with -Nb-O-Nb-O- strings, thus providing cation ordering to the structure.

The process also allows for the preparation of secondary particles of the second aspect. The secondary particles have a regular, preferably spherical, morphology which is thought to result from calcination at the relatively low temperature within the range 550 to 1100 °C, such as 800 to 900 °C. Traditional high temperature calcination (at over 1200 °C) leads to loss of the spherical morphology.

The relatively low temperature calcination is thought to be possible due to the excellent cation mixing achieved by precipitation. The co-precipitation of the metal cations results in atomic-scale mixing of the cations in the precipitate. This contrasts with solid state milling or mixing methods where the mixing is only on the μm- or nm-scale. Likewise, the co-precipitation (e.g., by heating under solvothermal conditions using microwave heating in a sealed vessel) leads to simultaneous precipitation of both niobium oxide and metal (e.g., tungsten) oxide species in a homogeneous atomic-scale mixed precipitate. This contrasts to known solution-based methods where the precipitation is non-simultaneous and leading to poor homogeneity of the precipitate.

It is thought that the precipitation of NMO from the corresponding salt precursors occur by hydrolysis. The rate of hydrolysis is relatively high for the Nb compared to W salt. As a result, when reacted under ambient conditions the Nb salt hydrolysis occurs more quickly to form islands of NbO, resulting in inhomogeneity in the reaction mixture. In contrast, using a hydrothermal synthesis method (at elevated temperature and pressure), the precipitation by Nb and W salt hydrolysis occurs simultaneously and more quickly - improving homogeneity.

Moreover, the use of a co-precipitation step allows for the co-preparation of various niobium-metal oxide compounds, for various metals such as Ti, Zr, V, Cr, W and Mo. The thermal co-precipitation step is more chemistry agnostic than chemical precipitation methods which use a precipitating reagent to initiate precipitation.

The atomic scale mixing achieved by the present process means the precipitate has high homogeneity of the two metal ions. Thus, the need for metal ion diffusion is largely removed and typically only intra-crystallite metal ion diffusion is needed. As a result, the energetic barrier to ion re-arrangement is relatively low (and much lower than known solid state synthesis methods). This allows for much lower calcination temperatures to be used, which provides the specific niobium oxide phases of the first aspect of the invention and the spherical secondary particles of the second aspect of the invention.

The use of lower calcination temperatures has further advantages in terms of calcination equipment and energy usage. Lower temperature calcination has a lower total energy demand. This reduces the cost of manufacture and the environmental impact of production. The calcination equipment (e.g., calciner and heat source) can also be less temperature resistant, lowering equipment costs.

In a **fourth aspect** there is provided a niobium metal oxide secondary particle comprising an agglomeration of primary particles of niobium metal oxide, obtained or obtainable by the process of the third aspect.

In a **fifth aspect** there is provided a working electrode for an electrochemical cell, the working electrode comprising the niobium metal oxide secondary particle of the second aspect or the fourth aspect.

In a **sixth aspect** there is provided an electrochemical cell comprising a working electrode of the fifth aspect.

In an additional aspect there is provided a lithium-ion battery comprising one or more electrochemical cells of the sixth aspect.

In a further aspect there is provided a method of charging or discharging an electrochemical cell of the sixth aspect or the lithium-ion battery comprising the electrochemical cell. The method of charging or discharging typically comprises intercalating lithium into the working electrode.

These and other aspects and embodiments of the invention are described in more detail below.

*Summary of the Figures*

The present invention is described with reference to the figures listed below.

**Figure 1** shows an SEM image of a comparative $Nb_{16}W_5O_{55}$ phase having an irregular rod-like morphology, prepared by a solid state synthesis method of Comparative Example 8.

**Figure 2** shows SEM images of a precipitated $NbCl_5$ and $WCl_6$ prepared by the solvothermal method of Example 3. The image is taken after filtering and drying, but before calcination. The images show varying levels of magnification - in (a) the scale bar is 20 $\mu$m, in (b) 2 $\mu$m and in (c) 1 $\mu$m.

**Figure 3** shows further SEM images of a precipitated $NbCl_5$ and $WCl_6$ prepared by the solvothermal method of Example 3. The scale bar is 10 $\mu$m in (a) and (b). Figure 3(c-f) shows SEM-EDS mapping images of precipitated $NbCl_5$ and $WCl_6$ prepared by the solvothermal method of Example 3. (c) shows SEM EDS mapping for Nb, (d) for W, (e) of O and (f) is an overlay of Nb, W and O.

**Figure 4** shows SEM images of NWO product prepared in Example 3 after calcination at 900 °C, at varying levels of magnification. In (a) the scale bar is 20 $\mu$m, in (b) 2 $\mu$m and in (c) 1 $\mu$m.

**Figure 5** shows Transmission electron microscopy (TEM) images for the mixture of NWO phases prepared in Comparative Example 7, at varying levels of magnification. In (a) the scale bar is 10 $\mu$m, in (b) 20 $\mu$m and in (c) 50 $\mu$m.

**Figure 6** shows an EDS spectrum map of the $Nb_{18}W_6O_{63}$ prepared by Example 3.

**Figure 7** shows PXRD patterns of the NWO prepared in Example 1 (Nb:W = 1, $Nb_2W_2O_{11}$), Example 2 (Nb:W = 2, $Nb_{16}W_8O_{64}$), Example 2.5 (Nb:W = 2.5, $Nb_{10}W_4O_{37}$) and Example 3 (Nb:W = 3, $Nb_{18}W_6O_{63}$), shown across a 2θ range of 5 to 80 degrees.

**Figure 8** shows PXRD patterns of the NWO prepared in Example 1 (Nb:W = 1, $Nb_2W_2O_{11}$), Example 2 (Nb:W = 2, $Nb_{16}W_8O_{64}$), Example 2.5 (Nb:W = 2.5, $Nb_{10}W_4O_{37}$) and Example 3 (Nb:W = 3, $Nb_{18}W_6O_{63}$), shown across a 2θ range of from 5 to 30 degrees.

**Figure 9a** shows PXRD patterns of the NWO phases prepared in comparative Examples 4, 5 and 6 alongside Examples 1, 2, 2.5 and 3, shown across a 2θ range of 10 to 80 degrees. Figure **9b** shows the same NWO phases across a 2θ range 18 to 34 degrees.

**Figure 10** shows a PXRD of Comparative Example 7, and shows a mixture of NWO phases, such as $Nb_{16}W_5O_{55}$, $Nb_{14}W_3O_{44}$ and $Nb_2WO_8$.

**Figure 11** shows a neutron diffraction pattern for the NWO prepared in Example 1 (Nb:W = 1, $Nb_2W_2O_{11}$), Example 2 (Nb:W = 2, $Nb_{16}W_8O_{64}$), and Example 3 (Nb:W = 3, $Nb_{18}W_6O_{63}$).

**Figure 12** shows (a) Rietveld refinement and (b) the crystal structure of the $Nb_2W_2O_{11}$ (Nb:W=1:1) prepared in Example 1.

**Figure 13** shows (a) Rietveld refinement and (b) the crystal structure of the $Nb_{18}W_6O_{63}$ (Nb:W=3:1) prepared in Example 3. (c) shows the relationship between the crystal structure of $Nb_2W_2O_{11}$ (simple TTB unit cell) and $Nb_{18}W_6O_{63}$ (super cell), where the unit cell for $Nb_2W_2O_{11}$ is shown top-left and the super cell for $Nb_{18}W_6O_{63}$ is shown centrally.

**Figure 14** shows HR-STEM images of NWO prepared in (a) Example 1 (Nb:W = 1, $Nb_2W_2O_{11}$), (b) Example 2 (Nb:W = 2, $Nb_{16}W_8O_{64}$), and (c) Example 3 (Nb:W = 3, $Nb_{18}W_6O_{63}$). The scale bar is 10 nm.

**Figure 15** shows HR-STEM images of NWO prepared in Example 3 (Nb:W = 3, $Nb_{18}W_6O_{63}$). (a) shows bright spots in the HR-STEM where the cation ordering in the $Nb_{18}W_6O_{63}$ is demonstrated. (b) includes an overlay of the HRSTEM with the crystal structure. (c) shows one unit cell of the crystal structure.

**Figure 16** shows a HAADF-HRSTEM image of NWO prepared in Example 3 (Nb:W = 3, $Nb_{18}W_6O_{63}$). The images are shown of the NWO particle (a) before and (b) after applying a bandgap filter and setting a threshold.

**Figure 17A** shows a HAADF-HRSTEM image of NWO prepared by Example 1 (Nb:W = 1, $Nb_2W_2O_{11}$). The images are shown of the NWO particle (a) before and (b) after applying a bandgap filter and setting a threshold. The scale bar is 5nm.

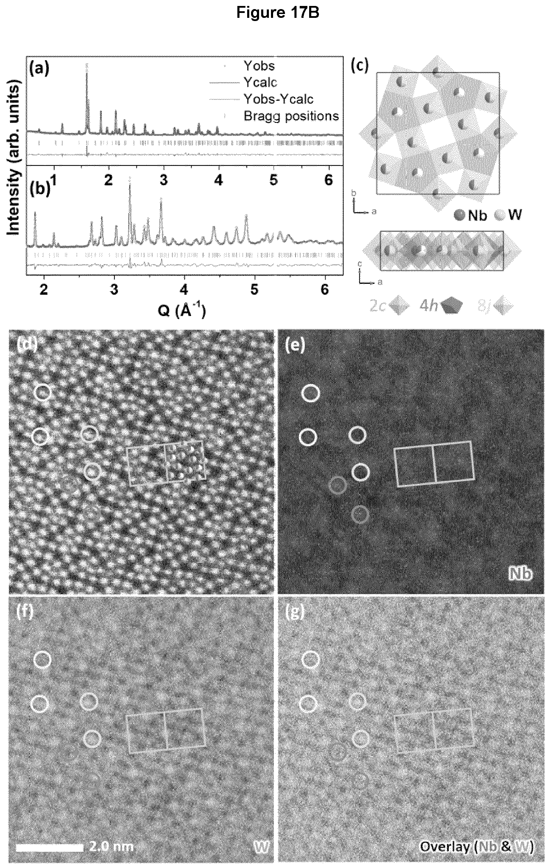

**Figure 17B** shows additional structural analysis of NWO prepared in Example 1 (Nb:W = 1, $Nb_2W_2O_{11}$). Figure 17B(a) shows a Rietveld fit of the PXRD, Figure 17B(b) shows TOF neutron diffraction patterns, and Figure 17B(c) shows refined crystal structure of Example 1 viewed along crystallographic *a*-axis (above) and c-axis (below). The PB sites (magenta, the 4h site) contains only Nb; the yellow octahedral sites ($8_j$) have an equal probability of containing Nb and W atoms while the cyan octahedral sites (2c) are W rich. Figure 17B(d) shows a HAADF-HR(S)TEM image along the c-axis with an overlay of the structural model (one-unit cell) showing the atomic positions of Nb and W. A second unit cell is drawn for clarity in Figure 17B(d) and in the corresponding EDS maps of Figure 17B(e) Nb (red), Figure 17B(f) W (green), and Figure 17B(g) overlay of Nb and W.

**Figure 18** shows a further HAADF STEM images of $Nb_{18}W_6O_{63}$ (prepared by Example 3). The image has three sections (a-c) marked across the plane of atoms. The line intensity profile of atoms is shown for the sections (a-c), along different planes of atoms in the HAADF STEM images.

**Figure 19A** shows (a) atomic resolution STEM-EDS image of $Nb_{18}W_6O_{63}$ prepared in Example 3 (scale bar is 5nm). The top left image is the STEM image. Bottom left is STEM-EDS mapping for Nb and bottom right is STEM-EDS mapping for W. Top right is an overlap of EDS mapping for Nb and W. (b) shows a closer view of the images in (a) (scale bar is 2nm).

**Figure 19B** shows HR(S)TEM-EDS data from a particle of $Nb_{18}W_6O_{63}$. (a) STEM-HAADF image and the corresponding STEM-EDS elemental maps of (b) Nb and (c) W; (d) Overlay of the (b) and (c) elemental maps; (e) Aligned and summed STEM image (consisting of 1024 frames) from the same sample; Decomposition loadings corresponding to (f) Nb and (g) W obtained via NMF. NMF-based decomposition indicates the positions of the Nb and W atomic columns in the overlay (h), which is constructed from (f) and (g). All scale bars are 2 nm.

**Figure 20** shows (a) TEM image of a primary particle of $Nb_{16}W_8O_{64}$ perpendicular to c crystallographic axis, and (b) its corresponding fast Fourier transform.

**Figure 21** shows (a) TEM image of a primary particle of $Nb_2W_2O_{11}$ along the c crystallographic axis, and (b) its corresponding fast Fourier transform.

**Figure 22** shows (a) TEM image of a primary particle of $Nb_{18}W_6O_{63}$ along the c crystallographic axis, and (b) its corresponding fast Fourier transform.

**Figure 23** shows (a) TEM image of lamella of a secondary particle of $Nb_{18}W_6O_{63}$ (Example 3) prepared by FIB (Focused Ion Beam) showing the network of primary particle. The scale bar is 1 $\mu$m. Figure 23(b) shows a closer view of the same TEM image, where the scale bar is 500 nm.

**Figure 24** shows Electrochemical performance of NWO of Example 1 (Nb:W = 1, $Nb_2W_2O_{11}$) (bottom line) and Example 3 (Nb:W = 3, $Nb_{18}W_6O_{63}$) (top line) by measuring (a) capacity at 1C, 2C, 5C, 10C, 20C and 1C, and (b) long term cyclability of Example 1 (Nb:W = 1, $Nb_2W_2O_{11}$) (bottom line) and Example 3 (Nb:W = 3, $Nb_{18}W_6O_{63}$) (top line) at 10C over 1000 cycles.

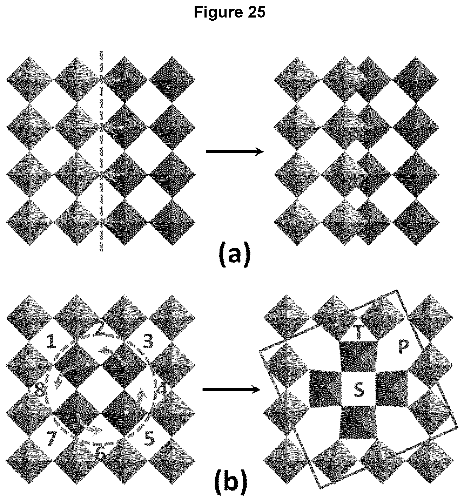

**Figure 25** shows the structural modifications of the $ReO_3$ type structure present in the crystal structure of the present invention. Figure 25(a) shows the crystallographic shears (CS) or block structure, and Figure 25(b) shows a tetragonal tungsten bronze (TTB) structures observed in the NWO materials of the present invention. The different channels are labelled as T = trigonal, S = square/tetragonal, and P = pentagonal.

**Figure 26** shows additional electrochemical characterization of NWO anodes of the present invention. Galvanostatic discharge and charge curves are shown for Example 1 ($NbWO_{5.5}$) in Figure 26(a), Example 2 ($\beta$-$Nb_2WO_8$) in Figure 26(b) and Example 3 ($Nb_3WO_{10.5}$) in Figure 26(c), at a range of different C rates. Figure 26(d) shows a rate summary based or gravimetric capacity for Examples 1, 2 and 3. Figure 26(e) shows high-rate cycling capacity at 10C for 1000 cycles for Examples 1, 2 and 3.

**Figure 27** shows a PXRD pattern of the Examples 1-3 after calcining at 800 °C for 30 days during thermal stability testing. Figure 27(a) shows Example 1, Figure 27(b) shows Example 2, and Figure 27(c) shows Example 3. Figure 27(d) shows Example 3 with the Bragg positions of the decomposition products overlayed.

**Figure 28A** shows an SEM image of Example 1 calcined at 800° C for 30 days at different magnification.

**Figure 28B** shows SEM images of Example 2 calcined at 800° C for 30 days at different magnification. The arrows point towards the micron-sized particles, thought to be the decomposition products $Nb_{14}W_3O_{44}$ and $\alpha$-$Nb_2WO_8$

**Figure 28C** shows SEM images of Example 2 calcined at 800° C for 30 days at different magnification.

## *Detailed Description of the Invention*

The invention generally provides a niobium metal oxide having a crystal structure comprising a tetragonal tungsten bronze having pentagonal channels (PCs), wherein a portion of the PCs are filled with -Nb-O-Nb-O- strings. The remaining PCs are optionally intercalated with lithium.

The niobium metal oxide typically has a crystal structure having cation ordering, wherein a portion of the PCs are filled with -Nb-O-Nb-O- strings. The remaining PCs are either vacant or are intercalated with lithium. The PCs are generally arranged in sets of four PCs mutually linked by corner sharing octahedra.

In a first aspect of the invention, there is provided a niobium metal oxide of formula (I)

$$Nb_xM_yO_z \qquad \text{(I)}$$

wherein the niobium metal oxide is optionally intercalated with lithium,

wherein M is a metal selected from Ti, Zr, V, Cr, W and Mo, x is from 2 to 18, z is 2.5x+3y and x/y is from 1 to 3, and the crystal structure of the niobium metal oxide is a tetragonal tungsten bronze structure having four or eight pentagonal channels per unit cell, and

a portion of the pentagonal channels are filled with -Nb-O-Nb-O- strings, and the remaining portion of the pentagonal channels are optionally intercalated with lithium.

Niobium metal oxide phases having a tetragonal tungsten bronze structure have previously been reported, for example by Sayagués *et al.* However, the cation ratio presently claimed of the niobium metal oxide and the crystal structure were not reported. Sayagués *et al.* describes $(Nb, W)_{12}O_{32}$ as having a $\sqrt{2}a \times \sqrt{2}a$ superstructure of the tetragonal tungsten bronze (TTB) type where all four pentagonal tunnels around a central square of octahedra are filled with M-O strings. Sayagués et al. does not describe cation ordering. In particular, selective filling of the PCs with Nb-O strings is not described.

Sayagués et al. prepare the niobium oxide by an in-situ gas reaction, as opposed to the solvothermal and low temperature calcination of the invention. Sayagués et al. also does not test the NWO prepared as an electrode material.

Niobium metal oxide phases having similar Nb/M ratios have also been reported. However, these do not have the tetragonal tungsten bronze structure of the present invention. For example, the known $Nb_2WO_8$ phase has a Nb/W ratio of 2, but has a different structure to the $Nb_{16}W_8O_{64}$ (also having a Nb/W ratio of 2) of the present invention. $Nb_2WO_8$ crystallizes in an orthorhombic cell (space group, *Pbcm*) with a distorted structure where the arrangement of PCs are different from the $Nb_{16}W_8O_{64}$ structure of the present invention (see Lundberg). In addition, the cation sites of $Nb_2WO_8$ are disordered with all the sites having equal probability of being occupied by either Nb or W, rather than the ordered cation filling of seen in the present invention.

In addition, CN110304658A describes the synthesis of irregular nanoparticles of $Nb_{18}W_{16}O_{93}$ by coprecipitation of Nb and W precursors from ethanol, grinding the precipitate and calcination. The precipitation was not carried out under solvothermal conditions, or using microwave assisted heating. The $Nb_{18}W_{16}O_{93}$ particles produced by the synthesis are a mix of "irregular nanoparticles, spindle-shaped nanospheres, and nanorods". The nanoparticles have a size of about 100nm and the nanorods have a size of 150nm. The nanospheres are secondary particles having a size of 300-400nm and made of primary particles having a size of 50-200 nm. The particles described in CN110304658A are a lot smaller than the spherical secondary particles of the present invention, which have a length of 1 to 5 $\mu$m. Moreover, the $Nb_{18}W_{16}O_{93}$ described in CN110304658A does not have the specific crystal structure of the present invention, hence the different morphology of the resulting particles.

Xia *et al.* describes a traditional NWO synthesis by ball milling niobium oxide and tungsten oxide, and calcining at 1200 °C to produce $Nb_{18}W_{16}O_{93}$. The co-precipitation and low temperature calcination used in the present invention is not described. Xia *et al.* shows that shorter calcination time results in smaller particles. However, the $Nb_{18}W_{16}O_{93}$ particles produced are irregular in shape, and do not have the highly spherical morphology achieved by the present invention. The crystal structures described in Xia *et al.* are well-known $ReO_3$ type structures, and not the crystal structure of the present invention.

The present inventors have developed a new niobium metal oxide phase having a specific cation ordered crystal structure, wherein the pentagonal channels are partially filled with -Nb-O-Nb-O- strings. These phases are prepared by a new solvothermal co-precipitation and low temperature calcination process, which facilitates access to these new NMO phases and highly spherical secondary particles of these NMO phases. These phases and particles are particularly suitable to use in the working electrodes of electrochemical cells (e.g., lithium-ion cells) and provide excellent volumetric capacity and volumetric energy density, as well as high rate performance and long term cycling performance.

*Niobium Metal Oxide*

The invention provides a niobium metal oxide of formula (I)

$$Nb_xM_yO_z \qquad (I)$$

wherein the niobium metal oxide is optionally intercalated with lithium,
wherein M is a metal selected from Ti, Zr, V, Cr, W and Mo, x is from 2 to 18, z is 2.5x+3y and x/y is from 1 to 3, and the crystal structure of the niobium metal oxide is a tetragonal tungsten bronze structure having four or eight pentagonal channels per unit cell, and
a portion of the pentagonal channels are filled with -Nb-O-Nb-O- strings, and the remaining portion of the pentagonal channels are optionally intercalated with lithium.

In general, a niobium metal oxide refers to a metallic oxide including niobium, one or more other metals and oxygen. Preferably, the niobium metal oxide is a binary metal oxide, including niobium, one other metal and oxygen.

The niobium metal oxide is of formula (I): $Nb_xM_yO_z$.

Formula (I) may relate to NMO phases comprising $Nb_2O_5$ and $MO_3$, such as comprising $Nb_2O_5$ and $WO_3$.

The NMO includes niobium and any other suitable metal ("M" in formula (I)), such as a transition metal. The metal may be a group 3, group 4 or group 5 metal, preferably a group 4 or group 5 metal, more preferably a group 5 metal. Typically, the metal is selected from Ti, Zr, V, Cr, W and Mo. Preferably, the metal is selected from Cr, W and Mo, more preferably W and Mo, even more preferably W.

The moles of Nb in the NMO is defined by "x" in formula (I). x if from 2 to 18, preferably from 8 to 18, more preferably from 12 to 18. X may be 2, 16 or 18, preferably 16 or 18, more preferably 18. X is typically an integer.

The number of moles of M in the NMO is defined by "y" in formula (I). y may be from 1 to 18, preferably from 2 to 12, more preferably from 4 to 10, even more preferably from 6 to 8. Preferably y is 6. Y is typically an integer.

The number of moles of O in the NMO is defined by "z" in formula (I). z is 2.5x+3y. Accordingly, z may be from 8 to 99, preferably from 11 to 70, more preferably from 45 to 64, even more preferably from 63 to 64. Z is typically an integer.

The mole ratio of Nb to M is defined by "x/y" in formula (I). The value of x/y may be the same as the ratio of Nb:M. x/y is from 1 to 3, preferably from 1.5 to 3, more preferably from 2 to 3, even more preferably from 2.5 to 3. x/y may be selected from 1, 1.5, 2, 2.5 and 3, preferably 1.5, 2, 2.5 and 3, more preferably 2, 2.5 and 3, even more preferably 2 and 3, and most preferably x/y is 3. Alternatively, x/y may be selected from 1, 2 and 3, preferably 2 and 3, even more preferably 3.

In some embodiments, the niobium metal oxide is $Nb_{18}M_6O_{63}$, $Nb_{16}M_8O_{64}$, $Nb_2M_2O_{11}$ or a combination thereof. Preferably, the niobium metal oxide is $Nb_{18}M_6O_{63}$, $Nb_{16}M_8O_{64}$ or a combination thereof, more preferably the niobium metal oxide is $Nb_{18}M_6O_{63}$.

In some embodiments, the niobium metal oxide is $Nb_{18}W_6O_{63}$, $Nb_{16}W_8O_{64}$, $Nb_2W_2O_{11}$ or a combination thereof.

Preferably, the niobium metal oxide is $Nb_{18}W_6O_{63}$, $Nb_{16}W_8O_{64}$ or a combination thereof, more preferably the niobium metal oxide is $Nb_{18}W_6O_{63}$.

In general, the niobium metal oxide of the invention is a crystalline material. In other words, the NMO has an ordered solid-state structure comprising a repeating patterns of ion positions in three-dimensional space. The smallest repeating structural unit is known as a unit cell. The unit cell is repeated (by translation along the principal axes of the unit cell) through the structure to define the crystalline structure.

The unit cell may be defined in terms of the length of the principal axes and angles between the principal axes. The unit cell can also be defined in terms of space groups or other symmetry within the unit cell.

The niobium metal oxide of the invention has a crystal structure which is of the tetragonal tungsten bronze (TTB) type. TTB is a type of distorted $ReO_3$ structure and has lower symmetry than the $ReO_3$ structure. TTB structures are known for various materials. Like the $ReO_3$ crystal structure, TTB comprises corner sharing $MO_6$ octahedra and the $MO_6$ octahedra are typically orientated along the crystallographic c axis.

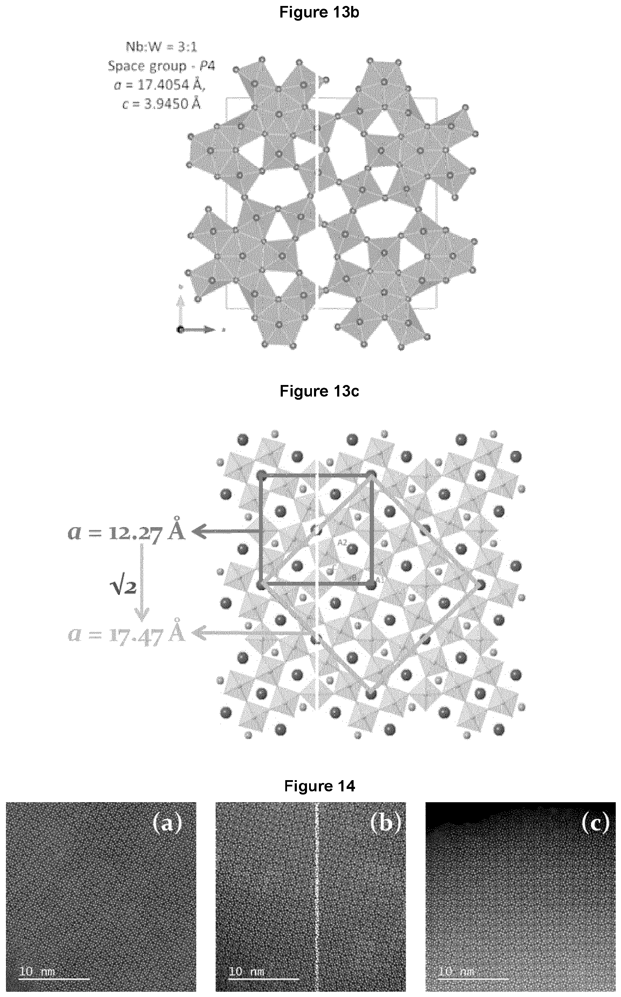

The crystal structure may comprise a unit cell having the space group P4/mbm or a super cell having the space group P4. Preferably, the crystal structure comprises a unit cell having the space group P4 (referred to herein as the "super cell"). The super cell may be related to the unit cell having the space group P4/mbm. The lattice parameter of the super cell corresponds to the diagonal of the unit cell (see Figure 13c). Hence, when the unit cell has a lattice parameter a × a, the super cell has a lattice parameter equal to $\sqrt{2}a \times \sqrt{2}a$. The lattice parameter c may be the same.

In some embodiments, the crystal structure comprises a unit cell having the space group P4/mbm. In some embodiments the crystal structure has a unit cell having a parameter a of from 12 to 13 Å and c of from 3.5 to 4.5 Å, preferably a parameter a of from 12.2 to 12.5 Å and c of 3.7 to 4.3 Å, more preferably a parameter a of from 12.2 to 12.3 Å and c of from 3.8 to 4.0 Å, even more preferably a parameter a of about 12.2 and c of about 3.9 Å. Specifically, the crystal structure may have a unit cell having a parameter a of 12.2210 Å and c of 3.9371 Å. In such embodiments, x/y may be 1. Preferably the niobium metal oxide is $Nb_2M_2O_{11}$, such as $Nb_2W_2O_{11}$.

In some embodiments the crystal structure has a super cell having a parameter $\sqrt{2}a$ of from 17 to 18 Å and c of from 3.5 to 4.5 Å, preferably a parameter $\sqrt{2}a$ of from 17.2 to 17.6 Å and c of from 3.7 to 4.3 Å, more preferably a parameter $\sqrt{2}a$ of from 17.3 to 17.5 Å and c of from 3.8 to 4.0 Å, even more preferably a parameter $\sqrt{2}a$ of about 17.4 Å and c of about 3.9 Å. Specifically, the crystal structure may have a unit cell having a parameter $\sqrt{2}a$ of 17.4054 Å and c of 3.9450 Å. In such embodiments, x/y may be 2 or 3. Preferably the niobium metal oxide is $Nb_{18}M_6O_{63}$, $Nb_{10}M_4O_{37}$ or $Nb_{16}M_8O_{64}$, such as $Nb_{18}W_6O_{63}$, $Nb_{10}W_4O_{37}$, or $Nb_{16}W_8O_{64}$.

The TTB structure also includes "channels" through the structure. These channels are orientated perpendicular to the a-b plane. The shape of the channels is defined by the edges of the corner sharing $MO_6$ octahedra. Typically, the TTB includes triagonal, tetragonal and pentagonal channels. The parent $ReO_3$ structure has only tetragonal channels. As TTB is a type of distorted $ReO_3$ structure, 8 of these tetragonal channels are distorted to form 8 pentagonal channels and 8 triagonal channels (Hyde *et al.*).

In the present invention, the TTB structure includes pentagonal channel (PCs), wherein the PCs are partially filled with -Nb-O-Nb-O- strings. The TTB structure may include 4 or 8 PCs per unit cell. The TTB also includes 4 or 8 trigonal channels per unit cell. The trigonal channels are typically unoccupied. The TTB also typically includes tetragonal channels.

A portion of the pentagonal channels are filled with -Nb-O-Nb-O- strings. A portion means that only some of the pentagonal channels are occupied with -Nb-O-Nb-O- strings. The remaining portion are either vacant or are optionally intercalated with lithium. The pentagonal channels are typically not occupied by any metal from the NMO (e.g., M) other than Nb, other than when reversibly intercalated with lithium.

A -Nb-O-Nb-O- string refers to a string of -[Nb-O]- repeating units. The -Nb-O-Nb-O- string includes at least two repeating units, such as 5, 10, 20, 50, 100, 200, or 300 repeating units. The -Nb-O-Nb-O- is located in the PCs which connect to neighbouring unit cells.

In some embodiments, -Nb-O-Nb-O- strings fill 1/3 or more of PCs in the niobium metal oxide. In some embodiments, -Nb-O-Nb-O- strings fill 1/2 or less of the PCs in the niobium metal oxide. Preferably, -Nb-O-Nb-O- strings fill 1/3 to 1/2 of the PCs. In some embodiments, Nb-O-Nb-O- strings fill about 1/3 or about 1/2 of the PCs.

For example, where x/y = 1 (e.g., NMO is $Nb_2M_2O_{11}$, such as $Nb_2W_2O_{11}$) about 1/3 of PCs are filled with -Nb-O-Nb-O- strings in the niobium metal oxide. Where x/y = more than 1 about 1/2 of PCs are filled with -Nb-O-Nb-O- strings in the niobium metal oxide. Where x/y = 2 (e.g., NMO is $Nb_{16}M_8O_{64}$, such as $Nb_{16}W_8O_{64}$) about 1/2 of PCs are filled with -Nb-O-Nb-O-strings in the niobium metal oxide. Where x/y = 3 (e.g., NMO is $Nb_{16}M_8O_{64}$, such as $Nb_{16}W_8O_{64}$) about 1/2 of PCs are filled with -Nb-O-Nb-O- strings in the niobium metal oxide.

In some embodiments, where 1/2 of PCs are filled with -Nb-O-Nb-O- strings, two of the four PCs around the 2x2 central block of $MO_6$ octahedra remain unoccupied. Preferably, the PCs are orderly filled, such as alternately filled, with -Nb-O-Nb-O- strings. For example, two of the four PCs around the 2x2 central block of $MO_6$ octahedra may be filled on the diagonal. It is thought the ordering is due to reduced cation-cation repulsion.

Preferably, the crystal structure displays cation ordering. In other words, there is ordering to the occupancy of the PCs. Filling of the PCs with only -Nb-O-Nb-O- strings is an example of cation ordering. Alternate filling for the PCs (e.g.,

filling of every other PC around the 2x2 central block of $MO_6$ octahedra) is also an example of cation ordering.

The niobium metal oxide of the present invention is able to intercalate lithium, for example, during cycling of a lithium-ion electrochemical cell. The intercalation of lithium by the niobium metal oxide typically occurs by intercalation of Li into the tetragonal and/or the remaining portion of the pentagonal channels. In some embodiments, other species can be optionally present in the trigonal or tetragonal channels. Typically, the trigonal channels are unoccupied. Preferably, the tetragonal channels are unoccupied, or optionally intercalated with lithium.

Intercalation typically refers to a reversible insertion of lithium into the crystal structure.

During intercalation of lithium, the cations in the niobium metal oxide are reduced. During deintercalation of lithium, the cations are oxidised. Depending on the structure and metal component of the niobium metal oxide, there is preferential redox of either the niobium or metal (e.g., tungsten) cation during intercalation.

Due to the cation ordering of the -Nb-O-Nb-O- strings of the present invention, the cation redox during (de) intercalation results in a more uniform expansion and compression in the lattice. In other words, due to the cation ordering the redox will occur for a cation in the same lattice environment throughout the structure. This contrasts to known structures which do not have such cation ordering, where the cations undergoing the redox may be in different lattice environments, leading to less uniform expansion and compression. Along with the 3D tunnel structure, the uniform expansion reduces cracking or other structural defects which are commonly observed in the known crystallographic shear/ block structures without cation ordering.

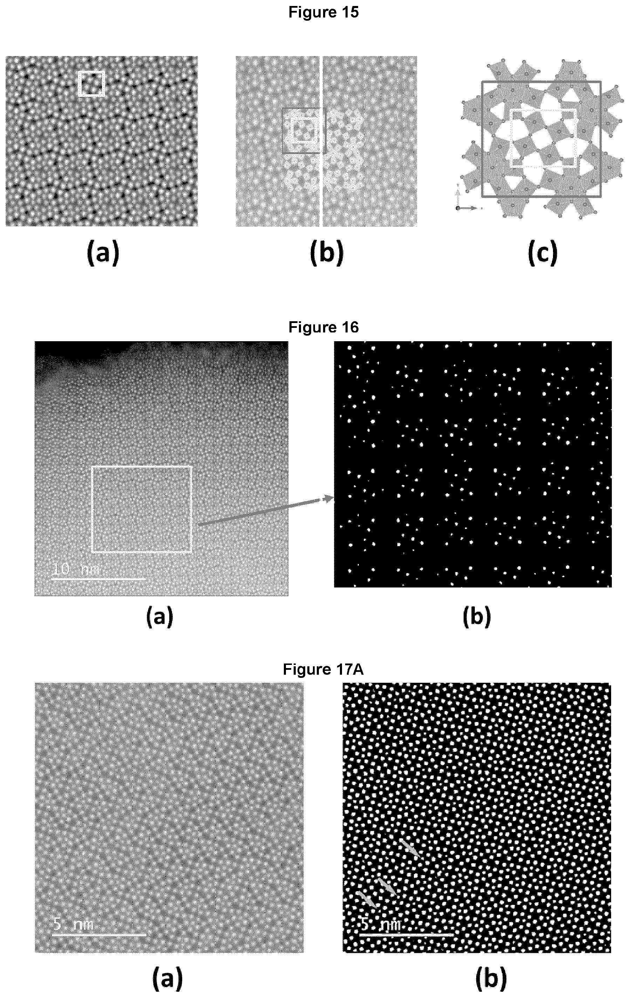

The TTB structure also includes octahedral sites forming an inner square. The inner square is the square of octahedral sites is located inside the set of four pentagonal channels mutually linked by corner sharing octahedra (see the inner square overlayed in Figure 15).

The inner square of octahedral sites is generally filled with -M-O-M-O- strings and optionally some Nb defects (where M is as defined for Formula (I)). The inner square of octahedral sites is either completely or mainly filled with a mixture of -M-O-M-O- strings. Where x/y is 3, the inner square of octahedral sites is mostly -M-O-M-O- strings with some Nb defects. This is due to a slight excess of Nb when x/y is 3. Where x/y is 2, the inner square of octahedral sites is only -M-O-M-O- strings.

Preferably, where M is W, then the inner square of octahedral sites is generally filled with a mixture of -W-O-W-O- strings and optionally some Nb defects. Where x/y is 3, the inner square of octahedral sites is mostly -W-O-W-O- strings with some Nb defects. Where x/y is 2, the inner square of octahedral sites is only -W-O-W-O- strings.

The TTB structure also includes octahedral sites forming an outer square. The outer square is the square of octahedral sites located outside the sets of four pentagonal channels mutually linked by corner sharing octahedra (see the outer square overlayed in Figure 15).

The outer square of octahedral sites is generally filled with -M-O-M-O- strings. Preferably where M is W, then the outer square of octahedral sites is filled with -W-O-W-O- strings.

The TTB structure includes additional octahedral sites which are not part of the inner square or outer square.

The crystal structure may be characterised using X-ray crystallography, such as powder X-ray crystallography (PXRD). The crystal structure can be characterised by having certain $2\theta$ values in the PXRD diffraction pattern.

The niobium metal oxide may have a crystal structure characterised by a powder x-ray diffraction pattern having two or more $2\theta$ peaks, such as three or more, such as four or more peaks, selected from the group consisting of 10.17, 22.54, 22.87, 29.96, 26.18, 32.31, 37.80 and $32.60 \pm 0.2°$ and wherein the powder X-ray diffraction (PXRD) is measured at a wavelength of Cu-K$\alpha$.

XRPD data can be obtained using any suitable diffractometer such as a Panalytical Empyrean powder diffractometer. XRPD data can be obtained by exposing the NMO sample to Cu-K$\alpha$ X-ray radiation. Cu-K$\alpha$ has an energy of 8.04 keV, which corresponds to a wavelength of 1.5406 Å. Details of suitable XRPD are provided in the Examples section.

Typically, $2\theta$ peaks are within $\pm 0.2°$. Preferably the $2\theta$ peaks are within $\pm 0.1°$, more preferably within $\pm 0.05°$.

In some embodiments, the crystal structure of the invention is characterised by having two or more $2\theta$ peaks selected from the peaks at 10.17, 22.54, 22.87, 29.96, 26.18, 32.31, 37.80 and $32.60 \pm 0.2°$.

In some embodiments, the crystal structure of the invention is characterised by having three or more $2\theta$ peaks, preferably four or more, five or more, six or more, seven or more, selected from the peaks at 10.17, 22.54, 22.87, 29.96, 26.18, 32.31, 37.80 and $32.60 \pm 0.2°$.

In some embodiments, the crystal structure of the invention is characterised by having $2\theta$ peaks at 10.17, 22.54, 22.87, 29.96, 26.18, 32.31, 37.80 and $32.60 \pm 0.2°$.

In one embodiment, the niobium metal oxide is $Nb_{18}W_6O_{63}$ or $Nb_{16}W_8O_{64}$ and the crystal structure of the niobium metal oxide has two or more $2\theta$ peaks selected from the peaks at 10.17, 22.54, 22.87, 29.96, 26.18, 32.31, 37.80, 32.60, $52.52 \pm 0.2°$.

In one embodiment, the niobium metal oxide is $Nb_{18}W_6O_{63}$ and the crystal structure of the niobium metal oxide has two or more $2\theta$ peaks selected from the peaks at 10.15, 22.52, 22.83, 29.90, 26.08, 32.28, 52.52, 29.90, 32.50, 37.76 and $30.79 \pm 0.2°$.

In one embodiment, the niobium metal oxide is $Nb_{16}W_8O_{64}$ and the crystal structure of the niobium metal oxide has two or more $2\theta$ peaks selected from the peaks at 10.17, 22.53, 22.87, 29.96, 26.12, 32.31, 52.58, 52.66, 37.80, 32.56 and 34.76 $\pm$ 0.2°.

In one embodiment, the niobium metal oxide is $Nb_2W_2O_{11}$ and the crystal structure of the niobium metal oxide has two or more $2\theta$ peaks selected from the peaks at 10.23, 16.11, 22.52, 22.83, 27.90, 29.90, 26.08, 32.28, 52.52, 29.90, 32.50, 37.76 and 30.79 $\pm$ 0.2°.

In general, the $2\theta$ peaks decrease with an increase in Nb content (e.g., higher x/y value), because the higher Nb content slightly increases the cation-cation distance in the lattice.

Typically, all $2\theta$ peaks in the 1:1 (x/y = 1) phase are present in the phases with higher Nb:W ratios. New peaks appear when x/y > 1 (e.g., when x/y = 2 or 3) corresponding to where hk0 (where h+k = odd). The new peaks increase in intensity as x/y increases and are most intense where x/y = 3.

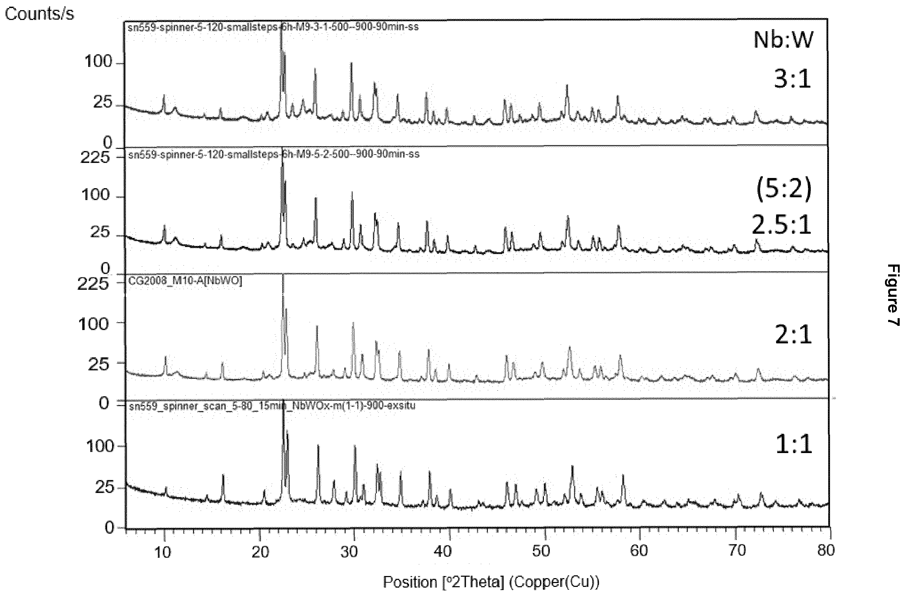

In some embodiments, the crystal structure of the invention is characterised by having a PXRD as in Figure 7. For example, when the niobium metal oxide is $Nb_{18}W_6O_{63}$ then the crystal structure of the invention may be characterised by having a PXRD as in Figure 7 (3:1). Alternatively, when the niobium metal oxide is $Nb_{16}W_8O_{64}$ then the crystal structure of the invention may be characterised by having a PXRD as in Figure 7 (2:1). For example, when the niobium metal oxide is $Nb_2W_2O_{11}$ then the crystal structure of the invention may be characterised by having a PXRD as in Figure 7 (1:1).

*Secondary Particle*

The invention provides a niobium metal oxide secondary particle comprising an agglomeration of primary particles of the niobium metal oxide of the invention, wherein the secondary particle has a length of from 1 to 5 $\mu$m and an aspect ratio of from 1 to 1.5.

The secondary particle is typically highly symmetrical, that is has a high number of symmetry features. The secondary particle may have several axes and planes of symmetry. The high degree of symmetry means that the particle is able to pack efficiently (for example, having a high powder density) and have good interparticle contact between the secondary particles to aid electrode kinetics.

Preferably, the secondary particle has two perpendicular axes of symmetry, more preferably three perpendicular axes of symmetry. Preferably the secondary particle has an inversion centre. Preferably, the secondary particle has two perpendicular planes of symmetry, more preferably three perpendicular planes of symmetry.

The secondary particle is preferably spherical, such that the particle resembles the shape of a perfect sphere. A sphere has the highest symmetry of any three-dimensional object, having infinite rotation axes and infinite mirror planes of symmetry. Accordingly, higher sphericity affords excellent packing efficiency, high bulk density and good interparticle contact. The more spherical the particles the closer the packing efficiency can get to a close packed structure (which has a packing efficiency of about 74%). Accordingly, the bulk material can display high density and good packing efficiency when it is calendered for use as an electrode for an electrochemical cell.

The secondary particle may have a sphericity of 0.95 or more, preferably 0.96 or more, more preferably 0.97 or more, even more preferably 0.98 or more, yet more preferably 0.99 or more. Sphericity is a measure of how closely the shape of a particle resembles that of a perfect sphere, as described below.

Typically, the length of the secondary particle is the longest (greatest) dimension of the particle, such as the longest lateral dimension of the particle. Preferably the secondary particles are all a similar length, such that the distribution of lengths in a population of particles are similar. The similar lengths of the population of particles further improves the packing of the particles.

The shape and size of the secondary particles may be obtained using the preparation methods described herein. Accordingly, the invention also provides a secondary particle obtained or obtainable by the process of the invention as described herein.

A secondary particle comprises multiple primary particles. The primary particles may be integrally formed. That is, the primary particles are typically constituted from NMO wherein the ions in the primary particle are held together by strong interactions, such as ionic or covalent interactions, preferably ionic interactions.

The primary particles comprise the niobium metal oxide of the invention. Preferably, the primary particles consist essentially of the niobium metal oxide of the invention. In some embodiments, the primary particles comprise 80 wt.% or more of the niobium metal oxide of the invention, preferably 85 wt.% or more, 90 wt.% or more, 95 wt.% or more, 97 wt.% or more, 98 wt.% or more, 99 wt.% or more. This may be determined by any suitable method known in the art, such as elemental analysis or PXRD.

Preferably, the primary particles are substantially free of impurities.

Properties of the primary particles may be measured analogously to the secondary particles, as described below. The length, width, aspect ratio, and percentile values may be measured by focused ion beam-scanning electron microscope (FIB-SEM) and/or the methods described below.

Typically, the primary particles have a length of from 0.1 to 2 $\mu$m, preferably from 0.2 to 1.5 $\mu$m, more preferably

0.3 to 1.0 $\mu$m. The primary particles may have a width of from 20 to 200 nm, preferably 40 to 150 nm, more preferably 50 to 100 nm. The primary particles may have an aspect ratio of from 2 to 20, such as from 3 to 18, or from 5 to 15. The primary particles may have an aspect ratio of about 10.

In general, the shape of the primary particles is less regular than the shape of the secondary particles. Typically, the primary particles are less spherical and/or less circular than the secondary particles. Preferably, the primary particles are rod shaped.

The secondary particles are typically formed of an agglomeration of multiple primary particles. Adjacent primary particles tend to be attached by weak interactions, such as intermolecular forces. The weak interactions include long range ionic interactions and Van de Waals forces amongst others.

Preferably, adjacent primary particles are connected by NMO amorphous bridges. The NMO amorphous bridges are comprise $NbO_6$, and $MO_6$ and/or $MO_7$ polyhedra where the cation and oxygen are covalent bonded. The NMO amorphous bridges have an amorphous ion arrangement (i.e. a non-periodic arrangement). That is, the NMO amorphous bridges are not crystalline. This can be seen from demonstrated by the fast Fourier transform (FFT) performed on the HR-TEM image of particle ends and the bridge that links them. The FFT pattern of the primary particles show spots due to crystallinity which is absent in the FFT of the NMO amorphous bridge. This suggests that the bridges linking the primary particles are amorphous.

Typically, the secondary particle comprises from 100 to 5000 primary particles, preferably 500 to 2000 primary particles, more preferably 700 to 1500 primary particles, even more preferably 1800 to 1200 primary particles, yet more preferably 900 to 1100 primary particles. In some embodiments, the secondary particle comprises about 1000 primary particles. The number of secondary particles may be determined by standard methods, such as SEM (e.g., focused ion beam-scanning electron microscope (FIB-SEM)), TEM or atomic force microscopy followed by image/data processing to determine the size of the primary particles and secondary particles and extrapolating the number of primary particles to determine the total number of primary particles in the secondary particle.

The secondary particle comprises the niobium metal oxide of the invention. Preferably, the secondary particles consist essentially of the niobium metal oxide of the invention. In some embodiments, the secondary particles comprise 80 wt.% or more of the niobium metal oxide of the invention, preferably 85 wt.% or more, 90 wt.% or more, 95 wt.% or more, 97 wt.% or more, 98 wt.% or more, 99 wt.% or more. In some embodiments, the secondary particles comprise 80 wt.% or more of primary parties of the niobium metal oxide of the invention, preferably 85 wt.% or more, 90 wt.% or more, 95 wt.% or more, 97 wt.% or more, 98 wt.% or more, 99 wt.% or more. Preferably, the secondary particle comprises 99.9 wt.% niobium metal oxide of the invention.

Preferably, the secondary particles are substantially free of impurities.

The secondary particle may comprise less than 10 wt.% of T-phase $Nb_2O_5$, $Nb_{16}W_5O_{55}$ and/or $Nb_{14}W_3O_{44}$. Preferably, the secondary particle comprises no T-phase $Nb_2O_5$, $Nb_{16}W_5O_{55}$ and/or $Nb_{14}W_3O_{44}$.

The secondary particle may comprise less than 10wt.% of T-phase $Nb_2O_5$. Preferably, the secondary particle comprises less than 5 wt.% of T-phase $Nb_2O_5$, such as less than 3 wt.%, less than 1 wt.%, less than 0.5 wt.%. Preferably, the secondary particle comprises no T-phase $Nb_2O_5$.

The secondary particle may comprise less than 10 wt.% of $Nb_{16}W_5O_{55}$. Preferably, the secondary particle comprises less than 5 wt.% of $Nb_{16}W_5O_{55}$, such as less than 3 wt.%, less than 1 wt.%, less than 0.5 wt.%. Preferably, the secondary particle comprises no T-phase $Nb_{16}W_5O_{55}$.

The secondary particle may comprise less than 10 wt.% of $Nb_{14}W_3O_{44}$. Preferably, the secondary particle comprises less than 5 wt.% of $Nb_{14}W_3O_{44}$, such as less than 3 wt.%, less than 1 wt.%, less than 0.5 wt.%. Preferably, the secondary particle comprises no T-phase $Nb_{14}W_3O_{44}$.

The secondary particle has a length of from 1 to 5 $\mu$m.

Typically, the length of the secondary particle is the longest (greatest) dimension of the particle, such as the longest lateral dimension of the particle. The length of the secondary particle is generally the longitudinal length of the particle. The lateral dimension is the dimension observable when viewing the particle from above, such as by SEM, such as in plan view where the particle appears to be two dimensional. The length may be the longest dimension measurable from the top-down view of the particle.

Typically, the width of the secondary particle is the shortest dimension of the particle, such as the shortest lateral dimension of the particle. The width of the secondary particle is generally the longitudinal width of the particle. The lateral dimension is the dimension observable when viewing the particle from above, such as by SEM, such as in plan view where the particle appears to be two dimensional. The width may be the shortest dimension measurable from the top-down view of the particle.

The width of the secondary particle may be the shortest dimension which is perpendicular to a line defining the length dimension. The length of the secondary particle is the longest dimension of the particle, and so the line defining the length of the particle is the line between the furthest extremities of the particle. The width may be the shortest dimension of the secondary particle which is perpendicular to the line defining the length of the particle. The shortest dimension may also be defined by a line between the closest extremities of the particle, wherein the line is perpendicular to the line defining the length of the particle. In other words, the shortest dimension (width) may be the narrowest section of the particle which can be joined by a line perpendicular to the line defining the length of the particle.

The length and width of the particles may be measured using any suitable technique. For example, scanning electron microscope (SEM) may be used. Suitable systems include MIRA3 SEM operated at a voltage of 5 kV with a working distance of 6mm. For EDS maps, the suitable systems include MIRA3 SEM operating at a voltage of 30 kV with a working distance of 15 mm. The length and width of the secondary particle may then be analysed by imaging processing software, such as MiraTC. EDS data may be collected using the Aztec software from Oxford instruments. Particle measurements may be in accordance with ISO 9276-2:2014.

The number of measurements taken of the length or width is usually from 100 to 1,000. Typically, over 100 measurements are taken. The length or width is the mean average value of the measurements taken.

The secondary particle has a length of from 1 to 5 $\mu$m. Preferably, the secondary particle has a length of 1.5 $\mu$m or more, more preferably 2 $\mu$m or more, even more preferably 3 $\mu$m or more. Preferably, the secondary particle has a length of 4.5 $\mu$m or less, more preferably 4 $\mu$m or less, even more preferably 3 $\mu$m or less. Preferably, the secondary particle has a length of from 1.5 to 4.5 $\mu$m, more preferably from 2 to 4 $\mu$m, even more preferably from 2.5 to 3.5 $\mu$m. The secondary particle has a particularly preferred length of about 3 $\mu$m.

The secondary particle has a width of from 1 to 5 $\mu$m Preferably, the secondary particle has a width of 1.5 $\mu$m or more, more preferably 2 $\mu$m or more, even more preferably 3 $\mu$m or more. Preferably, the secondary particle has a width of 4.5 $\mu$m or less, more preferably 4 $\mu$m or less, even more preferably 3 $\mu$m or less. Preferably, the secondary particle has a width of from 1.5 to 4.5 $\mu$m, more preferably from 2 to 4 $\mu$m, even more preferably from 2.5 to 3.5 $\mu$m. The secondary particle has a particularly preferred width of about 3 $\mu$m.

Typically, the length and/or width of a population of secondary particles (such as the from 100 to 1,000 particles measured) gives a normal particle size distribution. Preferably, the population of secondary particles have a length and/or width having monomodal particle size distribution. A monomodal distribution has only one peak in the particle size distribution. In such cases, the peak may correspond to the median average particle length or median average particle width. Particle measurements may be in accordance with ISO 9276-2:2014.

Percentile values for the length of the secondary particle size distribution can also be calculated, such as D100, D90, D50 and D10. These values may be calculated based on the number of particles and the particle size distribution for the particle length.

D100 length is the secondary particle length at which 100% of the secondary particles have a length less than or equal to the D100 particle length.

The secondary particle may have a D100 length of 10 $\mu$m or less, preferably 8 $\mu$m or less, more preferably 6 $\mu$m or less, even more preferably 5 $\mu$m or less, yet more preferably 4 $\mu$m or less.

D90 length is the secondary particle length at which 90% of the secondary particles have a length less than or equal to the D90 particle length.

The secondary particle may have a D90 length of 9 $\mu$m or less, preferably 8 $\mu$m or less, more preferably 6 $\mu$m or less, even more preferably 5 $\mu$m or less, yet more preferably 4 $\mu$m or less.

D50 length is the secondary particle length at which 50% of the secondary particles have a length less than or equal to the D50 particle length.

The secondary particle may have a D50 length of 5 $\mu$m or less, preferably 4 $\mu$m or less, more preferably 3 $\mu$m or less. The secondary particle may have a D50 length of from 1 to 5 $\mu$m.

Preferably, the secondary particle has a D50 length of from 1.5 to 4.5 $\mu$m, more preferably from 2 to 4 $\mu$m, even more preferably about 3 $\mu$m.

D10 length is the secondary particle length at which 10% of the secondary particles have a length less than or equal to the D10 particle length.

The secondary particle may have a D10 length of 0.5 $\mu$m or more, preferably 1 $\mu$m or more, more preferably 2 $\mu$m or more, even more preferably 2.5 $\mu$m or more.

In some embodiments, the population of secondary particles has a low length standard deviation. This is indicative of a narrow secondary particles size distribution. In some embodiments, the length standard deviation for the population of particles is 3 $\mu$m or less, preferably 2 $\mu$m or less, more preferably 1 $\mu$m or less, even more preferably 0.75 $\mu$m or less, yet more preferably 0.5 $\mu$m or less.

The aspect ratio is the ratio between the length of the secondary particle and the width of the secondary particle. Length and width are defined and measured as described above, wherein a number of measurements are taken of the length or width is usually from 100 to 1000. Typically, over 100 measurements are taken. The length or width is the mean average value of the measurements taken, and the aspect ratio is calculated from these mean average values. Accordingly, aspect ratio may be the ratio between the longest dimension of the secondary particle and the shortest dimension of the secondary particle.

The secondary particle has an aspect ratio of from 1 to 1.5. Preferably, the secondary particle has an aspect ratio of 1 to 1.4, more preferably 1 to 1.3, even more preferably 1 to 1.2, yet more preferably 1 to 1.1. The secondary particle preferably has an aspect ratio of about 1. An aspect ratio of about 1 means the length and width of the secondary particle are the same. An aspect ratio of about 1 may mean the longest dimension of the secondary particle and the shortest dimension of the secondary particle are the same. The secondary particle is highly symmetrical. This assists in efficient packing of the secondary particles.

The secondary particle may have a sphericity of 0.95 or more, preferably 0.96 or more, more preferably 0.97 or more, even more preferably 0.98 or more, yet more preferably 0.99 or more. Sphericity is a measure of how closely the shape of a particle resembles that of a perfect sphere. Sphericity of a particle is the ratio of the surface area of a sphere with the same volume as the particle to the surface area of the particle. The sphericity of a perfect sphere is 1. Sphericity may be calculated using the equation, where V is the volume of the particle and A is the surface area of the particle:

$$Sphericity = (\pi^{1/3}(6*V)^{2/3}) / A$$

The volume and surface area of the particle can be calculated by any suitable method, such as using the length and width of the particle as measured above. For example, scanning electron microscope (SEM) may be used. Suitable systems include MIRA3 EM operated at 5kV and a working distance of 6 mm. The secondary particle may then be analysed by imaging processing software, such as MiraTC. EDS mapping may use a MIRA3 EM operated at 30kV and a working distance of 15 mm and analysed using Aztec software from Oxford instruments.

The secondary particle may have a circularity of 0.95 or more, preferably 0.96 or more, more preferably 0.97 or more, even more preferably 0.98 or more, yet more preferably 0.99 or more. Circularity of a three-dimensional particle may refer to circularity of the particle when viewed from above. Circularity may be calculated using the lateral dimensions of the particle and visible area of the particle, which are observable when viewing the particle from above, such as in plan view where the particle appears to be two dimensional. The circularity is measurable from the top-down view of the particle, such as when viewing the particles using microscopy (e.g., SEM).

Circularity is a measure of how closely the shape of a particle resembles that of a perfect circle. Circularity of a particle is the ratio of the perimeter of a circle with the same visible area as the particle to the visible area of the particle. This can be calculated using the following equation, where A is the visible surface area of the particle and P is perimeter of the particle.

$$Circularity = (4\pi*A)/P^2$$

The number of measurements taken to determine the sphericity or roundness is usually from 100 to 1000. Typically, over 100 measurements are taken. The sphericity or roundness is the mean average value of the measurements taken. Particle measurements may be made in accordance with ISO 9276-2:2014.

The secondary particle may have a surface roughness $R_t$ of 0.05 to 1 $\mu$m, preferably 0.08 to 0.5 $\mu$m, more preferably 0.1 to 0.2 $\mu$m. The secondary particle may have a surface roughness $R_t$ of 1 $\mu$m or less, preferably 0.7 $\mu$m or less, more preferably 0.5 $\mu$m or less, even more preferably 0.3 $\mu$m or less, yet more preferably 0.1 $\mu$m or less.

Surface roughness is a measure of the change in profile of the surface of the particle. $R_t$ is the total height of the profile, which is the total vertical distance (perpendicular to the particle surface) between the maximum profile height (peak) and the minimum profile height (valley) along the evaluated profile. Surface roughness may be measured using any suitable method, such as atomic force microscopy. Surface roughness may be measured in accordance with ISO 4287:1997.

*Preparation Method*

Generally, the invention provides a process for preparing a niobium metal oxide secondary particle, the process comprising:

  providing a precursor mixture of a Nb source and a M source, and
  calcining the precursor mixture at a temperature of from 550 to 1,100 °C,

wherein M is a metal other than Nb.

The precursor mixture of the Nb source and the M source may be prepared by any suitable method. The mixture is preferably highly homogeneous. In some embodiments, the precursor mixture is prepared by co-precipitation of the Nb source and M source. The resulting niobium metal oxide secondary particle may be the secondary particle of the invention. Preferably, the resulting niobium metal oxide secondary particle is highly regular and symmetrical. Preferably the resulting secondary particle is spherical.

Accordingly, in a third aspect the invention provides a process for preparing the niobium metal oxide secondary particle of any of claims 11 to 16, the process comprising:

co-precipitating Nb oxide and M oxide from a solution of $NbX_a$ and $MY_b$, and
calcining the precipitate at a temperature of from 550 to 1100 °C,
wherein M is selected from Ti, Zr, V, Cr, W and Mo, X and Y are independently one or more counterions, and a and b are independently from 2 to 6.

In some embodiments, the invention provides a process for preparing the niobium metal oxide secondary particle of the invention, the process comprising:

dissolving $NbX_a$ and $MY_b$ in a solvent to form a solution;
co-precipitating Nb oxide and M oxide from a solution of $NbX_a$ and $MY_b$, and
calcining the precipitate at a temperature of from 550 to 1,100 °C,
wherein M is a metal selected from Ti, Zr, V, Cr, W and Mo, X and Y are independently one or more counterions, and a and b are independently from 2 to 6.

In some embodiments, the invention provides a process for preparing the niobium metal oxide secondary particle of the invention, the process comprising:

dissolving $NbX_a$ and $MY_b$ in a solvent to form a solution;
co-precipitating Nb oxide and M oxide from a solution of $NbX_a$ and $MY_b$,
separating the precipitate from the solvent, and
calcining the precipitate at a temperature of from 550 to 1,100 °C,
wherein M is a metal selected from Ti, Zr, V, Cr, W and Mo, X and Y are independently one or more counterions, and a and b are independently from 2 to 6.

Yu *et al.* describe a two-step hydrothermal process to prepare $Nb_{18}W_{16}O_{93}$ using Nb-oxide and W-oxide precursors. The two-step process precipitates the Nb first, followed by the W. As the precipitation is not simultaneous, the mixing of the Nb and W components is poor and the precipitate has poor homogeneity. As a result, the calcined NWO forms *"nanobar-shape"* particles, in contrast to the secondary particles of the invention, which are typically spherical.

Zhou *et al.* describes a solvothermal process to prepare $Nb_2WO_8$ using $NbCl_5$ and $WCl_6$ precursors. Zhou uses an oxalic acid to initiate precipitation. However, the use of a precipitation reagent means that the precipitation of the $NbCl_5$ and $WCl_6$ is not simultaneous, and the resulting precipitate is poor homogeneity. As a result, the calcined NWO forms nanorods, in contrast to the secondary particles of the invention.

The present invention may use heating under solvothermal conditions to result in precipitation of the Nb and metal precursors, and beneficially also provides a highly homogenous precursor for the preparation of the secondary particle. The atomic scale mixing achieved by the present process means the precipitate has high homogeneity of the two metal ions. Thus, the need for metal ion diffusion is largely removed and typically only intra-crystallite metal ion diffusion is needed. Calcination then provides a highly regular and symmetrical secondary particle of the invention. The particle is preferably substantially, such as highly, spherical.

*Starting Materials*

The process for preparing a niobium metal oxide uses $NbX_a$ and $MY_b$ as the starting materials.

M is any suitable metal other than Nb, such as a transition metal. M may be a group 3, group 4 or group 5 metal, preferably a group 4 or group 5 metal, more preferably a group 5 metal. Typically, M is selected from Ti, Zr, V, Cr, W and Mo. Preferably, M is selected from Cr, W and Mo, more preferably W and Mo, even more preferably W.

X and Y are independently one or more counterions. In some embodiments, X and Y are independently selected from an oxalate, a $C_{1-3}$ alkoxide, O, S, F, Cl and Br. In some embodiments, X and Y are independently selected from an oxalate, a $C_{1-3}$ alkoxide, O and Cl. In other embodiments, X and Y are independently selected from an oxalate, a $C_{1-3}$ alkoxide, F, Cl and Br.

In some embodiments, X is not oxygen. In some embodiments, X and Y are not oxygen.

Oxalate is $C_2O_4^{2-}$. $C_{1-3}$ alkoxide is selected from methoxide ($CH_3O^-$), ethoxide ($CH_3CH_2O^-$), propoxide ($CH_3CH_2CH_2O^-$ or $(CH_3)_2CHO^-$).

Preferably, X and Y are independently selected from an oxalate, F, Cl, and Br, more preferably oxalate and Cl. In some embodiments, X and Y are both Cl. In some embodiments X and Y are both oxalate.

Additional positive counterions, such as ammonium ($NH_4^+$) or other metal ions may also be present for charge neutrality.

The values for each of a and b are independently from 2 to 6. Preferably, a and b are 3 to 5, more preferably a is 5 and b is 6.

In some embodiments, X is selected from F, Cl and Br, and a is 5. Preferably, $NbX_a$ is $NbCl_5$.

In some embodiments, Y is selected from F, Cl and Br, and a is 6. Preferably, $MY_b$ is $WCl_6$.

In some embodiments, $NbX_a$ is $NbCl_5$ and $MY_b$ is $WCl_6$.

In some embodiments X is oxalate and a is 3. Preferably, $NbX_a$ is niobium oxalate, wherein niobium oxalate is $Nb(C_2O_4)_3^-$. An example source of niobium oxalate is ammonium niobium oxalate, wherein ammonium niobium oxalate is $Nb(C_2O_4)_3(NH_4)$.

In some embodiments Y is oxygen and b is 3.5. Preferably, $MY_b$ is metatungstate, wherein metatungstate is $(H_{1/6}WO_{3.5})^{-0.5}$. This may also be known as $(H_2W_{12}O_{40})^{-6}$. An example source of metatungstate is ammonium meta-tungstate, wherein ammonium metatungstate $(NH_4)_{0.5}(H_{1/6}WO_{3.5})$, such as $(NH_4)_6(H_2W_{12}O_{40})$.

In some embodiments Y is oxygen and b is 3.5. Preferably, $MY_b$ is paratungstate, wherein paratungstate is $(H_2W_{12}O_{42})^{-10}$. An example source of paratungstate is ammonium paratungstate, wherein ammonium paratungstate is $(NH_4)_{0.83}(H_{1/6}WO_{3.5})$, such as $(NH_4)_{10}(H_2W_{12}O_{42})$.

In some embodiments $NbX_a$ is niobium oxalate and $MY_b$ is metatungstate or ammonium paratungstate.

*Dissolution step*

The process for preparing a niobium metal oxide secondary particle may comprise dissolving $NbX_a$ and $MY_b$ in a solvent. This may be referred to as the dissolution step.

Dissolution typically occurs before the precipitation step, described below.

The solvent may be any suitable solvent which is able to solubilise $NbX_a$ and $MY_b$. Mixtures of solvents may be used. An aqueous solvent may be used, such as water. An organic solvent may be used, such as alcohol (e.g., $C_{1-6}$ alkyl alcohol). Preferably the solvent is water, ethanol or propanol, such as water, ethanol, isopropanol or a mixture thereof. More preferably the solvent is ethanol, water or mixtures thereof.

Typically, where $NbX_a$ is ammonium niobium oxalate and $MY_b$ is ammonium metatungstate or paratungstate then the solvent is water.

The $NbX_a$ and $MY_b$ may be added to the solvent separately or together. The solvent may be agitated to aid dissolution of the $NbX_a$ and $MY_b$, such as by stirring or by sonification.

Typically, the dissolution is complete when all of the $NbX_a$ and $MY_b$ are dissolved in the solvent. This may be determined by any suitable method, such as by visually observing that the solution is clear.

Thus, the solution typically has the $NbX_a$ and $MY_b$ completely dissolved in the solvent.

*Precipitation step*

Generally, the process for preparing a niobium metal oxide secondary particle comprises precipitating Nb oxide and M oxide from a solution of $NbX_a$ and $MY_b$. This includes co-precipitating Nb oxide and M oxide from a solution of $NbX_a$ and $MY_b$. This may be referred to as the precipitation step.

Co-precipitation refers to the simultaneous precipitation of two components. The precipitation step is preferably an instantaneous co-precipitation, that is where two components both start precipitating together. This means that the Nb and M compounds are removed from solution at the same time, and the resulting precipitate is a homogeneous mixture of the Nb and M compounds.

The Nb and M are generally precipitated as the Nb oxide and M oxide. The Nb and M are typically precipitated as solvated Nb and M oxide. The solvated form refers to a form where the metal oxide is complexed by solvent molecules. For example, where the solvent is water the Nb and M are typically precipitated as hydrated niobium oxide and hydrated M oxide (e.g., hydrated tungsten oxide).

The solution may be heated at any suitable pressure require to achieve co-precipitation. This is typically more than 100 kPa, such as 500 kPa or more, 1000 kPa or more, 1500 kPa or more, or 1800 kPa or more. The pressure may be less than 5000 kPa, such as 4500 kPa or less, or 4000 kPa or less. The pressure may be 1000 to 5000 kPa, preferably 1500 to 4500 kPa, more preferably 1800 to 4000 kPa.

The solution may be heated to any suitable temperature required to achieve co-precipitation. This is typically 120 to 200 °C. In some embodiments, the solution is heated to a temperature of 120 °C or more, preferably 140 °C or more, more preferably 150 °C or more. In some embodiments, the solution is heated to a temperature of 170 °C or less, preferably 160 °C or less, more preferably 150 °C or less. In some embodiments, the solution is heated to a temperature of from 130 to 170 °C, preferably 140 to 160 °C, more preferably about 150 °C.

The solution is heated for any suitable time, required to achieve co-precipitation. The solution may be heated for sufficient time to achieve precipitation of 50% or more of the $NbX_a$ and $MY_b$, preferably 60% or more, more preferably 70% or more, even more preferably 80% or more, yet more preferably 90% or more. In some embodiments, substantially all of

the $NbX_a$ and $MY_b$ is precipitated. In some embodiments, the solution is heated from 0.5 to 6 hours, preferably from 1 to 3 hours, more preferably about 2 hours. The amount of precipitate may be determined by mass analysis of the dried precipitate or by suitable spectroscopic analysis of the solution.

The solution may be heated by any suitable method, required to achieve precipitation such as co-precipitation. Preferably, the heating is by microwave heating. The heating results in fast precipitation and co-precipitation of the Nb and W sources. Microwave heating is particularly preferred, because the heating is rapid and consistent throughout the sample. The microwave facilitates local, instantaneous, and consistent heating throughout the sample creating multiple nucleation sites causing rapid precipitation of the NMO precursor. Heat gradients through the sample are minimised compared to traditional heating methods. As a result, the bulk of the sample can undergo co-precipitation.

The solution may be heated under solvothermal conditions. Solvothermal conditions refer to heating to a temperature higher than the boiling point of the solvent at atmospheric pressure. For example, if the solvent is ethanol, having a boiling point of 78.37 °C at 1 atmosphere, then solvothermal conditions refer to heating to a temperature over 78.37 °C. As a further example, if the solvent if the solvent is isopropanol, having a boiling point of 82.5 °C at 1 atmosphere, then solvothermal conditions refer to heating to a temperature over 82.5 °C.

Solvothermal conditions are typically achieved by heating the solution in a sealed vessel. The sealed vessel is substantially impermeable to air. The sealed vessel may be an inert vessel, such a ceramic vessel or a glass vessel. By heating in a sealed vessel, the pressure inside the vessel increases as the solvent evaporates into the headspace of the sealed vessel. The increasing pressure in turn increases the boiling temperature of the solvent, as the partial pressure in the headspace increases. Under solvothermal conditions, the pressure inside the sealed vessel is increased to over 1 atmosphere.

Preferably, no additional reagent is used in the precipitation step. In other words, the precipitation occurs spontaneously upon heating the precipitate using the conditions described above.

*Calcination step*

The process for preparing a niobium metal oxide secondary particle comprises calcining the precipitate at a temperature of from 550 to 1,100 °C. This may be known as the calcination step.

The precipitate may be calcined at a suitable temperature to prepare the secondary particles of the invention, which is from 550 to 1,100 °C. Preferably, the precipitate is calcined at a temperature of 600 °C or more, more preferably 700 °C or more, even more preferably 800 °C or more. Preferably, the precipitate is calcined at a temperature of 1,000 °C or less, more preferably 950 °C or less, even more preferably 900 °C or less. Preferably, the precipitate is calcined at a temperature of from 600 to 1,000 °C, more preferably from 700 to 950 °C, even more preferably from 800 to 900 °C.

Generally, it has been found that calcining at these lower temperatures results in reduced surface roughness of the secondary particle. This is advantageous because the smooth and regular particle shape allows for isotropic lithium (de)intercalation during charging and discharging, as well as very high packing efficiency.

The precipitate may be calcined by heating the precipitate at a ramp rate of from 1 to 25 °C/minute, to reach the target temperature described above.

The precipitate may be calcined at the target temperature described above for 6 to 48 hours, such as 12 to 24 hours. Preferably, the precipitate is calcined at the target temperature for 6 to 12 hours.

In some embodiments, the precipitate is calcined at 800 °C for 12 to 48 hours, such as 12 hours.

In some embodiments, the precipitate is calcined at 850 °C for 6 to 24 hours hours followed by 900 °C for 0.5 to 3 hours, such as at 850 °C for 12 hours hours followed by 900 °C for 1.5 hours.

In some embodiments, the precipitate is calcined at from 500 to 900 °C for 6 to 12 hours. In one such embodiment, the precipitate is calcined at 500 °C for 1.5 hours, then 600 °C for 1.5 hours, then 700 °C for 1.5 hours, then 800 °C for 1.5 hours, and then 900 °C for 1.5 hours.

Calcining refers to a thermal treatment of a solid material to bring about a phase transition or reaction of the material. Calcination may occur in the presence of air.

The precipitate is typically transferred to a heat proof vessel, such as a ceramic crucible for calcination.

Calcination may occur as a batch or continuous process.

*Separation step*

The process for preparing a niobium metal oxide secondary particle may further comprise separating the precipitate from the solvent. This may be known as the separation step.

The separation step typically occurs after the precipitation step and before the calcination step, described above.

The separation may be achieved by any suitable method, such as by filtering, washing, and drying (such as spray drying or spray pyrolysis), amongst others.

In some embodiments, the separating step comprises separating the precipitate from the organic solvent by filtering. Filtering may be achieved under vacuum, for example using a Buchner funnel.

In some embodiments, the separating step comprises separating the precipitate from the organic solvent by washing the precipitate with the organic solvent. Washing may be carried out using a washing solvent which is the same or different to the organic solvent used in a preceding step. When a different washing solvent is used, it may be a washing solvent which forms an azeotrope with the organic solvent. For example, ethanol may be used as the washing solvent.

In some embodiments, the separating step comprises separating the precipitate from the organic solvent by drying the precipitate. Drying refers to evaporating the organic solvent. Evaporation of the solvent may be achieved by drying the precipitate under vacuum. Alternatively, evaporation of the solvent may be achieved by heating the precipitate. For example, drying may occur during the calcination step as a result of the heating. In other words, the separation step may occur as part of the calcination step.

In some embodiments, the separation step comprises separation the precipitate from the organic solvent by spray drying, freeze drying or spray pyrolysis. Preferably, the precipitate is separated from the organic solvent by spray drying or spray pyrolysis, more preferably spray pyrolysis.

Spray drying typically dries a suspension of the precipitate by atomizing the slurry and drying the atomized slurry with hot gas. The hot gas evaporates the solvent to leave the precipitate. Spray pyrolysis typically dries a suspension or solution by spraying onto a heated substrate (e.g., surface), where the heated substrate assists in the drying by evaporation of the solvent. Spray drying and spray pyrolysis may provide particles of precipitate having a regular and small size, which may be well suited to calcination.

*Working Electrode*

Generally, the invention provides a working electrode for an electrochemical cell, the working electrode comprising niobium metal oxide. The invention provides a working electrode for an electrochemical cell, the working electrode comprising niobium metal oxide of the first aspect of the invention, such as secondary particles of the niobium metal oxide of the first aspect.

In a fourth aspect, the invention provides a working electrode for an electrochemical cell, the working electrode comprising niobium metal oxide secondary particles of the second aspect of the invention.

The working electrode is electrically conductive, and is electrically connectable to a counter electrode, for example within an electrochemical cell.

The working electrode may be an anode or cathode during a discharge step, for example in a lithium-ion battery. Typically, the working electrode is the anode during a discharge step.

In some embodiments, the working electrode comprises the niobium metal oxide secondary particles of the invention as the bulk electrode active material. That is, the electrode active material is the material making up the body of the working electrode. Preferably, the working electrode comprises 50 wt.% or more niobium metal oxide secondary particles based on the total weight of the working electrode, more preferably 60 wt.% or more, even more preferably 70 wt.% or more, yet more preferably 80 wt.% or more. The working electrode may consist essentially of the niobium metal oxide secondary particles.

Optionally, the working electrode comprises a mixture of niobium metal oxide secondary particles and an additional active material.

The additional active material may be an additional metal oxide. For example, the working electrode may comprise a mixture of niobium metal oxide secondary particles and an additional active material selected from lithium titanate (LTO; $Li_4Ti_5O_{12}$), titanium niobium oxides (for example $TiNb_2O_7$), titanium tantalum oxides (for example $TiTa_2O_7$), tantalum molybdenum oxides (for example $Ta_8W_9O_{47}$), niobium molybdenum oxides (for example $Nb_2Mo_3O_{14}$), and niobium tungsten oxide (for example $Nb_{16}W_5O_{55}$, $Nb_{18}W_8O_{69}$, $Nb_2WO_8$, $Nb_{18}W_{16}O_{93}$, or $Nb_{22}W_{20}O_{115}$).

The additional active material may be a carbon electrode material, such as graphite. A working electrode comprising a mixture of niobium metal oxide secondary particles and graphite is cheaper to produce while maintaining the beneficial properties outlined above.

When the working electrode includes niobium metal oxide secondary particles and an additional active material, the working electrode preferably comprises 50 wt.% or more niobium metal oxide secondary particles based on the total weight of the active material, more preferably 60 wt.% or more, even more preferably 70 wt.% or more, yet more preferably 80 wt.% or more.

In some embodiments, the working electrode comprises the niobium metal oxide secondary particles of the invention on the surface of the electrode. That is, the surface of the working electrode terminates in the niobium metal oxide secondary particles of the invention. Preferably, the niobium metal oxide secondary particle surface is the surface contacting the electrolyte in a typical electrochemical cell. In some such embodiments, the working electrode may comprise a layer of the niobium metal oxide secondary particle disposed on a secondary active electrode material. The secondary active electrode material is different to the surface material. The layer of niobium metal oxide secondary particles may be a coating on the secondary active electrode material.

The secondary active electrode material may be selected from carbon, silicon or a metal oxide. The secondary active electrode material may be selected from graphite, reduced graphite oxide or carbon black. The secondary active electrode material may be Ketjen black or Super P carbon, or hard or soft amorphous carbon. The secondary active electrode material may be selected from lithium titanate (LTO; $Li_4Ti_5O_{12}$), a titanium tantalum oxide (for example $TiTa_2O_7$) or a tantalum molybdenum oxide (for example $Ta_8W_9O_{47}$).

The thickness of the layer of niobium metal oxide secondary particles may be known by the ratios of secondary active electrode material to niobium metal oxide secondary particles coating, or it may be determined using standard techniques, such as SEM. The layer of niobium metal oxide secondary particles may have a maximum thickness of 10 μm or less, for example 5 μm or less, 4 μm or less, 3 μm or less or 2 μm or less. The layer of niobium metal oxide secondary particles may have a minimum thickness of 0.5 μm or more, for example 1 μm or more, 2 μm or more, 5 μm or more, or 10 μm or more. The niobium metal oxide secondary particles may have a thickness that is in a range selected from the maximum and minimum amounts given above.

The layer of niobium metal oxide secondary particles may be disposed directly on the secondary active electrode material, or there may be an intermediate layer of active material between the secondary active electrode material and the layer of niobium metal oxide secondary particles. The intermediate layer may be a different secondary active electrode material, a conductivity additive, a binder or a current collector.

The working electrode may comprise a conductive carbon material to improve conductivity. The conductive carbon may be mixed with the secondary particles, the secondary active electrode material, the intermediate layer, or a combination thereof. Preferably, the conductive carbon is mixed with the secondary particles of the invention. The conductive carbon material may be carbon black, graphite, nanoparticulate carbon powder, carbon fibre and/or carbon nanotubes. The working electrode typically comprises from 2 to 20 wt.% conductive carbon based on the total weight of the working electrode, preferably 5 to 15 wt.%, more preferably 8 to 12 wt.%, even more preferably about 10 wt.%.

The working electrode may comprise a binder to improve adhesion the electrode materials to a current collecting surface. The binder may be mixed with the secondary particles, the secondary active electrode material, the intermediate layer, or a combination thereof. Preferably, the binder is mixed with the secondary particles of the invention. Examples of typically binders are PVDF, PTFE, CMC, PAA, PMMA, PEO, SBR and co-polymers thereof. The working electrode typically comprises from 2 to 20 wt.% binder based on the total weight of the working electrode, preferably 5 to 15 wt.%, more preferably 8 to 12 wt.%, even more preferably about 10 wt.%. Preferably, the binder is PVDF and/or CMC.

The working electrode may have any suitable density. The high density may be achieved by the excellent packing properties of the niobium metal oxide secondary particles of the invention. The areal loading may be indicative of the density of the niobium metal oxide.

The working electrode may have any suitable areal loading of the niobium metal oxide secondary particles as active material. Typically, the areal loading is from 1 to 20 mg·cm$^{-2}$, preferably from 2 to 10 mg·cm$^{-2}$, more preferably 3 to 8 mg cm$^{-2}$, yet more preferably 5 to 7 mg cm$^{-2}$. The areal loading may be about 6 mg cm$^{-2}$. Alternatively, the areal loading may be lower, such as about 2 mg cm$^{-2}$.

The working electrode is typically fixed to a current collector, such as a copper or aluminium collector, which may be in the form of a plate.

The inventors have assessed a working electrode comprising the spherical secondary particles of $Nb_2W_2O_{11}$, $Nb_{18}W_6O_{63}$ and $Nb_{16}W_8O_{64}$ as active material, conductive carbon (super P, TIMCAL), binder (PVDF, Kynar) in a mass ratio of 8:1:1 active material/carbon/binder with a 2 mg·cm$^{-2}$ loading of active material and a 1.27 cm$^2$ electrode area against a Li metal counter electrode in a 2032-type coin cell geometry and using 1.0 M $LiPF_6$ in ethylene carbonate/dimethyl carbonate (1:1 v/v) as electrolyte.

The inventors have found that cycling the cell comprising spherical secondary particles of $Nb_{18}W_6O_{63}$ as active material for 1,000 cycles at a 10C rate resulted in a loss of about 4% of discharge capacity. The inventors have found that cycling the cell described above comprising spherical secondary particles of $Nb_2W_2O_{11}$ as active material for 1000 cycles at a 10C rate resulted in a loss of about 15% of discharge capacity.

*Electrochemical Cell*

The invention provides an electrochemical cell comprising a working electrode of the invention. Preferably, the electrochemical cell comprises a counter electrode, an electrolyte and a working electrode of the invention.

The invention also provides a lithium ion battery comprising one or more electrochemical cells of the invention.

The working electrode of the invention may be an anode or cathode during a discharge step, for example in a lithium-ion battery. Typically, the working electrode is the anode during a discharge step.

The electrochemical cell typically comprises a counter electrode and an electrolyte. The electrochemical cell may comprise a current collecting plate. The electrochemical cell may be in electrical connection with a power supply. The electrochemical cell may be in electrical connection with a measurement device, for example an ammeter or voltmeter.

The electrochemical cell may be a lithium-ion cell. A lithium-ion cell typically comprises a working electrode of the invention, a lithium-containing counter electrode or lithium-intercalated counter electrode, an electrolyte and a separator. The electrolyte is suitable for solubilising lithium ions and the separator is permeable to lithium ions.

The counter electrode may be an anode or cathode during a discharge step, for example in a lithium-ion battery. The counter electrode is typically the cathode during a discharge step.

Suitable cathode materials include lithium-containing or lithium-intercalated material, such as a lithium metal oxide, wherein the metal is typically a transition metal such as Co, Fe, Ni, V or Mn, or combination thereof. Some examples of positive electrode materials include lithium cobalt oxide ($LiCoO_2$), lithium nickel manganese cobalt oxide (NMC, $LiNiMnCoO_2$, e.g., $LiNi_{0.6}Co_{0.2}Mn_{0.2}O_2$), lithium vanadium fluorophosphate ($LiVPO_4F$), lithium nickel cobalt aluminium oxide (NCA, $LiNiCoAlO_2$), lithium iron phosphate (LFP, $LiFePO_4$) and manganese-based spinels (e.g., $LiMn_2O_4$). Preferably, the cathode electrode material is LCO, NCA, or NMC (e.g., NMC-811).

The counter electrode may comprise a conductive carbon material to improve conductivity. The conductive carbon material may be carbon black, graphite, nanoparticulate carbon powder, carbon fibre and/or carbon nanotubes.

The counter electrode may comprise a binder to improve adhesion of the active material to a current collecting surface. Examples of typically binders are PVDF, PTFE, CMC, PAA, PMMA, PEO, SBR and co-polymers thereof.

The counter electrode is typically fixed to a current collector, such as a copper or aluminium collector, which may be in the form of a plate.

Typically, the electrolyte in the electrochemical cell is suitable for solubilising lithium ions. Typically, the electrolyte in a charged and discharged cell contains lithium ions. Typically, the electrolyte comprises lithium salts, such as LiTFSI, (bis(trifluoromethane)sulfonimide lithium salt, $LiPF_6$, $LiBF_4$, $LiClO_4$, LiTF (lithium triflate) or lithium bis(oxalato) borate (LiBOB).

The electrolyte may be a liquid electrolyte, such as a liquid at ambient temperature, for example at 25 °C. Preferred electrolytes are stable at elevated and reduced temperatures.

The electrolyte may be a non-aqueous electrolyte. The electrolyte may comprise a polar aprotic solvent. The electrolyte may comprise an organic solvent. Solvents for dissolving lithium ions are well known in the art.

Suitable solvents include carbonate solvents. For example, propylene carbonate (PC), ethylene carbonate (EC), butylene carbonate (BC), chloroethylene carbonate, fluorocarbonate solvents (e.g., fluoroethylene carbonate and trifluoromethyl propylene carbonate), as well as the dialkylcarbonate solvents, such as dimethyl carbonate (DMC), diethyl carbonate (DEC), dipropyl carbonate (DPC), ethyl methyl carbonate (EMC), methyl propyl carbonate (MPC), and ethyl propyl carbonate (EPC).

Suitable solvents also include sulfone solvents. For example methyl sulfone, ethyl methyl sulfone, methyl phenyl sulfone, methyl isopropyl sulfone (MiPS), propyl sulfone, butyl sulfone, tetramethylene sulfone (sulfolane), phenyl vinyl sulfone, allyl methyl sulfone, methyl vinyl sulfone, divinyl sulfone (vinyl sulfone), di phenyl sulfone (phenyl sulfone), dibenzyl sulfone (benzyl sulfone), vinylene sulfone, butadiene sulfone, 4-methoxyphenyl methyl sulfone, 4-chlorophenyl methyl sulfone, 2-chlorophenyl methyl sulfone, 3,4-dichlorophenyl methyl sulfone, 4-(methylsulfonyl)toluene, 2-(methylsulfonyl) ethanol, 4-bromophenyl methyl sulfone, 2-bromophenyl methyl sulfone, 4-fluorophenyl methyl sulfone, 2-fluorophenyl methyl sulfone, 4-aminophenyl methyl sulfone, a sultone (e.g., 1,3-propanesultone), and sulfone solvents containing ether groups (e.g., 2-methoxyethyl(methyl)sulfone and 2-methoxyethoxyethyl(ethyl)sulfone).

Suitable solvents also include silicon-containing solvents such as a siloxane or silane. For example, hexamethyldisiloxane (HMDS), 1,3-divinyltetramethyldisiloxane, the polysiloxanes, and polysiloxane-polyoxyalkylene derivatives. Some examples of silane solvents include methoxytrimethyl silane, ethoxytrimethyl silane, dimethoxydimethylsilane, methyltrimethoxysilane, and 2-(ethoxy)ethoxytrimethylsilane.

An additive may be included in the electrolyte to improve performance. For example vinylene carbonate (VC), vinyl ethylene carbonate, allyl ethyl carbonate, t-butylene carbonate, vinyl acetate, divinyl adipate, acrylic acid nitrile, 2-vinyl pyridine, maleic anhydride, methyl cinnamate, ethylene carbonate, halogenated ethylene carbonate, $\alpha$-bromo-$\gamma$-butyrolactone, methyl chloroformate, 1,3-propanesultone, ethylene sulfite (ES), propylene sulfite (PS), vinyl ethylene sulfite (VES), fluoroethylene sulfite (FES), 12-crown-4 ether, carbon dioxide ($CO_2$), sulfur dioxide ($SO_2$), and sulfur trioxide ($SO_3$).

The electrochemical cell may also include a solid porous membrane positioned between the negative and positive electrodes. The solid porous membrane may partially or completely replace the liquid electrolyte. The solid porous membrane may comprise a polymer (e.g., polyethylene, polypropylene, or copolymer thereof) or an inorganic material, such as a transition metal oxide (e.g., titania, zirconia, yttria, hafnia, or niobia) or main group metal oxide, such as silicon oxide, which can be in the form of glass fibre. The membrane is typically selectively permeable for the charge carrying ions of the cell (e.g., lithium ions). That is, the membrane is a selective membrane which is selectively porous to lithium ions.

The solid non-porous membrane may comprise a lithium-ion conductor. For example, LLZO (garnet family), LSPO (LISICON family), LGPS (thio-LISICON family), LATP/LAGP (NASICON family), LLTO (perovskite family) and phosphide/sulfide glass ceramics.

The electrochemical cell may be provided in any suitable form, such as a coin cell, pouch cell, prismatic cell, or cylindrical cell form.

*Battery*

The present invention also provides a battery comprising one or more electrochemical cells of the invention. The battery may be a lithium-ion battery.

Where there is a plurality of cells, these may be provided in series or parallel.

A battery of the invention may be provided in a road vehicle, such as an automobile, moped or truck. Alternatively, a battery of the invention may be provided in a rail vehicle, such as a train or a tram. A battery of the invention may also be provided in an electric bicycle (e-bike), a drone, an electric aircraft, and an electric or hybrid boat. Similarly, batteries of the invention may be provided in power tools such as powered drills or saws, garden tools such as lawnmowers or grass trimmers, or home appliances such as toothbrushes or hair dryers. A battery of the invention may be provided in a regenerative braking system. A battery of the invention may be provided in a portable electronic device, such as a mobile phone, laptop or tablet. A battery of the invention may be provided in a power grid management system, an emergency back-up system, powerpack, or remote charging system.

*Process of charging or discharging*

In a further aspect there is provided a method of charging or discharging an electrochemical cell of the sixth aspect or the lithium-ion battery comprising the electrochemical cell.

The method of charging or discharging typically comprises intercalating lithium into the working electrode. The lithium may reduce or oxidise the niobium or metal during (de)intercalation, preferably the niobium.

Typically, the lithium is intercalated into a pentagonal channel and/or a tetragonal channel in the NMO crystal structure. Preferably the lithium is intercalated into a pentagonal channel adjacent a PC filled with a -Nb-O-Nb-O- string.

*Definitions*

The following common definitions are used herein, as determined by the relevant context.

CS: Crystallographic Shear
NMO: Niobium Metal Oxide
NWO: Niobium Tungsten Oxide
PC: Pentagonal Channels
TTB: Tetragonal Tungsten Bronze

The voltage values described herein are made with reference to $Li^+/Li$, as is common in the art.

The C-rate is a measure of the rate at which a battery is discharged relative to its maximum capacity. The C-rate may be defined as the inverse of the number of hours to reach a defined maximum capacity e.g., 10C corresponds to a 6 min discharge or charge time. The maximum capacity may be a theoretical maximum capacity or an empirically determined maximum capacity. For example, a theoretical maximum capacity may be defined relative to one electron transfer per transition metal atom in the active electrode material.

High charging and discharging rates may also be described by reference to (gravimetric) current density relative to the weight of the electrode active material.

As used herein, "wt.%" refers to % calculated on a weight basis.

As used herein, "V/V" refers to ratios calculated on a volume basis.

*Other Preferences*

Each and every compatible combination of the embodiments described above is explicitly disclosed herein, as if each and every combination was individually and explicitly recited.

Various further aspects and embodiments of the present invention will be apparent to those skilled in the art in view of the present disclosure.

"and/or" where used herein is to be taken as specific disclosure of each of the two specified features or components with or without the other. For example, "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

Certain aspects and embodiments of the invention will now be illustrated by way of example and with reference to the figures described above.

*Examples*

The following examples are provided to further illustrate the present invention and are not intended to limit the scope of the invention.

1.1 - *Preparation of NWO phases - varying Nb:W ratio*

The niobium metal oxide bronze phases were prepared by a solvothermal synthesis.

$NbCl_5$ (Alfa aesar, 99%) and $WCl_6$ (Acros Organics, 99.9+ %) were added to ethanol (20mL, Merck) and stirred to fully dissolve the $NbCl_5$ and $WCl_6$ in the ethanol, to form a solution. The solution was stirred until clear, to confirm that the $NbCl_5$ and $WCl_6$ are fully dissolved. The mole ratio of Nb:W was varied by adding different amounts of $NbCl_5$ and $WCl_6$, as shown in Table 1. The amounts shown are for a 1g scale.

**Table** 1 - **Nb:W ratios and amounts**

| Example | Nb:W ratio | Mass of $NbCl_5$ (g) | Mass of $WCl_6$ (g) |
|---|---|---|---|
| Example 1 | 1:1 | 0.74071 | 1.087217 |
| Example 2 | 2:1 | 1.085783 | 0.796858 |
| Example 2.5 | 2.5:1 | 1.197344 | 0.702986 |
| Example 3 | 3:1 | 1.28539 | 0.6289 |
| Comparative Example 4 | 4:1 | 1.415501 | 0.519419 |
| Comparative Example 5 | 5:1 | 1.507028 | 0.442404 |
| Comparative Example 6 | 1:0 | 2.032798 | 0 |

The solution was transferred to an 80 ml (50ml max capacity) Teflon reaction vessel made of PTFE (Anton Paar) and then placed in an alumina jacket (Anton Paar). A magnetic stirrer bar was added to the vessel. With 20 ml of ethanol solution the vessel had about 60ml of headspace when sealed.

The vessel was then sealed and heated at 150 °C for 2 hours in a microwave reactor at 1500W (Anton Paar, Multiwave Pro) under solvothermal conditions and under constant stirring. The ramp rate was 5 °C/min. The pressure was maintained in a range of 18 to 40 bar (1800 kPa to 4000 kPa) during heating, due to the volume of the reaction vessel.

The $NbCl_5$ and $WCl_6$ precipitated from the ethanol solvent. Precipitation was confirmed visually - a white precipitate is formed and separates from the supernatant. The sample was left to cool to room temperature in the reaction vessel. The pressure was then released before opening the vessel to separate the sample by filtration.

The solution was filtered using a Buchner funnel to remove the solvent. The precipitate was washed in ethanol (3 times). The precipitate was then left to dry at 65 °C for 12 h to remove any trace solvent, to leave a dry precipitate.

The dry precipitate was then added to an alumina crucible and calcined in an oven at 850 °C for 12 hours followed by 900 °C for 1.5 hours to provide a niobium metal oxide bronze phase. Calcination was carried out in air at ambient pressure.

Example 1 resulted in the formation of $Nb_2W_2O_{11}$.

Example 2 resulted in the formation of $Nb_{16}W_8O_{64}$.

Example 2.5 resulted in the formation of $Nb_{10}W_4O_{37}$.

Example 3 resulted in the formation of $Nb_{18}W_6O_{63}$.

Comparative Examples 4 and 5 resulted in the formation of a mixture of $Nb_{18}W_6O_{63}$ and T-phase $Nb_2O_5$.

Comparative Example 6 resulted in the formation of T-phase $Nb_2O_5$.

1.2 - *Preparation of NWO phases - varying temperature*

Comparative Example 7 was prepared by solvothermal synthesis in the same way as Example 3 in section 1.1 above. Comparative Example 7 has a Nb:W ratio of 3:1.

However, Comparative Example 7 was calcined in an oven at 1200 °C for 12 hours (opposed to 900 °C for Example 3).

Comparative Example 7 resulted in the formation of a mixture of $Nb_{16}W_5O_{55}$, $Nb_{14}W_3O_{44}$ and $Nb_2WO_8$.

Comparative Example 8 was prepared by a solid-state synthesis following the method described in WO 2019/234248. The product was prepared by grinding together dry powders of $Nb_2O_5$ and $WO_2$ followed by calcination of the mixture at 1200 °C.

Comparative Example 8 resulted in the formation of $Nb_{16}W_5O_{55}$.

*1.3 - Additional Preparations of NWO phases*

The Examples 1a, 2a, 3a, 4a and 5b were synthesised as above for Examples 1, 2, 3, 4 and 5, except the examples were calcined at 800 °C.

Examples 2a, 3a, 4a and 5a were found to have analogous crystal structures to Examples 2, 3, 4 and 5, despite the slightly lower calcination temperature.

*2. 1 - Microscopic Characterization of NWO particles*

Scanning electron microscopy (SEM) was carried to examine the morphology of the dry precipitate and the calcined NWO phases. The SEM sample was prepared by sprinkling powders of the examples onto a carbon tape placed on a SEM stub. SEM was carried out using a Tescan MIRA3, at a voltage of 5 kV and an operating distance of 6 mm. The images were recorded using the MiraTC software.

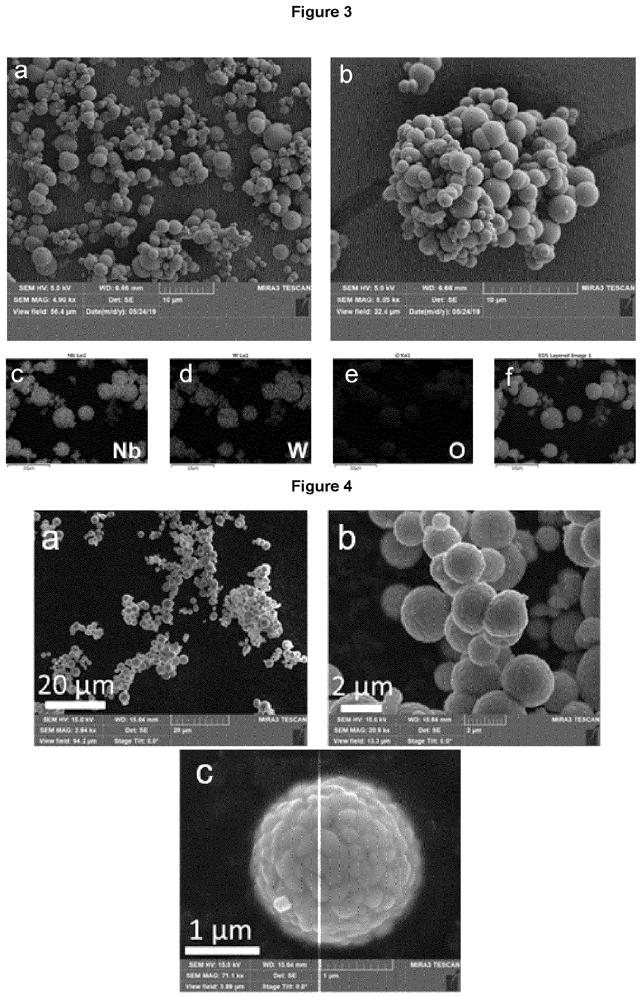

SEM images of the precipitate of Example 3 (after filtering and drying, but before calcination) are shown in Figure 2(a-c) and Figure 3(a-b). The precipitate is shown to be amorphous. The SEM images show a spherical morphology with a primary particle diameter of 1-5 $\mu$m (see Figure 2c). The primary particles aggregate in random, irregular clusters (see Figure 2a) having a diameter of about 20 $\mu$m.

Energy Dispersive X-Ray Spectroscopy (EDS) was also carried out on the precipitate of Example 3 and overlayed onto a SEM image. SEM was carried as described above, except the operating voltage was 30 kV with a working distance of 15 mm. EDS data was collected using the Aztec software from Oxford instruments.

SEM-EDS mapping images for the precipitate of Example 3 (after filtering and drying, but before calcination) are shown in Figure 3 (c-f).

The EDS images for Nb (Figure 3c), W (Figure 3d), and O (Figure 3e) reveal a homogeneous distribution of Nb, W and O atoms within each precipitate particle. This is also illustrated by the uniform colour of the layered image for all of Nb, W and O in Figure 3f.

It is thought that the highly homogeneous distribution of the atoms allows lower calcination temperatures to be used. The molecular-scale mixing achieved by this method overcomes the need for migration of cations across precursor crystallites. The energetic barrier to migration and re-arrangement of the atoms is therefore lower, meaning lower temperatures can be used during calcination. All the phases of Examples 1-3 exhibit identical morphology

SEM images for the NWO phase prepared in Example 3 (after calcination) are shown in Figure 4 (a-c). The NWO phase of Example is shown to have a spherical morphology in the form of spherical secondary particles (see Figure 4c).

The spherical secondary particles have a diameter of about 2-3 $\mu$m and have a near unitary aspect ratio. The sphericity of the particles is high at about 0.95 or more. The surface roughness of the particles is shown to be low, as the primary particles form a compact, tightly packed agglomerate.

The primary particles making up the secondary particle are much smaller and more irregular in shape. The primary particles have a length ranging from about 0.2 to 1 $\mu$m and a width ranging from about 50 to 100 nm. The primary particles are rod shaped.

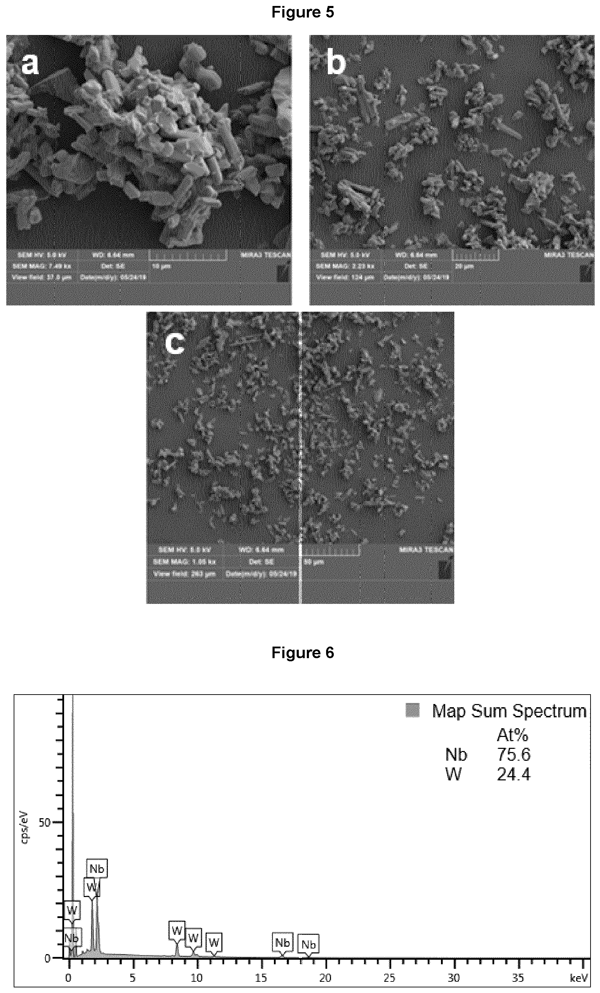

Transmission electron microscopy (TEM) images for the NWO phase prepared in Comparative Example 7 are shown in Figure 5 (a-c). A JEOL ARM200F (Cs-corrected) transmission electron microscope was used in the STEM mode at 200 kV to image and acquire high-resolution EDS data from the NWO oxide particles.

The calcination at higher temperature of 1,200 °C (compared to 900 °C for Example 3) results in a change in morphology of the particles. The TEM image shows rod-like primary particles. The rod-shaped primary particles agglomerate into irregular shaped secondary particles.

Both the primary and secondary particles of Comparative Example 7 have a low sphericity and high surface roughness, compared to the particles of Example 3. As a result, the packing efficiency of Comparative Example 7 is reduced.

An SEM image of the $Nb_{16}W_5O_{55}$ prepared in Comparative Example 8 was also prepared. The SEM image shows an irregular rod like morphology of the particles (see Figure 1).

*2.2 - XRD Characterization of NWO phases*

Energy Dispersive X-Ray Spectroscopy (EDS) was carried out on the $Nb_{18}W_6O_{63}$ prepared in Example 3 (see Figure 6).

Atomic resolution STEM-EDS datasets were acquired under low-dose conditions to reduce electron beam damage on the specimen: dwell time = 0.01 ms, spot size = 6 C, aperture size = 20 $\mu$m, and electron beam current = 18 pA. Given the low electron beam current and hence the relatively low intensities of the X-rays emitted from the specimen, multi-frame STEM-EDS data acquisition was used. Each dataset typically consisted of 500-1000 frames, and then these frames were aligned and processed using a Python-based multi-dimensional data analysis toolbox - HyperSpy. The aligned images and spectra were then summed over the entire the dataset, and principal component analysis (PCA) and non-negative matrix factorization (NMF) were employed to denoise the data and enhance the signal to noise ratio (SNR).

The EDS maps show the novel ordering of the Nb and W cations in the TTB lattice, in particular the presence of -Nb-O-Nb-O- strings in the PCs and -W-O-W-O- strings in the inner square and outer square of octahedral sites.

Powder X-ray diffraction (PXRD) of NWO phases of Examples 1-6 was carried out and the diffraction patterns are shown in Figures 7, 8 and 9(a-b).

PXRD was carried out using light of a wavelength of 1.5406 Å (Cu K-$\alpha$). A nickel filter prior to the detector was used to filter the K$\beta$ radiation. XRPD data was obtained by exposing the NMO sample to Cu-K$\alpha$ X-ray radiation, using a Panalytical Empyrean powder diffractometer. Variable temperature (VT) measurements were performed with a XRK900 (Anton Paar) reactor chamber as an attachment. The samples were tightly packed on a glass disc placed on a spinning sample stage. The data were recorded over a 2-100° 2$\theta$ range (step size of 0.008° 2$\theta$, counting time 457.2 s step$^{-1}$). The Cu-K$\alpha$ radiation was generated by supplying a Cu anode with a 40 kV potential at a current of 40 mA.

The PXRD patterns of the NWO prepared in Examples 1, 2, 2.5 and 3 with different Nb:W ratios exhibit reflections with similar 2$\theta$ values (see Figure 7). This is suggestive of a common crystal structure for all of the materials.

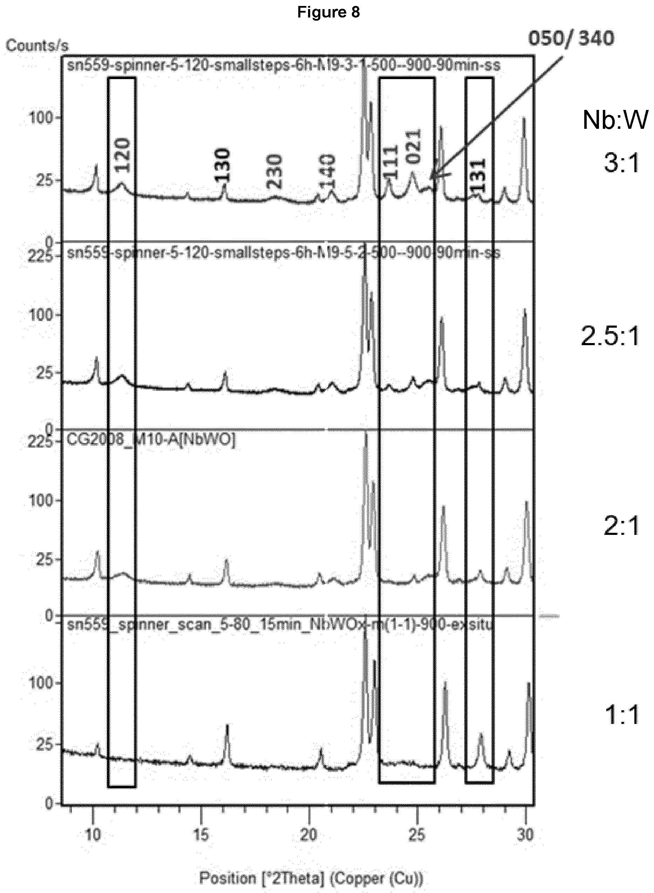

The reflections having a 2$\theta$ range 5 to 30 degrees is PXRD pattern of the NWO prepared in Examples 1, 2, 2.5 and 3 are shown in Figure 8. The reflections are marked on the PXRD pattern.

The observed 2$\theta$ values for Example 1 ($Nb_2W_2O_{11}$) are shown in Table 2A, along with the corresponding d spacing and hkl indices. The top 10 most intense 2$\theta$ peaks for Example 1 are shown in Table 2B.

## Table 2A - 2$\theta$ values for Example 1 ($Nb_2W_2O_{11}$)

| 2$\theta$ (degrees) | d spacing (Å) | hkl indices | 2$\theta$ (degrees) | d spacing (Å) | hkl indices |
|---|---|---|---|---|---|
| 10.23 | 8.64 | 110 | 34.90 | 2.57 | 321 |
| 14.48 | 6.11 | 200 | 36.74 | 2.44 | 430 |
| 16.20 | 5.47 | 210 | 37.22 | 2.41 | 401 |
| 20.54 | 4.32 | 220 | 37.49 | 2.40 | 510 |
| 22.56 | 3.94 | 001 | 37.96 | 2.37 | 411 |
| 22.99 | 3.86 | 310 | 38.70 | 2.33 | 331 |
| 24.83 | 3.58 | 111 | 39.68 | 2.27 | 520 |
| 26.27 | 3.39 | 320 | 40.13 | 2.25 | 421 |
| 26.91 | 3.31 | 201 | 41.77 | 2.16 | 440 |
| 27.90 | 3.20 | 211 | 43.12 | 2.10 | 530 |
| 29.20 | 3.06 | 400 | 43.54 | 2.08 | 431 |
| 30.12 | 2.96 | 410 | 44.20 | 2.05 | 511 |
| 30.69 | 2.91 | 221 | 44.44 | 2.04 | 600 |
| 31.02 | 2.88 | 330 | 45.09 | 2.01 | 610 |
| 32.43 | 2.76 | 311 | 46.06 | 1.97 | 002 |
| 32.74 | 2.73 | 420 | 46.26 | 1.97 | 521 |
| | | | 46.98 | 1.93 | 620 |
| | | | 47.31 | 1.92 | 112 |

| | | | | | |
|---|---|---|---|---|---|
| 47.60 | 1.91 | 540 | 53.29 | 1.72 | 541 |
| 47.99 | 1.90 | 441 | 53.80 | 1.70 | 322 |
| 48.54 | 1.89 | 202 | 54.06 | 1.69 | 640 |
| 49.14 | 1.85 | 212 | 54.62 | 1.68 | 720 |
| 49.20 | 1.85 | 531 | 55.47 | 1.66 | 402 |
| 50.02 | 1.82 | 630 | 55.53 | 1.65 | 631 |
| 50.40 | 1.81 | 601 | 56.03 | 1.64 | 412 |
| 50.93 | 1.79 | 222 | 56.57 | 1.63 | 332 |
| 50.99 | 1.79 | 611 | 57.37 | 1.60 | 730 |
| 52.09 | 1.75 | 312 | 57.65 | 1.60 | 422 |
| 52.72 | 1.73 | 621 | 58.25 | 1.58 | 551/711 |
| 52.93 | 1.73 | 550 | 58.98 | 1.56 | 650 |

**Table 2B - Top 10 2θ values for Example 1 ($Nb_2W_2O_{11}$)**

| Rel. Int. [%] | 2θ (degrees) | d-spacing [Å] | hkl |
|---|---|---|---|
| 100 | 22.56 | 3.94 | 001 |
| 49.06 | 22.99 | 3.86 | 310 |
| 32.85 | 30.12 | 2.96 | 410 |
| 32.69 | 26.27 | 3.39 | 320 |
| 20.49 | 32.43 | 2.76 | 311 |
| 16.13 | 52.93 | 1.73 | 550 |
| 14.91 | 37.96 | 2.37 | 411 |
| 14.42 | 34.90 | 2.57 | 321 |
| 12.82 | 32.74 | 2.73 | 420 |
| 11.95 | 16.20 | 5.47 | 210 |

The observed 2θ values for Example 2A ($Nb_{16}W_8O_{64}$) are shown in Table 3A, along with the corresponding d spacing and hkl indices. The top 10 most intense 2θ peaks for Example 2 are shown in Table 3B.

**Table 3A - 2θ values for Example 2 ($Nb_{16}W_8O_{64}$)**

| 2θ (degrees) | d spacing (Å) | hkl indices | 2θ | d | hkl |
|---|---|---|---|---|---|
| 10.17 | 8.69 | 020 | 21.06 | 4.22 | 140/410 |
| 11.37 | 7.77 | 120/210 | 21.68 | 4.10 | 330 |
| 14.40 | 6.14 | 220 | 22.53 | 3.94 | 001 |
| 15.28 | 5.79 | 030 | 22.87 | 3.89 | 240/420 |
| 16.11 | 5.50 | 130/310 | 23.11 | 3.85 | 011 |
| 18.39 | 4.82 | 230/320 | 23.67 | 3.76 | 111 |
| 20.42 | 4.34 | 040 | 24.77 | 3.59 | 021 |
| | | | 25.30 | 3.52 | 121/211 |

| | | | | | |
|---|---|---|---|---|---|
| 25.61 | 3.48 | 050/340/430 | 43.34 | 2.09 | 171/551/711 |
| 26.12 | 3.41 | 150/510 | 44.00 | 2.06 | 461/641 |
| 26.84 | 3.32 | 221 | 44.18 | 2.05 | 660 |
| 27.33 | 3.26 | 031 | 44.32 | 2.04 | 271/721 |
| 27.62 | 3.23 | 250/520 | 44.51 | 2.03 | 380/830 |
| 27.82 | 3.21 | 131/311 | 44.83 | 2.02 | 570/750 |
| 29.04 | 3.07 | 440 | 45.91 | 1.98 | 371/731 |
| 29.23 | 3.05 | 231/321 | 45.99 | 1.97 | 002 |
| 29.96 | 2.98 | 350/530 | 46.30 | 1.96 | 012 |
| 30.59 | 2.92 | 041 | 46.61 | 1.95 | 112 |
| 30.85 | 2.90 | 060 | 46.71 | 1.94 | 480/840 |
| 31.03 | 2.88 | 141/411 | 46.84 | 1.94 | 561/651 |
| 31.28 | 2.86 | 160/610 | 47.02 | 1.93 | 090 |
| 31.46 | 2.84 | 331 | 47.22 | 1.92 | 022 |
| 32.31 | 2.77 | 241/421 | 47.33 | 1.92 | 190/910 |
| 32.56 | 2.75 | 260/620 | 47.53 | 1.91 | 122/212 |
| 32.97 | 2.71 | 450/540 | 47.76 | 1.90 | 081 |
| 34.36 | 2.61 | 051/341/441 | 48.06 | 1.89 | 181/471/741/811 |
| 34.59 | 2.59 | 360/630 | 48.24 | 1.89 | 290/670/760/920 |
| 34.76 | 2.58 | 151/511 | | | |
| 35.93 | 2.50 | 251/521 | 48.44 | 1.88 | 222 |
| 36.15 | 2.48 | 070 | 48.74 | 1.87 | 032 |
| 36.53 | 2.46 | 170/550/710 | 48.96 | 1.86 | 281/821 |
| | | | 49.04 | 1.86 | 132/312 |
| 37.06 | 2.42 | 441 | 49.43 | 1.84 | 580/850 |
| 37.28 | 2.41 | 460/640 | 49.73 | 1.83 | 390/930 |
| 37.65 | 2.39 | 270/720 | 49.93 | 1.83 | 232/322 |
| 37.80 | 2.38 | 351/531 | 50.15 | 1.82 | 661 |
| 38.53 | 2.33 | 061 | 50.44 | 1.81 | 381/831 |
| 38.89 | 2.31 | 161/611 | 50.73 | 1.80 | 571/751 |
| 39.46 | 2.28 | 370/730 | 50.81 | 1.80 | 042 |
| 39.96 | 2.25 | 261/621 | 51.10 | 1.79 | 142/412 |
| 40.30 | 2.24 | 451/541 | 51.38 | 1.78 | 332 |
| 40.51 | 2.23 | 560/650 | 51.76 | 1.76 | 490/940 |
| 41.54 | 2.17 | 080 | 51.96 | 1.76 | 242/422 |
| 41.68 | 2.17 | 361/631 | 52.05 | 1.76 | 770 |
| 41.87 | 2.16 | 180/470/740/810 | 52.45 | 1.74 | 481/841 |
| | | | 52.62 | 1.74 | 0100/680/860 |
| 42.88 | 2.11 | 280/820 | | | |
| 43.01 | 2.10 | 071 | 52.74 | 1.73 | 091 |

| 52.90 | 1.73 | 1100/1010 |
|---|---|---|
| 53.02 | 1.73 | 191/911 |
| 53.37 | 1.72 | 052/342/432 |
| 53.65 | 1.71 | 152/512 |
| 53.74 | 1.70 | 2100/1020 |
| 53.86 | 1.70 | 291/671/761/921 |
| 54.30 | 1.69 | 590/950 |
| 54.49 | 1.68 | 252/522 |
| 54.97 | 1.67 | 581/851 |
| 55.13 | 1.66 | 3100/1030 |
| 55.24 | 1.66 | 391/931 |
| 55.31 | 1.66 | 442 |
| 55.86 | 1.64 | 352/532 |

| 56.22 | 1.63 | 780/870 |
|---|---|---|
| 56.40 | 1.63 | 062 |
| 56.67 | 1.62 | 162/612 |
| 57.03 | 1.61 | 4100/1040 |
| 57.14 | 1.61 | 491/941 |
| 57.30 | 1.61 | 690/960 |
| 57.40 | 1.60 | 771 |
| 57.48 | 1.60 | 262/622 |
| 57.42 | 1.60 | 452/542 |
| 57.94 | 1.59 | 0101/681/861 |
| 58.62 | 1.58 | 1101/1011 |
| 58.36 | 1.58 | 0110 |
| 58.62 | 1.57 | 1 11 0/11 1 0 |

**Table 3B - Top 10 2θ values for Example 2 (Nb$_{16}$W$_8$O$_{64}$)**

| Rel. Int. [%] | 2θ (degrees) | d-spacing [Å] | hkl |
|---|---|---|---|
| 100 | 22.53 | 3.94 | 001 |
| 49.85 | 22.87 | 3.89 | 240/420 |
| 35.76 | 29.96 | 2.98 | 350/530 |
| 33.11 | 26.12 | 3.41 | 150/510 |
| 20.15 | 32.31 | 2.77 | 241/421 |
| 16.2 | 52.58 | 1.74 | 0100 |
| 14.79 | 52.66 | 1.74 | 680/860 |
| 14.24 | 37.80 | 2.38 | 351/531 |
| 14.23 | 32.56 | 2.75 | 260/620 |
| 12.9 | 34.76 | 2.58 | 151/511 |

The observed 2θ values for Example 3 (Nb$_{18}$W$_6$O$_{63}$) are shown in Table 4A, along with the corresponding d spacing and hkl indices. The top 10 most intense 2θ peaks for Example 3 are shown in Table 4B.

**Table 4A - 2θ values for Example 3 (Nb$_{18}$W$_6$O$_{63}$)**

| 2θ (degrees) | d spacing (Å) | hkl indices |
|---|---|---|
| 10.15 | 8.70 | 020 |
| 11.36 | 7.79 | 120/210 |
| 14.38 | 6.15 | 220 |
| 15.26 | 5.80 | 030 |

| 16.09 | 5.50 | 130/310 |
|---|---|---|
| 18.36 | 4.83 | 230/320 |
| 20.39 | 4.34 | 040 |
| 21.02 | 4.22 | 140/410 |
| 21.64 | 4.10 | 330 |
| 22.52 | 3.94 | 001 |

| | | |
|---|---|---|
| 22.83 | 3.89 | 240/420 |
| 23.10 | 3.85 | 011 |
| 23.67 | 3.76 | 111 |
| 24.76 | 3.59 | 021 |
| 25.29 | 3.52 | 121/211 |
| 25.56 | 3.48 | 050/340/430 |
| 26.08 | 3.41 | 150/510 |
| 26.82 | 3.32 | 221 |
| 27.32 | 3.26 | 031 |
| 27.57 | 3.23 | 250/520 |
| 27.82 | 3.21 | 131/311 |
| 28.99 | 3.08 | 440 |
| 29.21 | 3.05 | 231/321 |
| 29.90 | 2.99 | 350/530 |
| 30.56 | 2.92 | 041 |
| 30.79 | 2.90 | 060 |
| 31.00 | 2.88 | 141/411 |
| 31.23 | 2.86 | 160/610 |
| 31.43 | 2.84 | 331 |
| 32.28 | 2.77 | 241/421 |
| 32.50 | 2.75 | 260/620 |
| 32.92 | 2.72 | 450/540 |
| 34.32 | 2.61 | 051/341/431 |
| 34.53 | 2.60 | 360/630 |
| 34.72 | 2.58 | 151/511 |
| 35.89 | 2.50 | 251/521 |
| 36.09 | 2.49 | 070 |
| 36.47 | 2.46 | 550/170/710 |
| 37.02 | 2.43 | 441 |
| 37.21 | 2.41 | 460/640 |
| 37.58 | 2.39 | 270/720 |
| 37.76 | 2.38 | 351/531 |
| 38.49 | 2.34 | 061 |
| 38.84 | 2.32 | 161/611 |
| 39.39 | 2.29 | 370/730 |
| 39.91 | 2.26 | 261/621 |
| 40.25 | 2.24 | 451/541 |
| 40.44 | 2.23 | 560/650 |

| | | |
|---|---|---|
| 41.46 | 2.18 | 080 |
| 41.68 | 2.17 | 361/631 |
| 41.80 | 2.16 | 180/470/740/810 |
| 42.80 | 2.11 | 280/820 |
| 42.96 | 2.10 | 071 |
| 43.29 | 2.09 | 171/551/711 |
| 43.94 | 2.06 | 461/641 |
| 44.11 | 2.05 | 660 |
| 44.26 | 2.04 | 271/721 |
| 44.43 | 2.04 | 380/830 |
| 44.47 | 2.02 | 570/750 |
| 45.84 | 1.98 | 371/731 |
| 45.98 | 1.97 | 002 |
| 46.28 | 1.96 | 012 |
| 46.60 | 1.95 | 112 |
| 46.63 | 1.95 | 480/840 |
| 46.78 | 1.94 | 561/651 |
| 46.94 | 1.93 | 090 |
| 47.21 | 1.92 | 022 |
| 47.24 | 1.92 | 190/910 |
| 47.52 | 1.91 | 122/212 |
| 47.69 | 1.90 | 081 |
| 47.99 | 1.89 | 181/471/741/811 |
| 48.15 | 1.89 | 290/670/760/920 |
| 48.42 | 1.88 | 222 |
| 48.72 | 1.87 | 032 |
| 48.89 | 1.86 | 281/821 |
| 49.02 | 1.86 | 132/312 |
| 49.35 | 1.85 | 580/850 |
| 49.64 | 1.84 | 390/930 |
| 49.90 | 1.83 | 232/322 |
| 50.07 | 1.82 | 661 |
| 50.37 | 1.81 | 381/831 |
| 50.66 | 1.80 | 571/751 |
| 50.78 | 1.80 | 042 |
| 51.07 | 1.79 | 142/412 |
| 51.36 | 1.78 | 332 |
| 51.67 | 1.77 | 490/940 |

| | | |
|---|---|---|
| 51.93 | 1.76 | 242/422 |
| 51.96 | 1.76 | 770 |
| 52.38 | 1.75 | 481/841 |
| 52.52 | 1.74 | 0100/680/860 |
| 52.66 | 1.74 | 091 |
| 52.81 | 1.73 | 1100/1010 |
| 52.94 | 1.73 | 191/911 |
| 53.34 | 1.72 | 052/342/432 |
| 53.62 | 1.71 | 152/512 |
| 53.65 | 1.71 | 2100/1020 |
| 53.78 | 1.70 | 291/671/761/921 |
| 54.20 | 1.69 | 590/950 |
| 54.45 | 1.68 | 252/522 |
| 54.89 | 1.67 | 581/851 |
| 55.03 | 1.67 | 3100/1030 |
| 55.16 | 1.66 | 391/931 |
| 55.28 | 1.66 | 442 |
| 55.82 | 1.65 | 352/532 |
| 56.12 | 1.64 | 780/870 |
| 56.36 | 1.63 | 062 |
| 56.63 | 1.62 | 162/612 |
| 56.92 | 1.62 | 4100/1040 |
| 57.05 | 1.61 | 491/941 |
| 57.19 | 1.61 | 690/960 |
| 57.32 | 1.61 | 771 |
| 57.43 | 1.60 | 262/622 |
| 57.70 | 1.60 | 452/542 |
| 57.85 | 1.59 | 0101/681/861 |
| 58.11 | 1.59 | 1101/1011 |
| 58.25 | 1.58 | 0110 |
| 58.52 | 1.58 | 1 11 0/11 1 0 |

**Table 4B - Top 10 2θ values for Example 3 ($Nb_{18}W_6O_{63}$)**

| Rel. Int. [%] | 2θ (degrees) | d-spacing [Å] | hkl |
|---|---|---|---|
| 100 | 22.52 | 3.94 | 001 |

(continued)

| Rel. Int. [%] | 2θ (degrees) | d-spacing [Å] | hkl |
|---|---|---|---|
| 53.44 | 22.83 | 3.89 | 240/420 |
| 41.27 | 29.90 | 2.99 | 350/530 |
| 35.59 | 26.08 | 3.41 | 150/510 |
| 22.79 | 32.28 | 2.77 | 241/421 |
| 20.59 | 52.52 | 1.74 | 0100/680/860 |
| 20.46 | 29.90 | 2.99 | 350/530 |
| 17.59 | 32.50 | 2.75 | 260/620 |
| 14.24 | 37.76 | 2.38 | 351/531 |
| 13.48 | 30.79 | 2.90 | 060 |

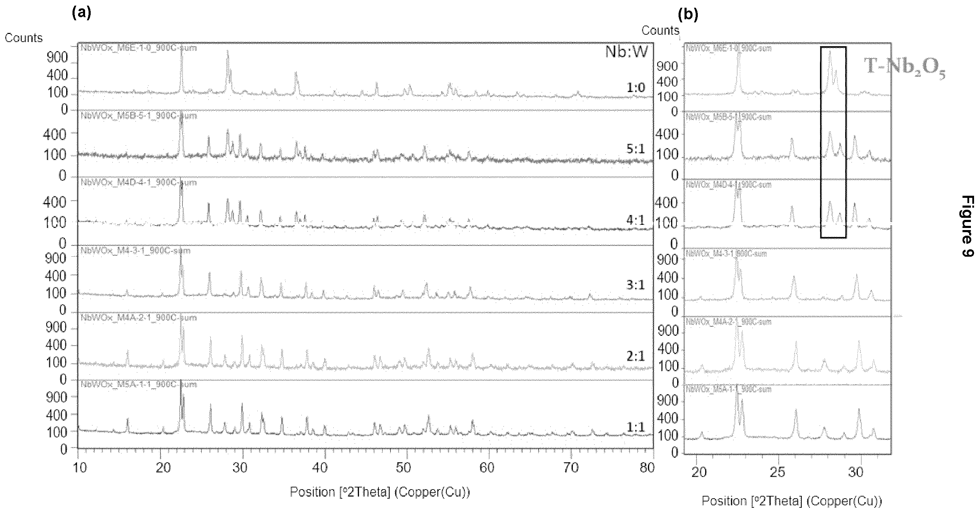

The PXRD patterns of the NWO prepared in comparative Examples 4, 5 and 6 are shown alongside Examples 1, 2, 2.5 and 3 in Figure 9a and 9b. Figure 9b shows the reflections having a 2θ range 5 to 30 degrees.

Comparative Example 4, 5 and 6 show the presence of T-phase $Nb_2O_5$ and $Nb_{18}W_6O_{63}$. Additional reflections at around 27° and 28° are present in Examples 4-6, but not in Examples 1, 2, 2.5 and 3. These reflections are thought to be due to the presence of T-phase $Nb_2O_5$.

The comparative NWO phases have XRD patterns which are distinct from the XRD peaks of the present invention. Reference XRD patterns are provided in the literature for T-$Nb_2O_5$ (see Tamura *et al.*), $Nb_{16}W_5O_{55}$ (see Roth *et al.*), $Nb_{14}W_3O_{44}$ (see Roth *et al.*), and $Nb_2WO_8$ (see Lundberg).

This suggests the excess Nb present in the solution of comparative Examples 4, 5 and 6 is precipitated during calcination as the T-phase $Nb_2O_5$.

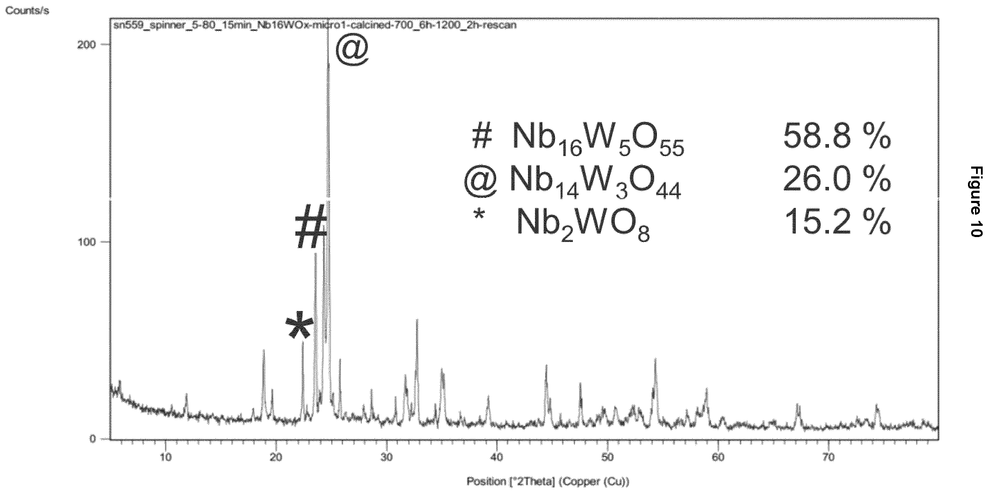

PXRD of Comparative Example 7 was carried out and the diffraction pattern is shown in Figure 10.

The PXRD of Comparative Example 7 shows that the presence of a mixture of NWO phases, such as $Nb_{16}W_5O_{55}$, $Nb_{14}W_3O_{44}$, $Nb_{12}WO_{33}$ and $Nb_2WO_8$. The relative intensity of the 2θ values was used to calculate that each of the NWO phases was present at 58.8% ($Nb_{16}W_5O_{55}$), 26.0% ($Nb_{14}W_3O_{44}$) and 15.2% ($Nb_2WO_8$).

These phases do not have a crystal structure of the present invention. Instead, the $Nb_{16}W_5O_{55}$, $Nb_{14}W_3O_{44}$, and $Nb_{12}WO_{33}$ phases have a block structure, wherein the block sizes are 5×4, 4×4 and 4×3 respectively (see Koçer *et al.*). $Nb_2WO_8$ has a bronze structure with the arrangement of pentagonal channels different from the structure of the present invention (see Lundberg *et al.*). $Nb_2WO_8$ also does not have the cation ordering seen in the examples of the present invention. In $Nb_2WO_8$ the PCs are randomly occupied by either Nb or W, whereas in the present invention the PCs are only filled with -Nb-O-Nb-O- strings, to provide greater cation ordering.

This difference in structure can be confirmed by the PXRD, using profile matching. For example, a multi-phase Rietveld refinement was performed with all the phases to fit intensity of all the peaks in the PXRD pattern.

It is thought that the higher temperature calcination results in the formation of these more thermodynamically stable crystal structures. However, as shown by the SEM images discussed above (see Figure 5), the morphology of these crystals is highly irregular compared to the spherical secondary particles of Examples 1-3. The formation of large irregularly shaped rods at such high temperatures is thought to be due to the crystal growth of these more thermodynamically stable crystal structures.

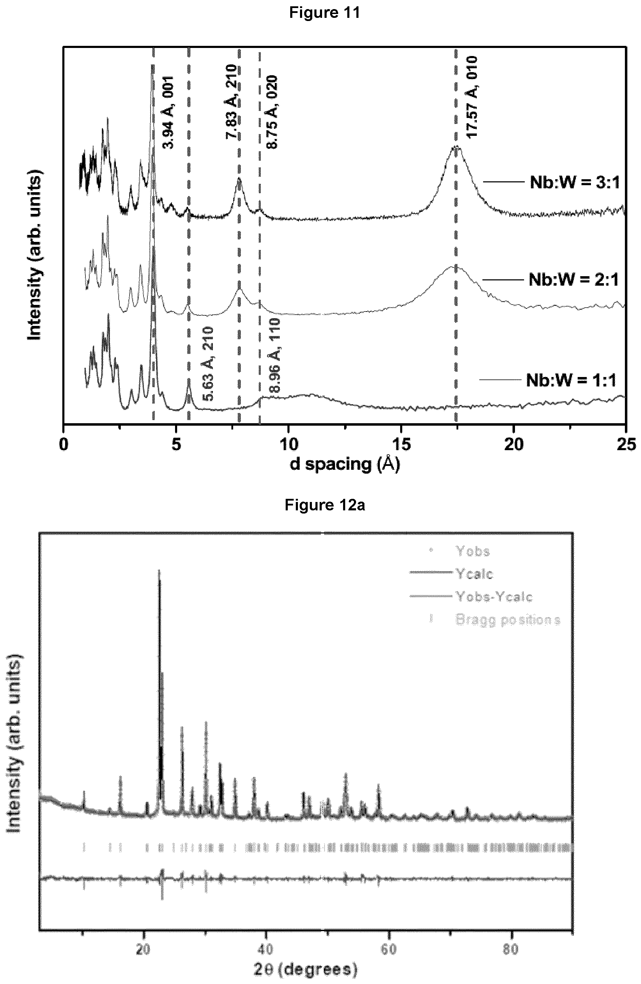

Neutron diffraction of NWO phases of Examples 1, 2 and 3 was carried out and the diffraction patterns are shown in Figure 11.

The phases of Examples 1, 2 and 3 all show peaks at 3.94 Å corresponding to the 001 reflection, 5.63 Å for the 210 reflection and 8.75 Å for the 210 reflection.

The phases of Examples 2 and 3 show stronger peaks at 7.83 Å and 17.57 Å corresponding to the 210 and 010 reflections. The peak at 17.57 Å is attributed to a parameter of the supercell, as explained below.

*2.3 - Crystallographic Analysis*

Rietveld refinement was used to analyse the XRD and neutron diffraction of the materials of Example 1, 2 and 3 (shown above) and to characterise the crystal structure. The structure was further confirmed using HR-STEM EDS studies, described above.

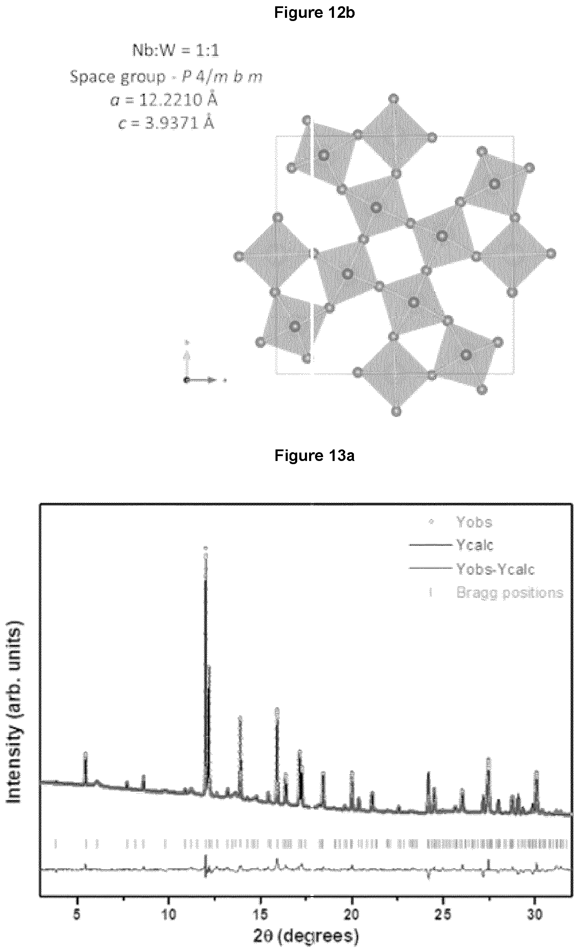

Example 1 ($Nb_2W_2O_{11}$) crystallizes in the space group P4/mbm (a = 12.2210 Å, c = 3.9371 Å) (Figure 12).

By increasing the Nb: W to 2:1 as in Example 2 ($Nb_{16}W_8O_{64}$), a new family of reflections, hk0 with h+k = odd, was observed in the PXRD (Figure 8). Specifically, the reflections at hkl = 120, 230, 140, 111, 021 and 050/340 appear in the XRD of Example 2, but are absent in the XRD of Example 1. These reflections increase in intensity as the Nb content is increased.

This could only be indexed to a supercell with a = 17.4054 Å, c = 3.9450 Å (space group P4), where the c parameter is retained, and a parameter is increased by a factor of √2. This is also accompanied by a corresponding decrease in the intensity of hk0 family of reflections with h+k = even.

The trend in variation of the intensity of hk0 reflections continues as Nb:W ratio is further increased to 3:1 as in Example 3 ($Nb_{18}W_6O_{63}$). The crystal structure of Example 3 retains the supercell size, which is thought to be due to the lower W concentration (Figure 13).

The relationship between the unit cell for Example 1 ($Nb_2W_2O_{11}$) and the super cell for Example 2 ($Nb_{16}W_8O_{64}$) and Example 3 ($Nb_{18}W_6O_{63}$) is shown in Figure 13c. The unit cell includes four PCs. The super cell includes 8 PCs. The lattice parameter of the super cell corresponds to the diagonal of the unit cell. Hence, when the unit cell has a lattice parameter a × a, the super cell has a lattice parameter equal to √2a × √2a.

The supercell formation is further confirmed using neutron diffraction, where the reflections below the 3.9 Å (c parameter) are similar in all the 3 diffraction patterns (see Figure 11). The $Nb_2W_2O_{11}$ (Nb:W = 1:1) of Example 1 shows a broad peak at 12.2 Å (a parameter), which is absent for Examples 2 and 3. The $Nb_{16}W_8O_{64}$ (Nb:W = 2:1) of Example 2 and $Nb_{18}W_6O_{63}$ (Nb:W = 3:1) of Example 3 instead have the peak corresponding to a parameter at 17.57 Å.

The neutron powder diffraction measurements were performed at room temperature on the time-of-flight powder diffractometers POLARIS and GEM at the ISIS pulsed spallation neutron source in the United Kingdom. Samples were loaded into 6 mm diameter vanadium cans. Data was collected from diffraction banks 1-5 of the GEM for $Nb_2W_2O_{11}$ and $Nb_{16}W_8O_{64}$, and Polaris for $Nb_{18}W_6O_{63}$. The data from banks 1 and 4 were used for analysis due to their appropriate d-spacing range (-1.5 - 25 Å, and ~1-3.7). The final structures were determined using a combined Rietveld refinement of PXRD and neutron diffraction data using the FULLPROF suite of programs.

Further analysis was carried out using high resolution scanning transmission electron microscopy (HAADF HR-STEM). A JEOL ARM200F (Cs-corrected) transmission electron microscope was used in the STEM mode at 200 kV to image and acquire high-resolution EDS data from the NbWO oxide particles. Atomic resolution STEM-EDS datasets were acquired under these low-dose conditions to reduce electron beam damage on the specimen: dwell time = 0.01 ms, spot size = 6 C, aperture size = 20 μm, and electron beam current = 18 pA. Given the rather low electron beam current and hence the relatively low intensities of the X-rays emitted from the specimen, a multi-frame STEM-EDS data acquisition was used. Each dataset typically consisted of 500-1000 frames, and then these frames were aligned and processed using a Python-based multi-dimensional data analysis toolbox - HyperSpy. The aligned images and spectra were then summed over the entire the dataset, and machine learning tools such as principal component analysis (PCA) and non-negative matrix factorization (NMF) were employed to denoise the data and enhance the signal to noise ratio (SNR).

The HAADF HR-STEM imaging provides evidence for ordering of pentagonal channels (PCs) within the crystal structure, and the ordering of cation and vacant PCs. In Example 1 ($Nb_2W_2O_{11}$) the PCs are partially and randomly occupied (Figure 14 (a)) and hence have a smaller a parameter of 12.2Å. On increasing the Nb/W content as in Example 2 ($Nb_{16}W_8O_{64}$), 50% of the PCs remain completely vacant and are arranged in a squared pattern (Figure 15(c)). The remaining PCs are partially occupied by cations (Figure 11(b)). On further increasing the Nb/W for Example 3 ($Nb_{18}W_6O_6$), the phase retains the same structure as for Example 2 (Figure 14(c)) where 50% of the PCs remain completely vacant and are arranged in a squared pattern.

Higher magnification HAADF HR-STEM images for Example 3 ($Nb_{18}W_6O_{63}$) are shown in Figure 15(a). The cations present within and around the square pattern of ordered vacant PCs are visibly brighter compared to the other cations (Figure 15(a)). It is thought this is further evidence of the ordering of the PC vacancies and the formation of a supercell (√2a). It also suggests cation ordering where the Nb and W ions occupy specific rows of atoms (along the crystallographic c axis) within the unit cell.

A bandgap filter and threshold were applied to the HAADF-HR(S)TEM image of Example 3 ($Nb_{18}W_6O_{63}$), to provide a higher contrast HAADF-HR(S)TEM image (see Figure 16(b)). The bright spots can be more clearly distinguished, and further confirms the presence of a supercell structure having where 50% of the PCs are filled with -M-O-M-O-strings and 50% of the PCs are vacant, and the PCs form squares of four pentagonal channels.

A bandgap filter and threshold were also applied to the HAADF-HR(S)TEM image of Example 1 ($Nb_2W_2O_{11}$) to increase the contrast (see Figure 17A(b). The image in Figure 17A(b) shows that all the spots remain bright, except for the PCs which have varied brightness. This supports the partial and random occupancy of the PCs in the structure of Example 1.

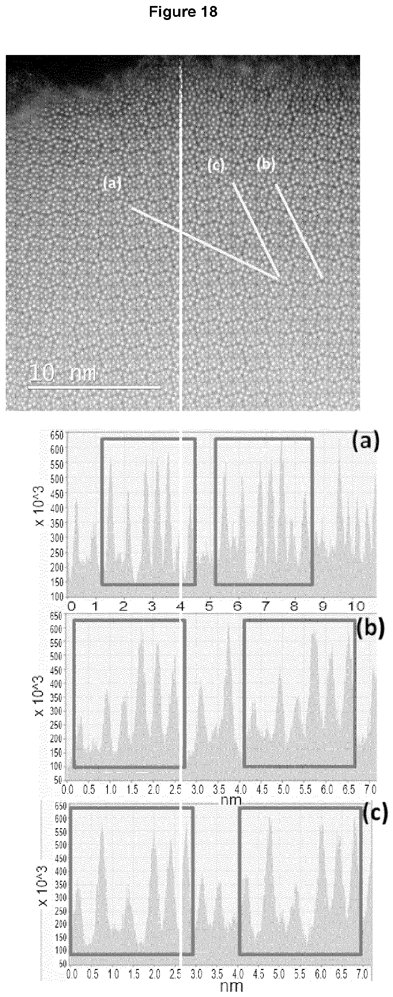

Additional characterisation and modelling showed that in Example 1 the Nb and W cations were initially equally distributed between two octahedral (2c (0, 0.5, 0.5) and 8j (x, y, 0.5)) and one pentagonal (4h (x, 0.5+x, 0.5)) cation site (Figure 17now). In addition to the existing oxygen positions in the $Pb_{0.26}WO_3$ structural model, an additional oxygen atom was placed below the cation in the pentagonal cation site to form a 7 coordinated pentagonal bipyramidal (PB) site. The cation positions and their occupancies were refined to investigate any preferential occupancy by Nb and W of the octahedral and PB cation sites, the final refined structure (Figure 18c) indicating that the Nb and W ions were distributed across all octahedral sites, with a slight preference for W in the 2c site. The PB site displayed a low occupancy that could only be accounted for with a partial (1/3) occupancy of this site by Nb only, to maintain the overall Nb/W ratio of 1.

The layer thickness of the metal oxide polyhedral in Example 1 is calculated to be about 3.9 Å, which corresponds to the c parameter (Figure 17now)). Atomic-resolution, HAADF-HR(S)TEM imaging of the *a-b* plane captures the -M-O-M-O- channels along this axis (Figure 17B (d)) and the overlay with the structure model (one unit cell) indicates the atomic positions of Nb and W. The FFT-derived lattice parameter (a ~ 13 Å) closely matches the value obtained from PXRD data. The intensity of atomic columns in the HAADF-HR(S)TEM image represents the sum of intensities of the -M-O-M-O- strings throughout the sample thickness. The varying intensity of the atomic columns in a HAADF image can be attributed to variations in the occupancy of a single element in the lattice position and/or different elements occupying the same lattice position. Recent advancements in aberration-corrected (S)TEM combined with EDS have enabled atomic-resolution elemental mapping of a crystal structure, which we use here to confirm the preferential occupancy of Nb and W on the octahedral and PB sites obtained from the XRD refinements. High-resolution (S)TEM-HAADF images and the corresponding EDS elemental maps of Example 1 along the c-axis are shown in Figure 18B(d-g). In the atomic resolution EDS map, the bright spots highlighted by cyan circles correspond to the 2c octahedral site, which, on the basis of the XRD refinements, is preferentially occupied by W atoms. The spots indicated by the yellow circles correspond to the octahedral site 8j that is partially filled by W atoms, suggesting a shared occupancy of W and Nb atoms. The magenta circles correspond to the PB site 4h, which appears bright in the Nb-map but is missing in the W-map, confirming that the site is occupied only by Nb atoms. This observation is further supported by the overlay EDS map in Figure 18B(g).

The line intensity profile of atoms in HAADF STEM images of Example 3 ($Nb_{18}W_6O_{63}$) taken along three different directions (a, b and c within the ab plane) are shown in Figure 18. The intensity profiles show periodic and repeating patterns in all directions, suggesting that the cations are ordered throughout the lattice.

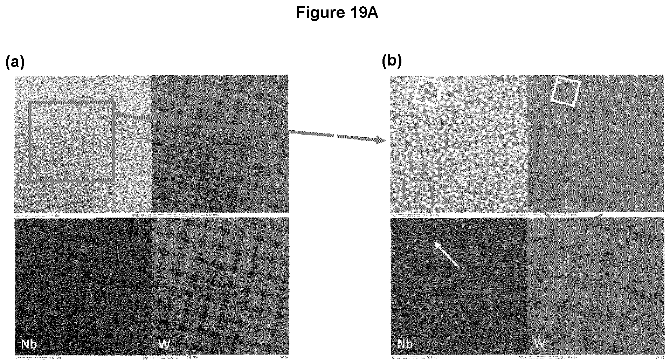

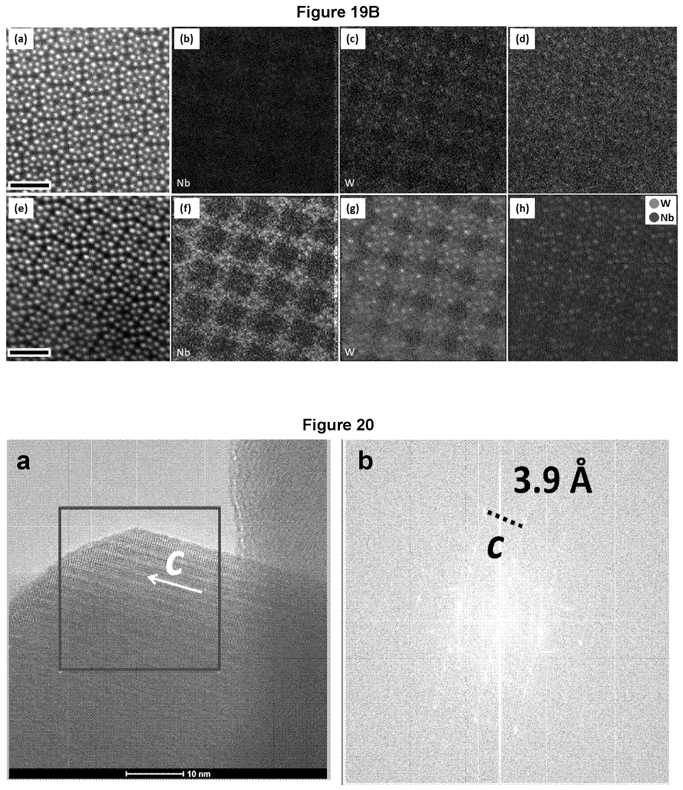

Energy Dispersive X-Ray Spectroscopy (EDS) was also carried out on Example 3 ($Nb_{18}W_6O_{63}$) and overlayed onto a STEM image (see Figure 19a). STEM-EDS was performed to obtain atomic resolution mapping to identify and distinguish the atoms in different rows along the c crystallographic axis. The STEM-EDS images show that the W ions occupy the octahedral sites within and around the vacant PCs' square arrangement, and the other PCs and octahedral sites are occupied by Nb ions (Figure 19a).

Further TEM images of the NWO phases prepared in Examples 1, 2 and 3. Fast Fourier transforms (FFT) images of the same samples were also prepared. These were prepared as described above.

TEM and FFT image viewed perpendicular to the crystallographic c axis was prepared for Example 1 (see Figure 20(a-b). The TEM and FFT images show a d-spacing of 3.9 Å corresponding to the c parameter of the TTB unit cell.

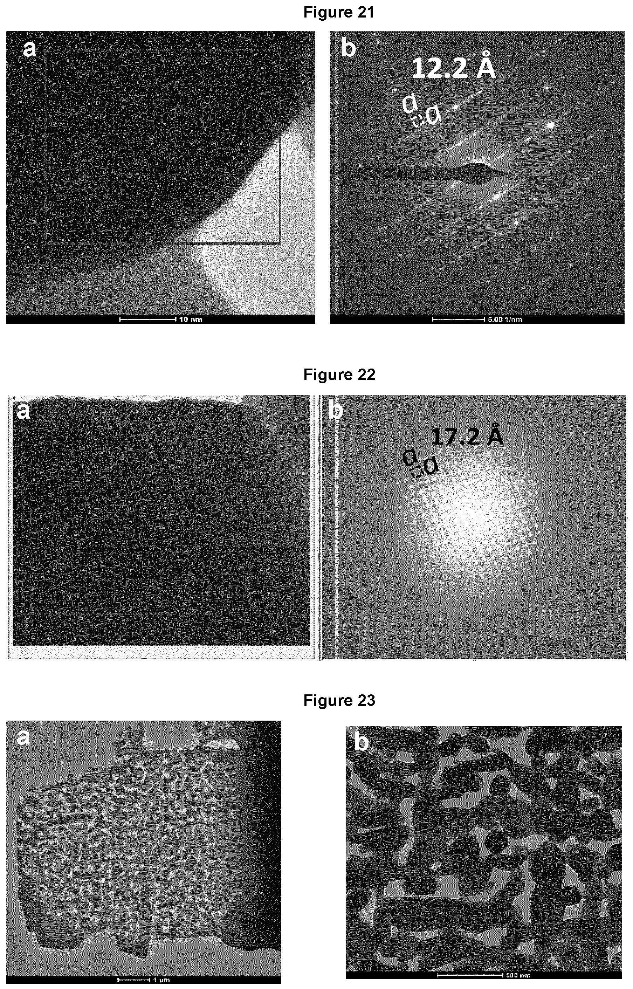

TEM and FFT images of Example 1 ($Nb_2WO_{11}$) were prepared along the ab-plane (see Figure 21(a-b)). This shows a d-spacing of 12.2 Å corresponding to a parameter of the TTB unit cell.

TEM and FFT images of Example 3 ($Nb_{18}W_6O_{63}$) were also taken along the ab-plane (Figure 22), which show a d-spacing of 17.2 Å corresponding to the supercell formed by $\sqrt{2}a$ of the smaller TTB unit cell.

These images support the crystallographic characterization of the new NWO phases.

A TEM image prepared by Focused Ion Beam (FIB) of a lamella of a secondary particle of NWO phase from Example 3 ($Nb_{18}W_6O_{63}$) is shown in Figure 23(a) (scale bar 1 $\mu$m). Figure 7(b) shows a closer view of the secondary particle (scale bar 1 nm).

The lamellae were prepared using a focused ion beam scanning electron microscope (FIB-SEM) - FEI Helios NanoLab. TEM images and selected-area electron diffraction (SAED) patterns from these lamellae were acquired via a transmission electron microscope -- Thermo Scientific (FEI) Talos F200X G2 operating at 200 kV. During formation of the lamellae the focused ion beam milling tends to break the edge of the lamellae, hence the image shown in Figure 23(a) is not spherical.

The image shows the network of primary particles which make up the secondary particle. From the image it can be estimated that the length of primary particles forming the secondary particle is about 0.2 to 1 $\mu$m. It can also be estimated that there are about from 1000 to 1500 primary particles making up the secondary particle.

*2.4 - Electrochemical Characterization of NWO phases*

The NWO phases were tested against Li in a half cell configuration.

Electrodes were prepared by mixing the active material, conductive carbon (super P, TIMCAL), binder (PVDF, Kynar) in a mass ratio of 8:1:1. The materials were dispersed in N-methyl-2-pyrrolidone to provide a slurry, which was mixed with a Thinky mixer 250. The electrodes were cast from the slurry and dried in an oven at 60 °C overnight under ambient atmosphere. The dry electrodes were then calendared at room temperature. The active mass loading is ~2 mg cm$^{-2}$ and electrode area is 1.27 cm$^2$.

Anodes working electrodes were prepared using the NWO phase of Examples 1 and 3 (prepared in section 1.1 above) as the active material. Cathode counter electrodes were prepared using Li metal as the active material.

Electrochemical tests were conducted in 2032 stainless-steel (ss) coin cells with ss conical spring, two 0.5 mm thick ss spacer disks, and a glass microfibre separator (Whatman, GE). Cells were assembled in the glove box with LP30 electrolyte (Sigma-Aldrich), which is composed of 1.0 M lithium hexafluorophosphate ($LiPF_6$) in ethylene carbonate (EC): dimethyl carbonate (DMC) (1:1 v/v). The cells were assembled in an argon filled glove box.

Galvanostatic cell cycling tests were conducted at various current densities. The C-rate was calculated based on the theoretical capacities of the cathode active material. The C-rate is a measure of the rate at which a battery is discharged relative to its maximum capacity. The C-rate may be defined as the inverse of the number of hours to reach a defined theoretical capacity.

The half cells were cycled between 1.3 and 3.0 V against Li.

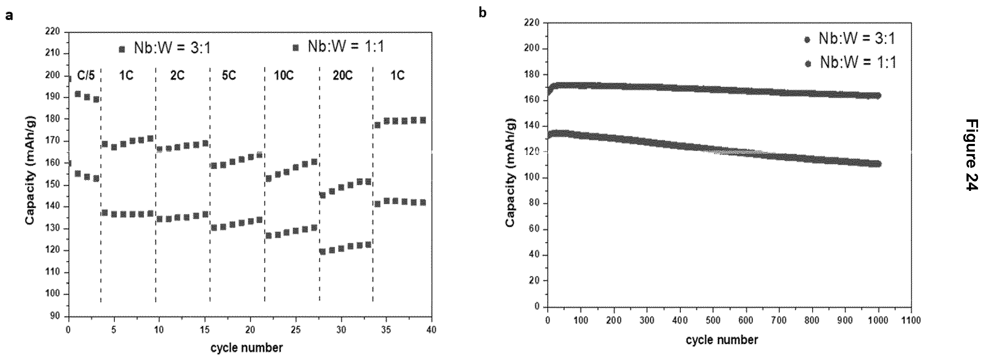

High rate performance was tested at up to 20C. The discharge capacity at different discharge rates was tested for cells using Example 1 and Example 3 as the anode active material is shown in Figure 24(a). The first 4 cycles were carried out at C/5, followed by 6 cycles at each of 1C, 2C, 5C, 10C, 20C and 1C.

For Example 1 ($Nb_2W_2O_{11}$), the initial capacity is about 160 mA·h·g$^{-1}$ at C/5. This decreases slightly to about 138 mA·h·g$^{-1}$ at 1C. However, the decrease in capacity at higher C-rates is minimal. At 10C the capacity is about 125-130 mA·h·g$^{-1}$ and at 20C the capacity is about 120-125 mA·h·g$^{-1}$. This shows that the anode has excellent rate capacity retention even at high rates.

For Example 3 ($Nb_{18}W_6O_{63}$), the initial capacity is about 200 mA·h·g$^{-1}$ at C/5. This decreases slightly to about 170 mA·h·g$^{-1}$ at 1C. However, the decrease in capacity at higher C-rates is minimal. At 10C the capacity is about 150-160 mA·h·g$^{-1}$ and at 20C the capacity is about 145-155 mA·h·g$^{-1}$. This shows that the anode has excellent rate capacity retention even at high rates.

The anode of Example 3 has a higher capacity than the anode of Example 1.

It is though that the slightly higher capacity for Example 3 is due to a higher number of PC vacancies in Example 3 compared to Example 1, allowing for more lithium intercalation into the vacant PCs. In addition, Example 3 is less dense than Example 1, hence on a gravimetric basis the capacity appears to be higher for Example 3.

Compared to known NWO materials (e.g., $Nb_{16}W_5O_{55}$ tested in WO2019/234248) the capacity is improved at high C-rates. For comparative $Nb_{16}W_5O_{55}$ electrodes, the discharge capacity at 0.2 C is about 165 mA h g$^{-1}$, decreasing to 125 mA·h·g$^{-1}$ at 20C. Both the initial capacity at 0.2 C and the capacity at high discharge rates is less than Example 1 ($Nb_2W_2O_{11}$) and Example 3 ($Nb_{18}W_6O_{63}$) of the present invention. This is thought to be due to the improved lithium-ion intercalation properties provided by the increased particular regularity and cation ordering of the structure.

The long term cycling performance was tested for 1,000 cycles. Cells using Example 1 and Example 3 as the anode active material were cycled for 1,000 cycles at a discharge rate of 10C, and the discharge capacity is shown in Figure 24(b).

For Example 3, the initial discharge capacity is 170 mA·h·g$^{-1}$ decreasing to only 160 mA·h·g$^{-1}$ over 1,000 cycles at 10C. This represents a capacity retention of over 94% over 1000 cycles at 10C.

For Example 1, the initial discharge capacity is 130 mA·h·g$^{-1}$ decreasing to 110 mA·h·g$^{-1}$ over 1,000 cycles at 10C. This represents a capacity retention of over 84% over 1000 cycles at 10C.

Despite the very high 10C rate and large number of cycles, the capacity retention over 1,000 cycles is excellent. The capacity retention is particularly high for the anode of Example 3.

Compared to known NWO materials (e.g., $Nb_{16}W_5O_{55}$ tested in WO2019/234248) the capacity retention is improved. For comparative $Nb_{16}W_5O_{55}$ electrodes, the discharge capacity retention over 300 cycles at a 10C charge and 10C discharge rate was 120 mA·h·g$^{-1}$, corresponding to greater than 80% capacity retention. The capacity retention is less than the 84% for Example 1 ($Nb_2W_2O_{11}$) and 94 % for Example 3 ($Nb_{18}W_6O_{63}$) over 1000 cycles. This is thought to be due to the increased particular regularity and cation ordering of the structure of the present invention, which increases uniformity of the lattice expansion and reduces cracking during repeat cycling at high rates.

*2.5 - Additional Electrochemical Characterization of NWO phases*

Additional electrochemical cycling tests were carried out on NWO phases against Li in a half cell configuration. The tests were carried out as described above in section 2.4.

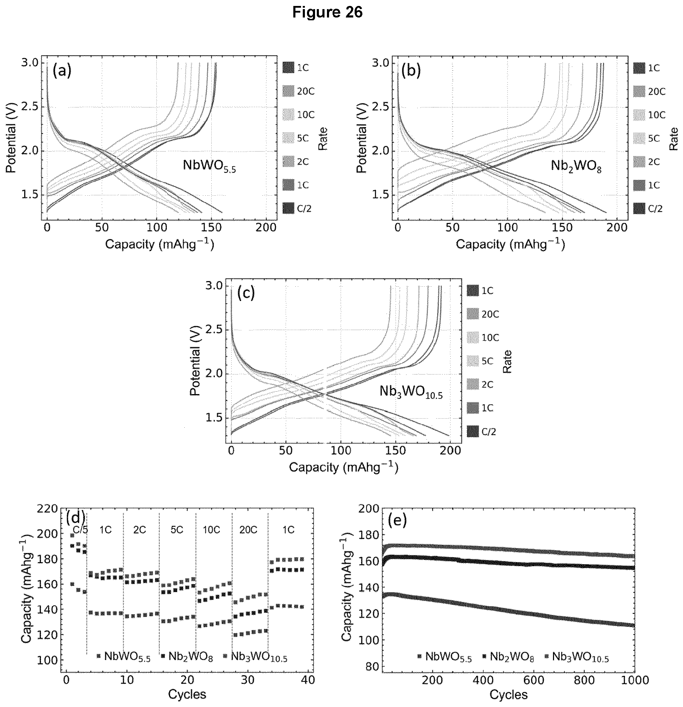

High rate performance was tested at up to 20C. The discharge capacity at different discharge rates was tested for cells using Examples 1, 2 and 3 as the anode active material. The results are shown is shown in Figure 26(d). The first 4 cycles were carried out at C/5, followed by 6 cycles at each of 1C, 2C, 5C, 10C, 20C and 1C.

For Example 1 ($Nb_2W_2O_{11}$) and Example 3 ($Nb_{18}W_6O_{63}$) the performance is analogous to that tested in Section 2.4.

For Example 2 ($Nb_2WO_8$), the initial capacity is about 185 mA·h·g$^{-1}$ at C/5. This decreases slightly to about 170 mA·h·g$^{-1}$ at 1C. However, the decrease in capacity at higher C-rates is minimal. At 10C the capacity is about 145-150 mA·h·g$^{-1}$ and at 20C the capacity is about 135-140 mA·h·g$^{-1}$. This shows that the anode has excellent rate capacity retention even at high rates.

The anode of Example 2 has a higher capacity than the anode of Example 1 and a slightly lower capacity than the anode of Example 3.

The long term cycling performance was tested for 1,000 cycles. Cells using Examples 1, 2 and 3 as the anode active material were cycled for 1,000 cycles at a discharge rate of 10C, and the discharge capacity is shown in Figure 2now). The anode materials demonstrated remarkable high-rate capabilities, with a reversible capacity of 160, 155 and 110 mAh/g at the end of 1000 cycles at high rates (10C).

For Example 1 ($Nb_2W_2O_{11}$) and Example 3 ($Nb_{18}W_6O_{63}$) the performance is analogous to that tested in Section 2.4.

For Example 2 ($Nb_2WO_8$), the initial discharge capacity is 160 mA·h·g$^{-1}$ decreasing to only 155 mA·h·g$^{-1}$ over 1,000 cycles at 10C. This represents a capacity retention of over 96% over 1000 cycles at 10C.

Despite the very high 10C rate and large number of cycles, the capacity retention over 1,000 cycles is excellent. The capacity retention is particularly high for the anodes of Examples 2 and 3.

Although both Examples 2 and 3 possess a supercell TTB structure, it is thought that Example 3 demonstrated a higher capacity compared to Example 2 due to its lower molar mass. This difference in capacity can in part be attributed to the presence of fewer defects in the lattice of Example 3.

The gravimetric capacity of all the three bronzes reported here are higher than the 80 mAh/g reported for the $\alpha$-$Nb_2WO_8$ cycling at 3 A/g (a rate that is lower than 10 C). This increase in capacity can be attributed to the presence of interconnected vacant pentagonal channels that run across the particle helping in the Li ion transport and storage.

*2.6 - Thermal Stability of NWO phases*

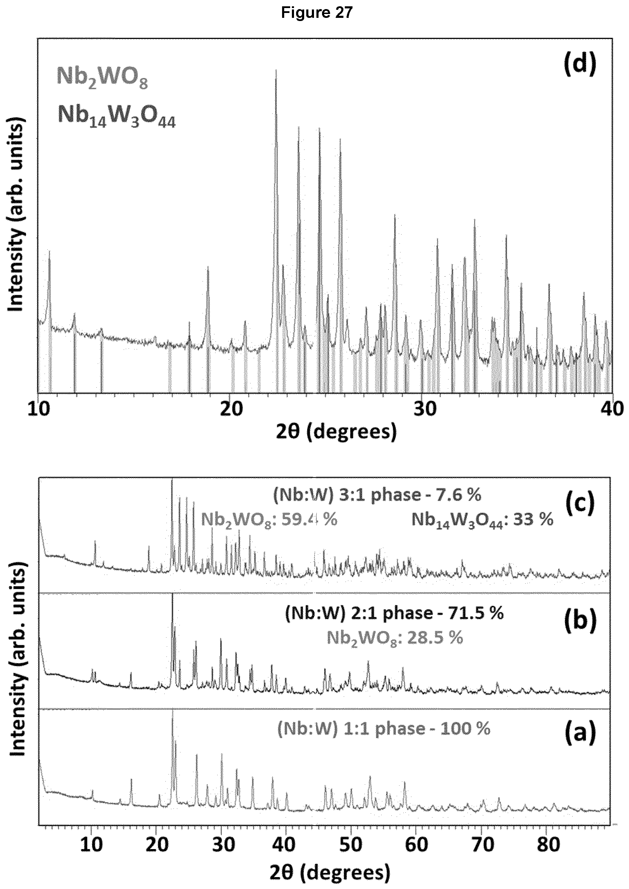

The thermal stability of the example phases was tested to investigate the thermodynamic stability. Examples 1, 2a, 3a were recalcined at 800°C for 30 days and their PXRD patterns are shown in Figure 27.

Example 1 remained unchanged during the prolonged heating, indicating its thermodynamic stability. However, for Example 2 ~71.5% of the material retained its structure while the remaining portion decomposed into the known bronze phase $\alpha$-$Nb_2WO_8$. Similarly, for Example 3, only 7.6% of the material retained its structure while the majority decomposed into $Nb_{14}W_3O_{44}$ (33%) and $\alpha$-$Nb_2WO_8$ (59.4%).

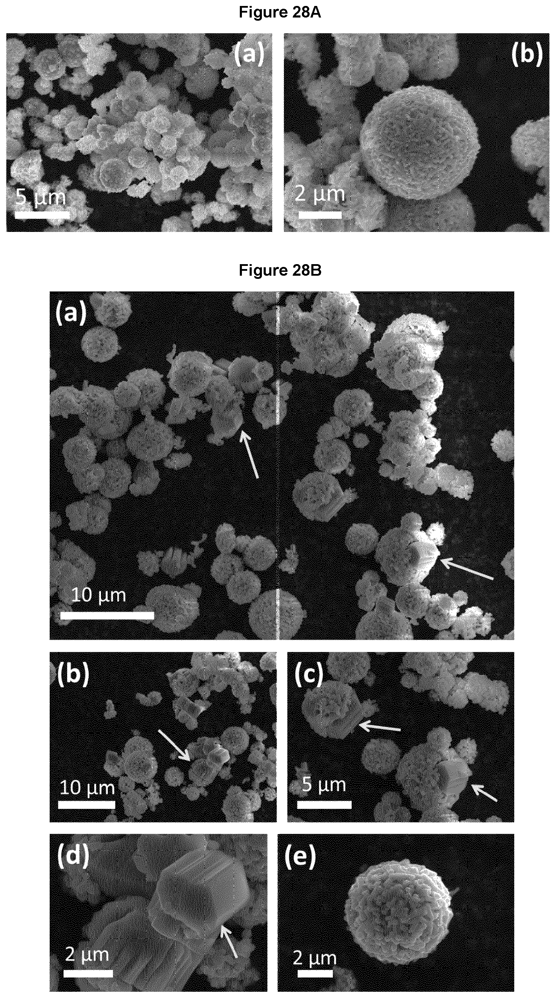

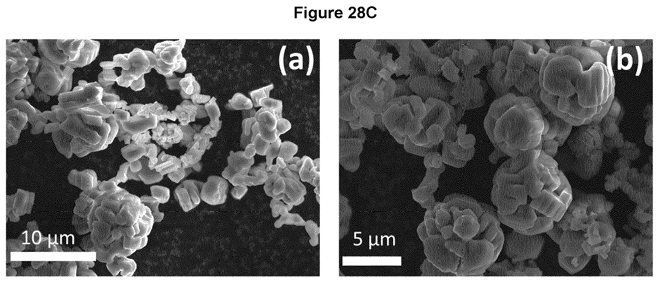

The tested samples also underwent microscopic characterisation using SEM . The phase composition of the decomposed products also correlated with the observed morphological changes: Example 1 maintained its spherical morphology with an increase in the size of the primary particles (Figure 28A), while Example 2 only partially retained its spherical morphology, with the remaining portion crystallizing as micron-sized rods, consistent with typical NWO bronze and block phases. (Figure 28B). Example 3 was completely converted into micron-sized particles (Figure 28C).

The stability of Example 1 was observed up to 1000 °C, decomposing into $Nb_{12}W_{11}O_{63}$, $Nb_8W_9O_{47}$ and $Nb_{14}W_3O_{44}$ phases when calcined at 1200 °C for 12 h. The decomposition was accompanied by a transformation into rod-like structures. The spherical secondary particles were only observed at temperatures below 900 °C, and the transformation to rod-like structures was always accompanied by decomposition.

These findings support the importance of the low temperature synthesis approach to the production of these the NWO phases of the invention. The Examples are shown to have sufficient thermal stability for typical battery applications, while the structure of Example 1 was also shown to have excellent high temperature stability than Examples 2 (2a) and 3 (3a).

*References*

A number of publications are cited above in order to more fully describe and disclose the invention and the state of the art to which the invention pertains. Full citations for these references are provided below.

CN110304658A
WO 2019/234248
Ekstrom et al., Acta Chem. Scand. 1971, 25, No.7
Griffith et al., Nature, 559, 556-559
Hyde et al., Acta Crystallogr. Sect. A 1973, 29, 243-248.
Koçer et al., J. Am. Chem. Soc. 2019, 141, 15121-15134
Krumeich, Chem. Mater. 2022, 34, 3, 911-934
Kudo et al., Journal of Solid State Chemistry, 1988, 77, 2, 412-415
Lundberg, Acta Chemica Scandinavica 26, 1972, 2932-2940
Roth et al., Acta Cryst. 1965, 19, 26
Roth, R.S., Wadsley, A.D., Acta Crystallogr., 1965, 19, 32
Sayagués et al., Journal of Solid State Chemistry, 1998, 143, 1, 33-40

Tamura, S. et al., Z. Anorg. Allg. Chem., 1974, 410, 313
Wadsley et al., Acta. Cryst. 1961, 14, 660
Xia et al. Journal of Power Sources 482 (2021) 228898
Yang et al., CS Nano 2017, 11, 4, 4217-4224
Yu et al., Inorganica Chimica Acta, 2020, 507, 119562
Zhou et al., Chemistry Select, 2020, 5, 3, 1209-1213

**Claims**

1. A niobium metal oxide of formula (I)

$$Nb_xM_yO_z \qquad (I)$$

wherein the niobium metal oxide is optionally intercalated with lithium,
wherein M is a metal selected from Ti, Zr, V, Cr, W and Mo, x is from 2 to 18, z is $2.5x+3y$ and $x/y$ is from 1 to 3, and the crystal structure of the niobium metal oxide is a tetragonal tungsten bronze structure having four or eight pentagonal channels per unit cell, and
a portion of the pentagonal channels are filled with -Nb-O-Nb-O- strings, and the remaining portion of the pentagonal channels are optionally intercalated with lithium.

2. The niobium metal oxide of claim 1, wherein M is selected from W and Mo, preferably M is W.

3. The niobium metal oxide of claim 1 or claim 2, wherein from 1/3 to 1/2 of the pentagonal channels in the niobium metal oxide are filled with -Nb-O-Nb-O- strings, preferably 1/3 or 1/2 of the pentagonal channels in the niobium metal oxide are filled with -Nb-O-Nb-O- strings.

4. The niobium metal oxide of any preceding claim, wherein:

a) the crystal structure comprises a unit cell having the space group P4/mbm or a super cell having the space group P4; and/or
b) the crystal structure comprises a unit cell having a parameter a of from 12.2 to 12.5 Å or a super cell having a parameter $\sqrt{2}a$ of from 17.3 to 17.5 Å, and the unit cell or super cell have a parameter c of from 3.8 to 4.0 Å; and/or
c) the crystal structure is **characterised by** a powder x-ray diffraction pattern having two or more 2θ peaks, such as three or more, such as four or more peaks, selected from the group consisting of 10.17, 22.54, 22.87, 29.96, 26.18, 32.31, 37.80 and 32.60 $\pm$ 0.2° and wherein the powder X-ray diffraction is measured at a wavelength of Cu-Kα.

5. The niobium metal oxide of any preceding claim, wherein:

a) $x/y$ is selected from 1, 1.5, 2, 2.5 and 3, preferably from 1, 2, 2.5 and 3; and/or
b) $x/y$ is from 2 to 3.

6. The niobium metal oxide of any preceding claim, wherein the niobium metal oxide is $Nb_{18}M_6O_{63}$, $Nb_{10}M_4O_{37}$, $Nb_{16}M_8O_{64}$, $Nb_2M_2O_{11}$ or a combination thereof, preferably $Nb_{18}M_6O_{63}$, $Nb_{16}M_8O_{64}$ or a combination thereof, more preferably $Nb_{18}M_6O_{63}$.

7. The niobium metal oxide of any preceding claim, wherein the crystal structure comprises tetragonal channels and pentagonal channels, wherein a portion of the tetragonal channels and/or a portion of the pentagonal channels are intercalated with Li.

8. A niobium metal oxide secondary particle comprising an agglomeration of primary particles of the niobium metal oxide of any preceding claim, wherein the secondary particle has a mean average length of from 1 to 5 μm and an aspect ratio of from 1 to 1.5.

9. The niobium metal oxide secondary particle of claim 8, wherein:

a) the aspect ratio is from 1 to 1.3, preferably from 1 to 1.2, more preferably from 1 to 1.1; and/or
b) the secondary particle has a sphericity of 0.95 or more, such as 0.96 or more, 0.97 or more, 0.98 or more, or 0.99 or more; and/or
c) the secondary particle has a D50 particle length of 1 to 5 $\mu$m and a standard deviation of particle length of 3 $\mu$m or less.

10. The niobium metal oxide secondary particle of claim 8 or 9, wherein:

a) the primary particles of the niobium metal oxide have a length of from 0.3 to 1 $\mu$m and an aspect ratio of from 2 to 20, preferably wherein the primary particles are rod shaped; and/or
b) the primary particles are each connected by one or more niobium metal oxide amorphous bridges.

11. A process for preparing the niobium metal oxide secondary particle of any of claims 8 to 10, the process comprising:

co-precipitating Nb oxide and M oxide from a solution of $NbX_a$ and $MY_b$ and
calcining the precipitate at a temperature of from 550 to 1100 °C,
wherein M is selected from Ti, Zr, V, Cr, W and Mo, X and Y are independently one or more counterions, and a and b are independently from 2 to 6, wherein $NbX_a$ and $MY_b$ are optionally charged.

12. The process of claim 11, wherein co-precipitating comprises:

a) heating the solution of $NbX_a$ and $MY_b$ at a temperature of from 120 to 200 °C, preferably 130 to 170 °C, more preferably 140 to 160 °C; and/or
b) heating the solution of $NbX_a$ and $MY_b$ at a pressure of 1000 kPa or more, preferably a pressure of from 1000 kPa to 5000 kPa, more preferably from 1500 kPa to 4500 kPa, yet more preferably from 1800 kPa to 4000 kPa; and/or
c) heating under solvothermal conditions, such as microwave heating under solvothermal conditions.

13. The process of claim 11 or 12, wherein the precipitate is calcined at a temperature of from 600 to 1000 °C, preferably from 700 to 950 °C, more preferably from 800 to 900 °C.

14. The process of any of claims 11 to 13, wherein

X and Y are independently selected from oxalate, ethoxide, O, S, F, Cl and Br, preferably oxalate, O and Cl, and/or
M is Mo or W, preferably W;

optionally wherein

$NbX_a$ is niobium oxalate or niobium chloride, and/or
$MY_b$ is a metatungstate, a paratungstate, or tungsten chloride.

15. A working electrode for an electrochemical cell, the working electrode comprising the niobium metal oxide secondary particle of any of claims 8 to 10.

**Patentansprüche**

1. Niobmetalloxid der Formel (I)

$$Nb_xM_yO_z \qquad (I)$$

wobei das Niobmetalloxid gegebenenfalls Lithium-Interkalationen aufweist,
wobei M ein Metall ist, das aus Ti, Zr, V, Cr, W und Mo ausgewählt ist, x = 2 bis 18 ist, z = 2,5x + 3y ist und x/y = 1 bis 3 ist und
die Kristallstruktur des Niobmetalloxids eine tetragonale Wolframbronzestruktur mit vier oder acht pentagonalen Kanälen pro Einheitszelle ist und
ein Abschnitt der pentagonalen Kanäle mit Strängen -Nb-O-Nb-O- gefüllt ist und der restliche Abschnitt der pentagonalen Kanäle gegebenenfalls Lithium-Interkalationen aufweist.

2. Niobmetalloxid nach Anspruch 1, wobei M aus W und Mo ausgewählt ist und M vorzugsweise W ist.

3. Niobmetalloxid nach Anspruch 1 oder Anspruch 2, wobei 1/3 bis 1/2 der pentagonalen Kanäle im Niobmetalloxid mit Strängen -Nb-O-Nb-O- gefüllt ist, vorzugsweise 1/3 oder 1/2 der pentagonalen Kanäle im Niobmetalloxid mit Strängen -Nb-O-Nb-O- gefüllt ist.

4. Niobmetalloxid nach einem der vorangegangenen Ansprüche, wobei:

a) die Kristallstruktur eine Einheitszelle mit der Raumgruppe P4/mbm oder eine Superzelle mit der Raumgruppe P4 umfasst; und/oder
b) die Kristallstruktur eine Einheitszelle mit einem Parameter a von 12,2 bis 12,5 Å oder eine Superzelle mit einem Parameter $\sqrt{2}a$ von 17,3 bis 17,5 Å umfasst und die Einheitszelle oder Superzelle einen Parameter c von 3,8 bis 4,0 Å aufweist; und/oder
c) die Kristallstruktur durch ein Röntgenpulverdiffraktometriemuster mit zwei oder mehr $2\theta$-Reflexen gekennzeichnet ist, z. B. drei oder mehr, z. B. vier oder mehr Reflexen, die aus der aus 10,17, 22,54, 22,87, 29,96, 26,18, 32,31, 37,80 und 32,60 $\pm$ 0,2° bestehenden Gruppe ausgewählt sind, und wobei die Röntgenpulverdiffraktometrie bei einer Wellenlänge von Cu-K$\alpha$ gemessen wird.

5. Niobmetalloxid nach einem der vorangegangenen Ansprüche, wobei:

a) x/y aus 1, 1,5, 2, 2,5 und 3 ausgewählt ist, vorzugsweise aus 1, 2, 2,5 und 3; und/oder
b) x/y = 2 bis 3 ist.

6. Niobmetalloxid nach einem der vorangegangenen Ansprüche, wobei das Niobmetalloxid $Nb_{18}M_6O_{63}$, $Nb_{10}M_4O_{37}$, $Nb_{16}M_8O_{64}$, $Nb_2M_2O_{11}$ oder eine Kombination davon ist, vorzugsweise $Nb_{18}M_6O_{63}$, $Nb_{16}M_8O_{64}$ oder eine Kombination davon, noch bevorzugter $Nb_{18}M_6O_{63}$.

7. Niobmetalloxid nach einem der vorangegangenen Ansprüche, wobei die Kristallstruktur tetragonale Kanäle und pentagonale Kanäle umfasst, wobei ein Abschnitt der tetragonalen Kanäle und/oder ein Abschnitt der pentagonalen Kanäle Li-Interkalationen aufweist.

8. Niobmetalloxid-Sekundärpartikel, das eine Agglomeration von Primärpartikeln eines Niobmetalloxids nach einem der vorangegangenen Ansprüche umfasst, wobei das Sekundärpartikel eine mittlere durchschnittliche Länge von 1 bis 5 $\mu$m und ein Seitenverhältnis von 1 bis 1,5 aufweist.

9. Niobmetalloxid-Sekundärpartikel nach Anspruch 8, wobei:

a) das Seitenverhältnis 1 bis 1,3 beträgt, vorzugsweise 1 bis 1,2, noch bevorzugter 1 bis 1,1; und/oder
b) das Sekundärpartikel eine Sphärizität von 0.95 oder mehr aufweist, z. B. 0,96 oder mehr, 0,97 oder mehr, 0,98 oder mehr oder 0,99 oder mehr; und/oder
c) das Sekundärpartikel eine D50-Partikellänge von 1 bis 5 $\mu$m und eine Standardabweichung der Partikellänge von 3 $\mu$m oder weniger aufweist.

10. Niobmetalloxid-Sekundärpartikel nach Anspruch 8 oder 9, wobei:

a) die Primärpartikel des Niobmetalloxids eine Länge von 0,3 bis 1 $\mu$m und ein Seitenverhältnis von 2 bis 20 aufweisen, wobei die Primärpartikel vorzugsweise stäbchenförmig sind; und/oder
b) die Primärpartikel jeweils durch eine oder mehrere amorphe Niobmetalloxid-Brücken verbunden sind.

11. Verfahren zur Herstellung eines Niobmetalloxid-Sekundärpartikels nach einem der Ansprüche 8 bis 10, wobei das Verfahren Folgendes umfasst:

Copräzipitieren von Nb-Oxid und M-Oxid aus einer Lösung von $NbX_a$ und $MY_b$ und
Calcinieren des Präzipitats bei einer Temperatur von 550 bis 1100 °C,
wobei M aus Ti, Zr, V, Cr, W und Mo ausgewählt ist, X und Y unabhängig voneinander ein oder mehrere Gegenionen sind und a und b unabhängig voneinander 2 bis 6 sind, wobei $NbX_a$ und $MY_b$ gegebenenfalls geladen sind.

12. Verfahren nach Anspruch 11, wobei das Copräzipitieren Folgendes umfasst:

a) Erhitzen der Lösung von $NbX_a$ und $MY_b$ auf eine Temperatur von 120 bis 200 °C, vorzugsweise 130 bis 170 °C, noch bevorzugter 140 bis 160 °C; und/oder
b) Erhitzen der Lösung von $NbX_a$ und $MY_b$ unter einem Druck von 1000 kPa oder mehr, vorzugsweise einem Druck von 1000 kPa bis 5000 kPa, noch bevorzugter 1500 kPa bis 4500 kPa, noch bevorzugter 1800 kPa bis 4000 kPa; und/oder
c) Erhitzen unter solvothermalen Bedingungen, z. B. Mikrowellenerhitzen unter solvothermalen Bedingungen.

13. Verfahren nach Anspruch 11 oder 12, wobei das Präzipitat bei einer Temperatur von 600 bis 1000 °C calciniert wird, vorzugsweise 700 bis 950 °C, noch bevorzugter 800 bis 900 °C.

14. Verfahren nach einem der Ansprüche 11 bis 13, wobei

X und Y unabhängig voneinander aus Oxalat, Ethoxid, O, S, F, Cl und Br ausgewählt sind, vorzugsweise Oxalat, O und Cl, und/oder
M Mo oder W ist, vorzugsweise W;

wobei gegebenenfalls

$NbX_a$ Nioboxalat oder Niobchlorid ist und/oder
$MY_b$ ein Metawolframat, Parawolframat oder Wolframchlorid ist.

15. Arbeitselektrode für eine elektrochemische Zelle, wobei die Arbeitselektrode ein Niobmetalloxid-Sekundärpartikel nach einem der Ansprüche 8 bis 10 umfasst.


**Revendications**

1. Oxyde métallique de niobium de formule (I)

$$Nb_xM_yO_z \qquad (I)$$

dans lequel l'oxyde métallique de niobium est facultativement intercalé avec du lithium,
dans lequel M est un métal choisi parmi Ti, Zr, V, Cr, W et Mo, x est de 2 à 18, z est 2,5x + 3y et x/y est de 1 à 3, et la structure cristalline de l'oxyde métallique de niobium est une structure de bronze de tungstène tétragonale présentant quatre ou huit canaux pentagonaux par cellule unitaire, et
une partie des canaux pentagonaux est remplie avec des chaînes -Nb-O-Nb-O-, et la partie restante des canaux pentagonaux est facultativement intercalée avec du lithium.

2. Oxyde métallique de niobium selon la revendication 1, dans lequel M est choisi parmi W et Mo, de préférence M est W.

3. Oxyde métallique de niobium selon la revendication 1 ou la revendication 2, dans lequel de 1/3 à 1/2 des canaux pentagonaux dans l'oxyde métallique de niobium sont remplis avec des chaînes -Nb-O-Nb-O-, de préférence 1/3 ou 1/2 des canaux pentagonaux dans l'oxyde métallique de niobium sont remplis avec des chaînes -Nb-O-Nb-O-.

4. Oxyde métallique de niobium selon l'une quelconque des revendications précédentes, dans lequel :

a) la structure cristalline comprend une cellule unitaire présentant le groupe d'espace P4/mbm ou une super cellule présentant le groupe d'espace P4 ; et/ou
b) la structure cristalline comprend une cellule unitaire présentant un paramètre a de 12,2 à 12,5 Å ou une super cellule présentant un paramètre $\sqrt{2}\underline{a}$ de 17,3 à 17,5 Å, et la cellule unitaire ou la super cellule présente un paramètre c de 3,8 à 4,0 Å ; et/ou
c) la structure cristalline est **caractérisée par** un motif de diffraction des rayons X sur poudre présentant deux pics 2θ ou plus, tels que trois pics ou plus, tels que quatre pics ou plus, choisis dans le groupe comprenant 10,17, 22,54, 22,87, 29,96, 26,18, 32,31, 37,80 et 32,60 ± 0,2° et dans lequel la diffraction des rayons X sur poudre est mesurée à une longueur d'onde de Cu-K$\alpha$.

5. Oxyde métallique de niobium selon l'une quelconque des revendications précédentes, dans lequel :

   a) *x/y* est choisi parmi 1, 1,5, 2, 2,5 et 3, de préférence parmi 1, 2, 2,5 et 3 ; et/ou
   b) *x/y* est de 2 à 3.

6. Oxyde métallique de niobium selon l'une quelconque des revendications précédentes, dans lequel l'oxyde métallique de niobium est $Nb_{18}M_6O_{63}$, $Nb_{10}M_4O_{37}$, $Nb_{16}M_8O_{64}$, $Nb_2M_2O_{11}$ ou une combinaison de ceux-ci, de préférence $Nb_{18}M_6O_{63}$, $Nb_{16}M_8O_{64}$ ou une combinaison de ceux-ci, de manière plus préférée $Nb_{18}M_6O_{63}$.

7. Oxyde métallique de niobium selon l'une quelconque des revendications précédentes, dans lequel la structure cristalline comprend des canaux tétragonaux et des canaux pentagonaux, dans lequel une partie des canaux tétragonaux et/ou une partie des canaux pentagonaux sont intercalés avec du Li.

8. Particule secondaire d'oxyde métallique de niobium comprenant une agglomération de particules primaires de l'oxyde métallique de niobium selon l'une quelconque des revendications précédentes, dans laquelle la particule secondaire présente une longueur moyenne de 1 à 5 $\mu$m et un rapport d'aspect de 1 à 1,5.

9. Particule secondaire d'oxyde métallique de niobium selon la revendication 8, dans laquelle :

   a) le rapport d'aspect est de 1 à 1,3, de préférence de 1 à 1,2, de manière plus préférée de 1 à 1,1 ; et/ou
   b) la particule secondaire présente une sphéricité de 0,95 ou plus, telle que 0,96 ou plus, 0,97 ou plus, 0,98 ou plus, ou 0,99 ou plus ; et/ou c) la particule secondaire présente une longueur de particule D50 de 1 à 5 $\mu$m et un écart type de longueur de particule de 3 $\mu$m ou moins.

10. Particule secondaire d'oxyde métallique de niobium selon la revendication 8 ou 9, dans laquelle :

    a) les particules primaires de l'oxyde métallique de niobium présentent une longueur de 0,3 à 1 $\mu$m et un rapport d'aspect de 2 à 20, de préférence dans lequel les particules primaires sont en forme de tige ; et/ou
    b) les particules primaires sont reliées chacune par un ou plusieurs ponts amorphes d'oxyde métallique de niobium.

11. Procédé de préparation de la particule secondaire d'oxyde métallique de niobium selon l'une quelconque des revendications 8 à 10, le procédé comprenant les étapes consistant à :

    co-précipiter l'oxyde de Nb et l'oxyde de M à partir d'une solution de $NbX_a$ et $MY_b$ et
    calciner le précipité à une température de 550 à 1 100°C,
    dans lequel M est choisi parmi Ti, Zr, V, Cr, W et Mo, X et Y sont indépendamment un ou plusieurs contre-ions, et a et b sont indépendamment de 2 à 6, dans lequel $NbX_a$ et $MY_b$ sont facultativement chargés.

12. Procédé selon la revendication 11, dans lequel la co-précipitation comprend les étapes consistant à :

    a) chauffer la solution de $NbX_a$ et de $MY_b$ à une température de 120 à 200°C, de préférence de 130 à 170°C, ed manière plus préférée de 140 à 160°C ; et/ou
    b) chauffer la solution de $NbX_a$ et de $MY_b$ à une pression de 1 000 kPa ou plus, de préférence une pression de 1 000 kPa à 5 000 kPa, de manière plus préférée de 1 500 kPa à 4 500 kPa, de manière encore plus préférée de 1 800 kPa à 4 000 kPa ; et/ou
    c) chauffer dans des conditions solvothermiques, comme un chauffage par micro-ondes dans des conditions solvothermiques.

13. Procédé selon la revendication 11 ou 12, dans lequel le précipité est calciné à une température de 600 à 1 000°C, de préférence de 700 à 950°C, de manière plus préférée de 800 à 900°C.

14. Procédé selon l'une quelconque des revendications 11 à 13, dans lequel :

X et Y sont choisis indépendamment parmi oxalate, éthoxyde, O, S, F, Cl et Br, de préférence oxalate, O et Cl, et/ou

M est Mo ou W, de préférence W ;

facultativement dans lequel :

NbX$_a$ est l'oxalate de niobium ou le chlorure de niobium, et/ou

MY$_b$ est un métatungstate, un paratungstate ou du chlorure de tungstène.

15. Électrode de travail pour une cellule électrochimique, l'électrode de travail comprenant la particule secondaire d'oxyde métallique de niobium selon l'une quelconque des revendications 8 à 10.

Figure 3

Figure 4

Figure 5

Figure 6

**Figure 7**

**Figure 8**

# Figure 9

## Figure 10

Figure 11

Figure 12a

**Figure 12b**

Nb:W = 1:1

Space group - $P\,4/m\,b\,m$

$a = 12.2210\ \text{Å}$

$c = 3.9371\ \text{Å}$

**Figure 13a**

## Figure 13b

Nb:W = 3:1
Space group - *P4*
*a* = 17.4054 Å,
*c* = 3.9450 Å

## Figure 13c

$a = 12.27$ Å

$\sqrt{2}$

$a = 17.47$ Å

## Figure 14

(a)

(b)

(c)

10 nm

10 nm

10 nm

Figure 15

(a)          (b)          (c)

Figure 16

(a)                    (b)

Figure 17A

(a)                    (b)

Figure 17B

Figure 18

Figure 19A

(a)

(b)

**Figure 19B**

**Figure 20**

## Figure 21

## Figure 22

## Figure 23

# Figure 24

Figure 25

(a)

(b)

Figure 26

**Figure 27**

## Figure 28A

## Figure 28B

Figure 28C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2218984 A
- WO 2019234248 A
- CN 110304658 A

**Non-patent literature cited in the description**

- **EKSTROM et al.** *Acta Chem. Scand.*, 1971, vol. 25 (7)
- **GRIFFITH et al.** *Nature*, vol. 559, 556-559
- **HYDE et al.** *Acta Crystallogr. Sect. A*, 1973, vol. 29, 243-248
- **KOÇER et al.** *J. Am. Chem. Soc.*, 2019, vol. 141, 15121-15134
- **KRUMEICH**. *Chem. Mater.*, 2022, vol. 34 (3), 911-934
- **KUDO et al.** *Journal of Solid State Chemistry*, 1988, vol. 77 (2), 412-415
- **LUNDBERG**. *Acta Chemica Scandinavica*, 1972, vol. 26, 2932-2940
- **ROTH et al.** *Acta Cryst.*, 1965, vol. 19, 26
- **ROTH, R.S.** ; **WADSLEY, A.D.** *Acta Crystallogr.*, 1965, vol. 19, 32
- **SAYAGUÉS et al.** *Journal of Solid State Chemistry*, 1998, vol. 143 (1), 33-40
- **TAMURA, S. et al.** *Z. Anorg. Allg. Chem.*, 1974, vol. 410, 313
- **WADSLEY et al.** *Acta. Cryst.*, 1961, vol. 14, 660
- **XIA et al.** *Journal of Power Sources*, 2021, vol. 482, 228898
- **YANG et al.** *CS Nano*, 2017, vol. 11 (4), 4217-4224
- **YU et al.** *Inorganica Chimica Acta*, 2020, vol. 507, 119562
- **ZHOU et al.** *Chemistry Select*, 2020, vol. 5 (3), 1209-1213